(19) Europäisches Patentamt
European Patent Office
Office européen des brevets

(11) **EP 4 637 163 A1**

(12) **EUROPEAN PATENT APPLICATION**
published in accordance with Art. 153(4) EPC

(43) Date of publication:
**22.10.2025 Bulletin 2025/43**

(21) Application number: **23910607.3**

(22) Date of filing: **26.12.2023**

(51) International Patent Classification (IPC):
**H04N 21/44** (2011.01)

(52) Cooperative Patent Classification (CPC):
**H04L 67/10; H04N 19/176; H04N 19/50;**
**H04N 21/234; H04N 21/44; H04N 21/478**

(86) International application number:
**PCT/CN2023/141965**

(87) International publication number:
**WO 2024/140684 (04.07.2024 Gazette 2024/27)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **29.12.2022 CN 202211708155**

(71) Applicant: **Huawei Technologies Co., Ltd.**
**Shenzhen, Guangdong 518129 (CN)**

(72) Inventors:
• **LIN, Zehui**
**Shenzhen, Guangdong 518129 (CN)**

• **CHEN, Huanbang**
**Shenzhen, Guangdong 518129 (CN)**
• **WEI, Rong**
**Shenzhen, Guangdong 518129 (CN)**
• **CAI, Kangying**
**Shenzhen, Guangdong 518129 (CN)**
• **ZHOU, Jiantong**
**Shenzhen, Guangdong 518129 (CN)**
• **LIU, Ligang**
**Shenzhen, Guangdong 518129 (CN)**

(74) Representative: **Eisenführ Speiser**
**Patentanwälte Rechtsanwälte PartGmbB**
**Johannes-Brahms-Platz 1**
**20355 Hamburg (DE)**

(54) **END-CLOUD COLLABORATION SYSTEM, ENCODING METHOD, DECODING METHOD, AND ELECTRONIC DEVICE**

(57) Embodiments of this application provide a device-cloud collaboration system, an encoding and decoding method, and an electronic device. The encoding method includes: performing rendering processing on a three-dimensional scene based on a rendering parameter, to obtain a rendered image; selecting a first intermediate rendering result based on an intermediate rendering result generated in a rendering processing process; encoding the rendered image based on the first intermediate rendering result, to obtain encoded data of a residual block, and encode the encoded data of the residual block into a bitstream. The first intermediate rendering result acts on at least one type of the following processing in an encoding process: partitioning, prediction, or filtering, the bitstream does not include encoded data of the first intermediate rendering result, and a second intermediate rendering result is a part of the first intermediate rendering result. In this way, a server may not send an intermediate rendering result to the terminal device, to reduce an interaction delay while it is ensured that overheads of a data stream transmitted by the server to the terminal device are effectively reduced.

FIG. 2

EP 4 637 163 A1

**Description**

This application claims priority to Chinese Patent Application No. 202211708155.1, filed with the China National Intellectual Property Administration on December 29, 2022 and entitled "DEVICE-CLOUD COLLABORATION SYSTEM, ENCODING AND DECODING METHOD, AND ELECTRONIC DEVICE", which is incorporated herein by reference in its entirety.

**TECHNICAL FIELD**

Embodiments of this application relate to the encoding and decoding field, and in particular, to a device-cloud collaboration system, an encoding and decoding method, and an electronic device.

**BACKGROUND**

In many scenarios (for example, games, virtual reality (Virtual Reality, VR)/augmented reality (Augmented Reality, AR)), rendering needs to be performed to generate an image, so that the obtained image is more realistic and use experience of users is improved. Rendering requires strong computational power. Limited by objective physical conditions such as a device size and power consumption, computational power of a device-side device is usually far weaker than that of a cloud-side server. Therefore, rendering is usually deployed on the cloud-side server. The cloud-side server performs rendering, compresses a rendered image/video, and sends the compressed rendered image/video to the device-side device for displaying by the device-side device.

As people's requirements for rendering quality are continuously improved and definition of display devices is continuously improved, image quality and resolution of the rendered image/video are also continuously improved accordingly. Consequently, bit rate overheads of the compressed rendered image/video are increased, network bandwidth occupation is increased, and an interaction delay is large. In the conventional technology, a cloud-side server usually encodes and transmits a rendered low-resolution image/video, and transmits, to a device-side device, an intermediate rendering result generated in a process of rendering a high-resolution image/video. The device-side device performs, based on the intermediate rendering result delivered by the cloud-side server, upsampling on a rendered low-resolution image/video delivered by a cloud side, to generate a high-resolution to-be-displayed image/video for displaying. In this way, although bit rate overheads can be reduced to some extent, encoding efficiency is still low.

**SUMMARY**

In view of this, this application provides a device-cloud collaboration system, an encoding and decoding method, and an electronic device. The encoding and decoding method is implemented based on the device-cloud collaboration system, and can reduce an interaction delay while ensuring that bit rate overheads of a data stream transmitted by a server to a terminal device are effectively reduced.

According to a first aspect, an embodiment of this application provides a device-cloud collaboration system. The device-cloud collaboration system includes a server and a terminal device, the server includes a first rendering module, an encoder, and a first communication module, and the terminal device includes a second communication module, a second rendering module, and a decoder.

The first rendering module is configured to: perform rendering processing on a three-dimensional scene based on a rendering parameter, to obtain a rendered image, where the rendering parameter includes a first rendering parameter obtained from the terminal device; and select a first intermediate rendering result based on an intermediate rendering result generated in a rendering processing process.

The encoder is configured to encode the rendered image based on the first intermediate rendering result, to obtain encoded data of a residual block, and encode the encoded data of the residual block into a bitstream. The residual block is obtained by performing a residual operation on a to-be-encoded block in the rendered image and a corresponding predicted block, the predicted block is obtained by predicting the to-be-encoded block, the first intermediate rendering result acts on at least one type of the following processing in an encoding process: partitioning, prediction, or filtering, and the bitstream does not include encoded data of the first intermediate rendering result.

The first communication module is configured to send the bitstream.

The second communication module is configured to receive the bitstream.

The decoder is configured to parse the bitstream, to obtain a parsing result. The parsing result includes a residual block corresponding to a current frame.

The second rendering module is configured to: perform rendering processing on the three-dimensional scene based on a rendering parameter corresponding to the current frame, and generate a first intermediate rendering result in a rendering processing process. The rendering parameter corresponding to the current frame includes a first rendering parameter generated by the terminal device.

The decoder is further configured to perform reconstruction based on the first intermediate rendering result generated by the second rendering module and the residual block corresponding to the current frame, to obtain a reconstructed image of the current frame. The first intermediate rendering result generated by the second rendering module acts on at least one type of the following processing in a reconstruction process: prediction or filtering.

In this way, all rendering is performed by the terminal device, and further, the server may not send an intermediate rendering result to the terminal device. Therefore, in this application, an interaction delay can be reduced while it is ensured that bit rate overheads of a data stream transmitted by the server to the terminal device are effectively reduced. In addition, a correlation between an intermediate rendering result and the rendered image is strong. Therefore, in this application, the rendered image is encoded based on the intermediate rendering result, so that image reconstruction quality can be ensured.

In addition, the encoder in this application is an encoder obtained after an existing encoder is modified (or optimized), and can encode the rendered image based on the first intermediate rendering result. In other words, the encoder in this application can encode the rendered image based on the first intermediate rendering result, and includes all or some functions of the existing encoder. The decoder in this application is a decoder obtained after an existing decoder is modified (or optimized), and can perform decoding based on the first intermediate rendering result. In other words, the decoder in this application can perform decoding based on the first intermediate rendering result, and includes all or some functions of the existing decoder. Therefore, an intermediate rendering result can be fully used, and encoding efficiency can be further improved.

For example, the server may be a game server, and the server may be a single server, or may be a server cluster. This is not limited in this application.

For example, the terminal device includes but is not limited to a personal computer, a computer workstation, a smartphone, a tablet computer, a server, a smart camera, an intelligent vehicle, another type of cellular phone, a media consumption device, a wearable device (for example, a VR/AR helmet or VR glasses), a set-top box, a game console, and the like.

For example, the rendering parameter may be all parameters that are input into a graphics rendering engine and that are required for rendering processing by the graphics rendering engine, and may include various parameters used for rendering, position vectors and color vectors of all light sources, a position vector of a player or an observer, information such as a sampling manner of each texture and position coordinates of an object in each scene, a motion track of a moving object, a skeletal animation parameter, and the like. This is not limited in this application.

For example, the intermediate rendering result may be intermediate data that is used to generate a to-be-displayed image/video and that is generated by the graphics rendering engine in a process of generating the to-be-displayed image (namely, the rendered image)/video (namely, a rendered video). For example, the intermediate rendering result may include but is not limited to a computer graphics motion vector (Computer Graphics Motion Vector, CGMV), an intermediate rendered image (the intermediate rendered image is an image generated before a final rendered image (namely, the foregoing rendered image) is generated, calculation complexity of the intermediate rendered image is lower than calculation complexity of the rendered image, and the intermediate rendered image may be, for example, an intermediate rendered image on which indirect illumination rendering is not performed, an intermediate rendered image on which specular reflection processing is not performed, or an intermediate rendered image on which highlight processing is not performed), a position map (position map), a normal map (normal map), an albedo map (albedo map), a specular intensity map (specular intensity map), a mesh identifier (Mesh ID), a material ID (Material ID) (each material map corresponds to one material ID), a render ID (render ID) (each object (or one three-dimensional object model) corresponds to one render ID), depth information, and the like. This is not limited in this application. The first intermediate rendering result is a part of all intermediate rendering results generated in the rendering processing process. It should be noted that a type of an intermediate result included in the first intermediate rendering result generated by the terminal device is the same as a type of an intermediate result included in a first intermediate rendering result generated by the server, and precision of the intermediate result included in the first intermediate rendering result generated by the terminal device is less than or equal to precision of the intermediate result included in the first intermediate rendering result generated by the server.

It should be understood that, when the server performs lossy encoding on the residual block, the residual block obtained by the terminal device through parsing is different from the residual block encoded by the server. When the server performs lossless encoding on the residual block, the residual block obtained by the terminal device through parsing is the same as the residual block encoded by the server.

It should be understood that the server in this application may include more or fewer modules than those described above. This is not limited in this application. The terminal device in this application may include more or fewer modules than those described above. This is not limited in this application.

It should be understood that a video coding standard used by the encoder and the decoder is not limited in this application. For example, the video coding standard may include but is not limited to H.264/AVC (Advanced Video Coding, advanced video coding), H.265/HEVC (High Efficiency Video Coding, high efficiency video coding), H.266/VVC (Versatile Video Coding, versatile video coding), AV1 (AOMedia Video 1, where "AOMedia" is video coding developed by the Alliance for Open Media), and the like, and extended standards of these video coding standards. In addition, the video coding standard may further include a new video coding standard and an extended standard that are generated with development of video coding and decoding technologies.

According to a second aspect, an embodiment of this application provides an encoding method, applied to a server. The method includes: performing rendering processing on a three-dimensional scene based on a rendering parameter, to obtain a rendered image, where the rendering parameter includes a first rendering parameter obtained from a terminal device; selecting a first intermediate rendering result based on an intermediate rendering result generated in a rendering processing process; and encoding the rendered image based on the first intermediate rendering result, to obtain encoded data of a residual block, and encode the encoded data of the residual block into a bitstream. The residual block is obtained by performing a residual operation on a to-be-encoded block in the rendered image and a corresponding predicted block, the predicted block is obtained by predicting the to-be-encoded block, the first intermediate rendering result acts on at least one type of the following processing in an encoding process: partitioning, prediction, or filtering, and the bitstream does not include encoded data of the first intermediate rendering result.

In this way, all rendering is performed by the terminal device, and further, the server may not send an intermediate rendering result to the terminal device. Therefore, in this application, an interaction delay can be reduced while it is ensured that bit rate overheads of a data stream transmitted by the server to the terminal device are effectively reduced. In addition, a correlation between an intermediate rendering result and the rendered image is strong. Therefore, in this application, the rendered image is encoded based on the intermediate rendering result, so that image reconstruction quality can be ensured.

It should be noted that the encoding method in this application may be performed by an encoder in this application. Therefore, an intermediate rendering result can be fully used, and encoding efficiency can be further improved.

For example, the first intermediate rendering result is a part of the intermediate rendering result generated in the rendering processing process. For example, the first intermediate rendering result is a CGMV, depth information, and a render ID.

For example, in a process of encoding the rendered image, the rendered image may be first partitioned, to obtain a plurality of to-be-encoded blocks; for a to-be-encoded block, the to-be-encoded block may be predicted based on a reconstructed block obtained through filtering, to obtain a predicted block; a residual block between the to-be-encoded block and the predicted block is determined; and the residual block may be encoded, and encoded data of the residual block is encoded into the bitstream.

For example, processing such as transform, quantization, and entropy encoding may be performed on the residual block, to obtain the encoded data of the residual block.

It should be understood that the first intermediate rendering result may further act on another item of processing, for example, entropy encoding in the encoding process. This is not limited in this application.

According to the second aspect, the bitstream further includes a first indication identifier and/or a second indication identifier. The first indication identifier indicates whether the bitstream includes the encoded data of the first intermediate rendering result, and the second indication identifier indicates a type of the first intermediate rendering result. In this way, the terminal device learns of whether the bitstream includes the first intermediate rendering result, and learns of the specific type of the to-be-generated first intermediate rendering result.

For example, the first intermediate rendering result may be classified into a plurality of types, for example, a motion vector type, a first image type, and a second image type. When the first intermediate rendering result is a CGMV, the corresponding type may be the motion vector type. When the first intermediate rendering result is depth information, the corresponding type may be the first image type. When the first intermediate rendering result is a render ID, the corresponding type may be the second image type. It should be understood that the first intermediate rendering result may further include another type. This is not limited in this application.

According to any one of the second aspect or the implementations of the second aspect, the rendering parameter further includes a second rendering parameter generated by the server. The method further includes: encoding a third rendering parameter into the bitstream. The third rendering parameter includes all or a part of parameters in the second rendering parameter.

Because a rendering parameter generated by the server is more accurate than a rendering parameter generated by the terminal device, the server may send a part or all of the second rendering parameter to the terminal device. In this way, a first intermediate rendering result generated by the terminal device can be more accurate, thereby improving image quality of an image obtained through decoding based on the first intermediate rendering result.

In addition, a data amount of the second rendering parameter is small (several/dozens of KB), and is far less than that of the intermediate rendering result. Therefore, even if the rendering parameter is sent to the terminal device in this application, bit rate overheads of a data stream sent by the server to the terminal device in this application are less than bit rate overheads of a data stream sent by the server to the terminal device in the conventional technology. In addition, computational power of the terminal device can be further saved.

It should be noted that the first rendering parameter and the second rendering parameter may form a rendering parameter (namely, all parameters that are input into a graphics rendering engine and that are required for rendering processing by the graphics rendering engine).

For example, the third rendering parameter may be encoded, and encoded data of the third rendering parameter is encoded into the bitstream; or the third rendering parameter may be directly added to the bitstream without being encoded. This is not limited in this application.

According to any one of the second aspect or the implementations of the second aspect, the rendering parameter further includes the second rendering parameter generated by the server. The bitstream further includes a third indication identifier and/or a fourth indication identifier. The third indication identifier indicates whether the bitstream includes the third rendering parameter. The third rendering parameter includes all or a part of parameters in the second rendering parameter. The fourth indication identifier indicates a type of the third rendering parameter. In this way, the terminal device learns of whether the bitstream includes the third rendering parameter. When the third rendering parameter is a part of the second rendering parameter, the terminal device may generate a fourth rendering parameter based on the type of the third rendering parameter. The fourth rendering parameter is a part of the second rendering parameter other than the third rendering parameter.

For example, the second rendering parameter may be classified into a plurality of types, for example, a type C1 and a type C2. For example, the second rendering parameter may include motion information of a rigid motion object and motion information of a non-rigid dynamic object. A type corresponding to the motion information of the rigid motion object is the type C1, and a type corresponding to the motion information of the non-rigid dynamic object is the type C2.

In a possible manner, the third rendering parameter may include motion information of a rigid motion object and motion information of a non-rigid dynamic object.

In a possible manner, the third rendering parameter may include motion information of a rigid motion object. In this way, compared with the third rendering parameter including the motion information of the rigid motion object and the motion information of the non-rigid dynamic object, the third rendering parameter including the motion information of the rigid motion object can further reduce the bit rate overheads of the data stream transmitted by the server to the terminal device.

In a possible manner, the third rendering parameter may include motion information of a non-rigid dynamic object. In this way, compared with the third rendering parameter including the motion information of the rigid motion object and the motion information of the non-rigid dynamic object, the third rendering parameter including the motion information of the non-rigid dynamic object can further reduce the bit rate overheads of the data stream transmitted by the server to the terminal device.

According to any one of the second aspect or the implementations of the second aspect, the first intermediate rendering result acts on partitioning in the encoding process, the to-be-encoded block is a prediction unit, and encoding the rendered image based on the first intermediate rendering result, to obtain the encoded data of the residual block includes: partitioning the rendered image based on the first intermediate rendering result, to obtain a plurality of prediction units; predicting the plurality of prediction units based on a reconstructed block, to obtain a plurality of predicted blocks, where the plurality of predicted blocks are in a one-to-one correspondence with the plurality of prediction units; and encoding a plurality of residual blocks between the plurality of predicted blocks and the plurality of prediction units, to obtain encoded data of the plurality of residual blocks, where the plurality of residual blocks are in a one-to-one correspondence with the plurality of prediction units.

Because the first intermediate rendering result has a strong correlation with the rendered image, the rendered image can be partitioned properly based on the first intermediate rendering result, to obtain better prediction effect. When the prediction effect is better, a determined residual block is smaller, and a bit rate can be reduced. In addition, image reconstruction quality can be further improved.

According to any one of the second aspect or the implementations of the second aspect, the first intermediate rendering result acts on prediction in the encoding process, and encoding the rendered image based on the first intermediate rendering result, to obtain the encoded data of the residual block includes: predicting the to-be-encoded block in the rendered image based on a reconstructed block and the first intermediate rendering result, to obtain the predicted block corresponding to the to-be-encoded block; and encoding the residual block between the to-be-encoded block and the predicted block corresponding to the to-be-encoded block, to obtain the encoded data of the residual block.

Because the first intermediate rendering result has a strong correlation with the rendered image, the residual block between the predicted block obtained through prediction based on the first intermediate rendering result and the to-be-encoded block is small, and a bit rate can be reduced.

According to any one of the second aspect or the implementations of the second aspect, the first intermediate rendering result acts on filtering in the encoding process, and encoding the rendered image based on the first intermediate rendering result, to obtain the encoded data of the residual block includes: predicting the to-be-encoded block in the rendered image based on a reconstructed block, to obtain the predicted block corresponding to the to-be-encoded block, where the reconstructed block is a reconstructed block obtained through filtering based on the first intermediate rendering result; and encoding the residual block between the to-be-encoded block and the predicted block corresponding to the to-be-encoded block, to obtain the encoded data of the residual block.

Because the first intermediate rendering result has a strong correlation with the rendered image, quality of the reconstructed block obtained through filtering based on the first intermediate rendering result is better. Therefore, a bit rate can be reduced by encoding the to-be-encoded block in the rendered image by using the reconstructed block obtained through filtering as a reference.

According to any one of the second aspect or the implementations of the second aspect, the first intermediate rendering result further acts on prediction in the encoding process, and predicting the plurality of prediction units based on the reconstructed block, to obtain the plurality of predicted blocks includes: predicting the plurality of prediction units based on the reconstructed block and the first intermediate rendering result, to obtain the plurality of predicted blocks. In this way, the first intermediate rendering result acts on partitioning and prediction in the encoding process, so that prediction effect can be further improved, a bit rate can be further reduced, and image reconstruction quality can be further improved.

According to any one of the second aspect or the implementations of the second aspect, the first intermediate rendering result further acts on filtering in the encoding process, and the reconstructed block is a reconstructed block obtained through filtering based on the first intermediate rendering result. In this way, the first intermediate rendering result may act on partitioning, prediction, and filtering in the encoding process, or act on partitioning and filtering, or act on prediction and filtering, so that a bit rate can be further reduced, and image reconstruction quality can be further improved.

According to any one of the second aspect or the implementations of the second aspect, the first intermediate rendering result is depth information, and partitioning the rendered image based on the first intermediate rendering result, to obtain the plurality of prediction units includes: partitioning the rendered image into a plurality of coding units; generating computer graphics edge CGE information based on the depth information, where the CGE information includes object edge information of an object in the rendered image; and partitioning each of the plurality of coding units based on the CGE information, to obtain the plurality of prediction units.

The CGE information includes object edge information of an object in the rendered image. Partitioning into PUs is performed based on the CGE information, so that the coding unit can be properly partitioned into the plurality of PUs, and better prediction effect is obtained subsequently (for example, a predicted block obtained through subsequent prediction is more accurate). When the prediction effect is better, a determined residual block is smaller, a bit rate can be reduced, and image reconstruction quality can be further improved. In addition, a calculation amount of obtaining a PU through partitioning based on the CGE information is less than that in a manner of obtaining a PU through partitioning in the conventional technology.

According to any one of the second aspect or the implementations of the second aspect, the first intermediate rendering result is a computer graphics motion vector CGMV, and the CGMV is used to describe a displacement relationship between a sample in the rendered image and a sample in a reference frame of the rendered image; and predicting the to-be-encoded block in the rendered image based on the reconstructed block and the first intermediate rendering result, to obtain the predicted block corresponding to the to-be-encoded block includes: determining, from the reference frame of the rendered image, a reconstructed block matching the to-be-encoded block; and generating the predicted block based on the CGMV and the reconstructed block matching the to-be-encoded block.

The CGMV is generated through a graphic means, to avoid inaccurate motion estimation of an existing encoder. In addition, the CGMV is a pixel-level MV, and an MV generated by the existing encoder is an image block-level MV. The pixel-level MV can more accurately describe an edge of an object, to reduce a prediction error. Therefore, determining the predicted block based on the CGMV can reduce an error of the predicted block to some extent, improve accuracy of the predicted block, and further improve inter encoding and compression efficiency.

According to any one of the second aspect or the implementations of the second aspect, the first intermediate rendering result is a render identifier render ID, and the render ID is used to describe an object to which a sample in the reconstructed block belongs. The method further includes: determining a filtering parameter based on the render ID; and filtering the reconstructed block based on the filtering parameter. Compared with the conventional technology, whether pixels on two sides of a boundary line of the reconstructed block belong to a same object is determined based on the render ID, to determine the filtering parameter and perform filtering based on the filtering parameter, so that a blocking effect between reconstructed blocks can be better reduced, and quality of the reconstructed block can be improved. Therefore, a bit rate can be reduced by encoding the to-be-encoded block in the rendered image by using the reconstructed block obtained through filtering as a reference.

According to any one of the second aspect or the implementations of the second aspect, the CGE information is encoded, and encoded data of the CGE information is encoded into the bitstream. In this way, the terminal device may directly determine partitioning information based on the CGE information without a need to generate the CGE information, so that computational power of the terminal device can be saved.

According to a third aspect, an embodiment of this application provides a decoding method. The decoding method includes: receiving a bitstream; parsing the bitstream, to obtain a parsing result, where the parsing result includes a residual block corresponding to a current frame; performing rendering processing on a three-dimensional scene based on a rendering parameter corresponding to the current frame, and generating a first intermediate rendering result in a rendering processing process, where the rendering parameter includes a first rendering parameter generated by a terminal device; and performing reconstruction based on the first intermediate rendering result and the residual block, to obtain a reconstructed image of the current frame, where the first intermediate rendering result acts on at least one type of the following processing in a reconstruction process: prediction or filtering.

It should be noted that the decoding method in this application may be performed by an encoder in this application.

According to the third aspect, the parsing result further includes a first indication identifier and a second indication identifier, the first indication identifier indicates whether the bitstream includes encoded data of a first intermediate rendering result generated by a server, and the second indication identifier indicates a type of the first intermediate rendering result generated by the server; and generating the first intermediate rendering result in the rendering processing process includes: generating the first intermediate rendering result in the rendering processing process based on the second indication identifier when it is determined, based on the first indication identifier, that the bitstream does not include the encoded data of the first intermediate rendering result generated by the server.

According to any one of the third aspect or the implementations of the third aspect, the parsing result further includes a third indication identifier and a fourth indication identifier, the third indication identifier indicates whether the bitstream includes a third rendering parameter, and the fourth indication identifier indicates a type of the third rendering parameter. The method further includes: determining the type of the third rendering parameter based on the fourth indication identifier when it is determined, based on the third indication identifier, that the bitstream includes the third rendering parameter; and generating a fourth rendering parameter of another type based on the type of the third rendering parameter. The another type is a type other than the type of the third rendering parameter in a plurality of types corresponding to a second rendering parameter generated by the server. The rendering parameter further includes the third rendering parameter and the fourth rendering parameter.

In this way, when the third rendering parameter sent by the server to the terminal device is a part of the second rendering parameter, the terminal device may generate a rendering parameter other than the third rendering parameter in the second rendering parameter based on the fourth indication identifier in the bitstream, to obtain all rendering parameters required for rendering processing by a graphics rendering engine.

For example, the rendering parameter further includes the third rendering parameter when it is determined, based on the fourth indication identifier, that the third rendering parameter is all of the second rendering parameter.

It should be understood that, when the server performs lossy encoding on the third rendering parameter, a third rendering parameter obtained by the terminal device through parsing is different from a third rendering parameter encoded by the server. When the server performs lossless encoding on the third rendering parameter, a third rendering parameter obtained by the terminal device through parsing is the same as a third rendering parameter encoded by the server.

According to any one of the third aspect or the implementations of the third aspect, the method further includes: When it is determined, based on the third indication identifier, that the bitstream does not include the third rendering parameter, the terminal device generates a second rendering parameter corresponding to the current frame. The rendering parameter further includes a second rendering parameter generated by the terminal device.

In this way, when the server does not send a second rendering parameter to the terminal device, the terminal device may further generate the second rendering parameter, to obtain all rendering parameters required for rendering processing by the graphics rendering engine.

It should be understood that a parameter type included in the second rendering parameter generated by the terminal device is the same as a parameter type included in the second rendering parameter generated by the server, and precision of a parameter included in the second rendering parameter generated by the terminal device is less than or equal to precision of a parameter included in the second rendering parameter generated by the server.

According to any one of the third aspect or the implementations of the third aspect, there are a plurality of residual blocks, the first intermediate rendering result acts on prediction in the reconstruction process, and performing reconstruction based on the first intermediate rendering result and the residual block, to obtain the reconstructed image of the current frame includes: determining partitioning information of the current frame based on the first intermediate rendering result; predicting, based on the partitioning information and a reconstructed block, a plurality of prediction units included in the current frame, to obtain a plurality of predicted blocks, where the plurality of predicted blocks are in a one-to-one correspondence with the plurality of prediction units, and the plurality of residual blocks are in a one-to-one correspondence with the plurality of prediction units; and determining the reconstructed image of the current frame based on the plurality of residual blocks and the plurality of predicted blocks.

According to any one of the third aspect or the implementations of the third aspect, the first intermediate rendering result acts on prediction in the reconstruction process, and performing reconstruction based on the first intermediate rendering result and the residual block, to obtain the reconstructed image of the current frame includes: predicting a to-be-decoded block in the current frame based on the first intermediate rendering result and a reconstructed block, to obtain a predicted block corresponding to the to-be-decoded block; and determining the reconstructed image of the current frame based on a residual block corresponding to the to-be-decoded block in the residual block corresponding to the current frame and the predicted block corresponding to the to-be-decoded block.

According to any one of the third aspect or the implementations of the third aspect, the first intermediate rendering result acts on filtering in the reconstruction process, and performing reconstruction based on the first intermediate rendering result and the residual block, to obtain the reconstructed image of the current frame includes: predicting a to-be-decoded block in the current frame based on a reconstructed block, to obtain a predicted block corresponding to the to-be-decoded block, where the reconstructed block is a reconstructed block obtained through filtering based on the first intermediate rendering result; and determining the reconstructed image of the current frame based on a residual block corresponding to the to-be-decoded block in the residual block corresponding to the current frame and the predicted block corresponding to the to-be-decoded block.

According to any one of the third aspect or the implementations of the third aspect, predicting, based on the partitioning information and a reconstructed block, a plurality of prediction units included in the current frame, to obtain a plurality of predicted blocks includes: predicting, based on the partitioning information, the first intermediate rendering result, and the reconstructed block, the plurality of prediction units included in the current frame, to obtain the plurality of predicted blocks.

According to any one of the third aspect or the implementations of the third aspect, the first intermediate rendering result further acts on filtering in the reconstruction process, and the reconstructed block is a reconstructed block obtained through filtering based on the first intermediate rendering result.

According to any one of the third aspect or the implementations of the third aspect, the first intermediate rendering result is depth information, and determining the partitioning information of the current frame based on the first intermediate rendering result includes: generating computer graphics edge CGE information based on the depth information, where the CGE information includes object edge information of an object in the current frame; and determining the partitioning information of the current frame based on the CGE information.

According to any one of the third aspect or the implementations of the third aspect, the first intermediate rendering result is a computer graphics motion vector CGMV, and the CGMV is used to describe a displacement relationship between a sample of the current frame and a sample of a reference frame of the current frame; and predicting the to-be-decoded block in the current frame based on the first intermediate rendering result and the reconstructed block, to obtain the predicted block corresponding to the to-be-decoded block includes: determining, from the reference frame of the current frame, a reconstructed block matching the to-be-decoded block; and generating the predicted block corresponding to the to-be-decoded block based on the CGMV and the reconstructed block matching the to-be-decoded block.

According to any one of the third aspect or the implementations of the third aspect, the first intermediate rendering result is a render identifier render ID, and the render ID is used to describe an object to which a sample in the reconstructed block belongs. The method further includes: determining a filtering parameter based on the render ID; and filtering the reconstructed block based on the filtering parameter.

According to any one of the third aspect or the implementations of the third aspect, there are a plurality of residual blocks, the first intermediate rendering result acts on prediction in the reconstruction process, the decoding result further includes CGE information, and the CGE information includes object edge information of an object in the current frame; and performing reconstruction based on the first intermediate rendering result and the residual block, to obtain the reconstructed image of the current frame includes: determining partitioning information of the current frame based on the CGE information; predicting, based on the partitioning information and a reconstructed block, a plurality of prediction units included in the current frame, to obtain a plurality of predicted blocks, where the plurality of predicted blocks are in a one-to-one correspondence with the plurality of prediction units, and the plurality of residual blocks are in a one-to-one correspondence with the plurality of prediction units; and determining the reconstructed image of the current frame based on the plurality of residual blocks and the plurality of predicted blocks.

Any one of the third aspect and the implementations of the third aspect corresponds to any one of the second aspect and the implementations of the second aspect. For technical effects corresponding to any one of the third aspect and the implementations of the third aspect, refer to the technical effects corresponding to any one of the second aspect and the implementations of the second aspect. Details are not described herein again.

According to a fourth aspect, this application further provides a device-cloud collaboration system. The device-cloud collaboration system includes a server and a terminal device, the server includes a first rendering module, an encoder, and a first communication module, and the terminal device includes a second communication module, a second rendering module, and a decoder.

The first rendering module is configured to: perform rendering processing on a three-dimensional scene based on a rendering parameter, to obtain a rendered image, where the rendering parameter includes a first rendering parameter obtained from the terminal device; and select a first intermediate rendering result based on an intermediate rendering result generated in a rendering processing process.

The encoder is configured to: encode the rendered image based on the first intermediate rendering result, to obtain encoded data of a residual block, and encode the encoded data of the residual block into a bitstream; and encode a second intermediate rendering result, and encode encoded data of the second intermediate rendering result into the bitstream, where the residual block is obtained by performing a residual operation on a to-be-encoded block in the rendered image and a corresponding predicted block, the predicted block is obtained by predicting the to-be-encoded block, the first intermediate rendering result acts on at least one type of the following processing in an encoding process: partitioning, prediction, or filtering, and the second intermediate rendering result is a part of the first intermediate rendering result.

The first communication module is configured to send the bitstream.

The second communication module is configured to receive the bitstream.

The decoder is configured to parse the bitstream, to obtain a parsing result. The parsing result includes a residual block corresponding to a current frame and a second intermediate rendering result corresponding to the current frame.

The second rendering module is configured to: perform rendering processing on the three-dimensional scene based on a rendering parameter corresponding to the current frame, and generate a third intermediate rendering result in a rendering processing process based on the second intermediate rendering result corresponding to the current frame. The rendering parameter corresponding to the current frame includes a first rendering parameter generated by the terminal device.

The decoder is further configured to perform reconstruction based on the first intermediate rendering result and the residual block corresponding to the current frame, to obtain a reconstructed image of the current frame. The first intermediate rendering result used to determine the reconstructed image of the current frame includes the second intermediate rendering result and the third intermediate rendering result, and the first intermediate rendering result used to determine the reconstructed image of the current frame acts on at least one type of the following processing in a reconstruction process: prediction or filtering.

In this way, partial rendering is performed by the terminal device, and further, the server may send only some intermediate rendering results to the terminal device. Therefore, in this application, an interaction delay can be reduced while it is ensured that bit rate overheads of a data stream transmitted by the server to the terminal device are effectively reduced. In addition, a correlation between an intermediate rendering result and the rendered image is strong. Therefore, in this application, the rendered image is encoded based on the intermediate rendering result, so that image reconstruction quality can be ensured.

In addition, the encoder in this application is an encoder obtained after an existing encoder is modified (or optimized), and can encode the rendered image based on the first intermediate rendering result. In other words, the encoder in this application can encode the rendered image based on the first intermediate rendering result, and includes all or some functions of the existing encoder. The decoder in this application is a decoder obtained after an existing decoder is modified (or optimized), and can perform decoding based on the first intermediate rendering result. In other words, the decoder in this application can perform decoding based on the first intermediate rendering result, and includes all or some functions of the existing decoder. Therefore, an intermediate rendering result can be fully used, and encoding efficiency can be further improved.

For example, it is assumed that the first intermediate rendering result is a CGMV, and the CGMV may include a CGMV of a static object, a CGMV of a rigid dynamic object, and a CGMV of a non-rigid dynamic object; and the second intermediate rendering result may include any one or two of the CGMV of the static object, the CGMV of the rigid dynamic object, and the CGMV of the non-rigid dynamic object.

In a possible manner, the server may encode the CGMV of the static object. In this way, the terminal device does not need to calculate the CGMV of the static object, thereby saving computational power of the terminal device.

In a possible manner, the server may encode a CGMV of a dynamic object. In this way, the terminal device does not need to calculate the CGMV of the dynamic object, thereby saving computational power of the terminal device. In addition, a calculation amount of calculating the CGMV of the dynamic object is greater than a calculation amount of calculating the CGMV of the static object. Therefore, the CGMV of the dynamic object is encoded into the second bitstream and sent to the terminal device, to save more computational power of the terminal device.

For example, the CGMV of the dynamic object may include the CGMV of the rigid dynamic object and/or the CGMV of the non-rigid dynamic object.

In a possible manner, both the CGMV of the rigid dynamic object and the CGMV of the non-rigid dynamic object may be encoded.

In a possible manner, the CGMV of the rigid dynamic object may be encoded. In this way, a bit rate can be reduced in comparison with encoding of the CGMV of the rigid dynamic object and the CGMV of the non-rigid dynamic object.

In a possible manner, the CGMV of the non-rigid dynamic object may be encoded. In this way, a bit rate can be reduced in comparison with encoding of the CGMV of the rigid dynamic object and the CGMV of the non-rigid dynamic object. In addition, because a quantity of triangle meshes of the non-rigid dynamic object is large, a calculation amount of the CGMV of the non-rigid dynamic object is large. Therefore, compared with encoding of the CGMV of the rigid dynamic object, encoding of the CGMV of the non-rigid dynamic object can save more computational power of the terminal device.

For example, it is assumed that the first intermediate rendering result is depth information (namely, a depth map), and the server may use an image of a part of areas in the depth map as the second intermediate rendering result.

For example, it is assumed that the first intermediate rendering result is a render ID (namely, a render ID map), and the server may use an image of a part of areas in the render ID map as the second intermediate rendering result.

According to a fifth aspect, an embodiment of this application further provides an encoding method. The encoding method includes: performing rendering processing on a three-dimensional scene based on a rendering parameter, to obtain a rendered image, where the rendering parameter includes a first rendering parameter obtained from a terminal device; selecting a first intermediate rendering result based on an intermediate rendering result generated in a rendering processing process; encoding the rendered image based on the first intermediate rendering result, to obtain encoded data of a residual block, and encode the encoded data of the residual block into a bitstream; and encode a second intermediate rendering result, and encode encoded data of the second intermediate rendering result into the bitstream. The residual block is obtained by performing a residual operation on a to-be-encoded block in the rendered image and a corresponding predicted block, the predicted block is obtained by predicting the to-be-encoded block, the first intermediate rendering result acts on at least one type of the following processing in an encoding process: partitioning, prediction, or filtering, and the second intermediate rendering result is a part of the first intermediate rendering result.

In this way, partial rendering is performed by the terminal device, and further, a server may send only some intermediate rendering results to the terminal device. Therefore, in this application, an interaction delay can be reduced while it is ensured that bit rate overheads of a data stream transmitted by the server to the terminal device are effectively reduced. In addition, a correlation between an intermediate rendering result and the rendered image is strong. Therefore, in this application, the rendered image is encoded based on the intermediate rendering result, so that image reconstruction quality can be ensured.

It should be noted that the encoding method in this application may be performed by an encoder in this application. Therefore, an intermediate rendering result can be fully used, and encoding efficiency can be further improved.

According to the fifth aspect, the bitstream further includes a first indication identifier and/or a second indication identifier. The first indication identifier indicates whether the bitstream includes the encoded data of the second intermediate rendering result, and the second indication identifier indicates a type and a subtype of the second intermediate rendering result. In this way, the terminal device learns of a specific type and a specific subtype of a to-be-generated third intermediate rendering result. The third intermediate rendering result is a part of the first intermediate rendering result other than the second intermediate rendering result.

For example, the second intermediate rendering result may also include a plurality of types, for example, a motion vector type, a first image type, and a second image type. When the second intermediate rendering result is a CGMV, the corresponding type may be the motion vector type. When the second intermediate rendering result is depth information, the corresponding type may be the first image type. When the second intermediate rendering result is the render ID, the corresponding type may be the second image type.

For example, each type of the second intermediate rendering result may include a plurality of subtypes.

For example, the motion vector type may include a subtype A1, a subtype A2, and a subtype A3. A subtype corresponding to a CGMV of a static object is the subtype A1, a subtype corresponding to a CGMV of a rigid dynamic object is the subtype A2, and a subtype corresponding to a CGMV of a non-rigid dynamic object is the subtype A3.

For example, the first image type may include a subtype B1 and a subtype B2. A subtype corresponding to areas corresponding to four corners in a depth map is the subtype B1, and a subtype corresponding to an area in the depth map other than the areas corresponding to the four corners is the subtype B2.

For example, the second image type may include a subtype B3 and a subtype B4. A subtype corresponding to areas corresponding to four corners in a render ID map is the subtype B3, and a subtype corresponding to an area other than the areas corresponding to the four corners in the render ID map is the subtype B4.

According to any one of the fifth aspect or the implementations of the fifth aspect, the rendering parameter further includes a second rendering parameter generated by the server. The method further includes: encoding a third rendering parameter into the bitstream. The third rendering parameter includes all or a part of parameters in the second rendering parameter.

According to any one of the fifth aspect or the implementations of the fifth aspect, the rendering parameter further includes the second rendering parameter generated by the server. The bitstream further includes a third indication identifier and/or a fourth indication identifier. The third indication identifier indicates whether the bitstream includes the third rendering parameter. The third rendering parameter includes all or a part of parameters in the second rendering parameter. The fourth indication identifier indicates a type of the third rendering parameter. In this way, the terminal device learns of whether the bitstream includes the third rendering parameter. When the third rendering parameter is a part of the second rendering parameter, the terminal device may generate a fourth rendering parameter based on the type of the third rendering parameter. The fourth rendering parameter is a part of the second rendering parameter other than the third rendering parameter.

According to any one of the fifth aspect or the implementations of the fifth aspect, the first intermediate rendering result acts on partitioning in the encoding process, the to-be-encoded block is a prediction unit, and encoding the rendered image based on the first intermediate rendering result, to obtain the encoded data of the residual block includes: partitioning the rendered image based on the first intermediate rendering result, to obtain a plurality of prediction units; predicting the plurality of prediction units based on a reconstructed block, to obtain a plurality of predicted blocks, where the plurality of predicted blocks are in a one-to-one correspondence with the plurality of prediction units; and encoding a plurality of residual blocks between the plurality of predicted blocks and the plurality of prediction units, to obtain encoded data of the plurality of residual blocks, where the plurality of residual blocks are in a one-to-one correspondence with the plurality of prediction units.

According to any one of the fifth aspect or the implementations of the fifth aspect, the first intermediate rendering result acts on prediction in the encoding process, and encoding the rendered image based on the first intermediate rendering result, to obtain the encoded data of the residual block includes: predicting the to-be-encoded block in the rendered image based on a reconstructed block and the first intermediate rendering result, to obtain the predicted block corresponding to the to-be-encoded block; and encoding the residual block between the to-be-encoded block and the predicted block corresponding to the to-be-encoded block, to obtain the encoded data of the residual block.

According to any one of the fifth aspect or the implementations of the fifth aspect, the first intermediate rendering result acts on filtering in the encoding process, and encoding the rendered image based on the first intermediate rendering result, to obtain the encoded data of the residual block includes: predicting the to-be-encoded block in the rendered image based on a reconstructed block, to obtain the predicted block corresponding to the to-be-encoded block, where the reconstructed block is a reconstructed block obtained through filtering based on the first intermediate rendering result; and encoding the residual block between the to-be-encoded block and the predicted block corresponding to the to-be-encoded block, to obtain the encoded data of the residual block.

According to any one of the fifth aspect or the implementations of the fifth aspect, the first intermediate rendering result further acts on prediction in the encoding process, and predicting the plurality of prediction units based on the reconstructed block, to obtain the plurality of predicted blocks includes: predicting the plurality of prediction units based on the reconstructed block and the first intermediate rendering result, to obtain the plurality of predicted blocks.

According to any one of the fifth aspect or the implementations of the fifth aspect, the first intermediate rendering result further acts on filtering in the encoding process, and the reconstructed block is a reconstructed block obtained through filtering based on the first intermediate rendering result.

According to any one of the fifth aspect or the implementations of the fifth aspect, the first intermediate rendering result is depth information, and partitioning the rendered image based on the first intermediate rendering result, to obtain the plurality of prediction units includes: partitioning the rendered image into a plurality of coding units; generating computer graphics edge CGE information based on the depth information, where the CGE information includes object edge information of an object in the rendered image; and partitioning each of the plurality of coding units based on the CGE information, to obtain the plurality of prediction units.

According to any one of the fifth aspect or the implementations of the fifth aspect, the first intermediate rendering result is a computer graphics motion vector CGMV, and the CGMV is used to describe a displacement relationship between a sample in the rendered image and a sample in a reference frame of the rendered image; and predicting the to-be-encoded block in the rendered image based on the reconstructed block and the first intermediate rendering result, to obtain the predicted block corresponding to the to-be-encoded block includes: determining, from the reference frame of the rendered image, a reconstructed block matching the to-be-encoded block; and generating the predicted block based on the CGMV and the reconstructed block matching the to-be-encoded block.

According to any one of the fifth aspect or the implementations of the fifth aspect, the first intermediate rendering result is a render identifier render ID, and the render ID is used to describe an object to which a sample in the reconstructed block belongs. The method further includes: determining a filtering parameter based on the render ID; and filtering the reconstructed block based on the filtering parameter.

According to any one of the fifth aspect or the implementations of the fifth aspect, the CGE information is encoded, and encoded data of the CGE information is encoded into the bitstream.

Any one of the fifth aspect and the implementations of the fifth aspect corresponds to any one of the second aspect and the implementations of the second aspect. For technical effects corresponding to any one of the fifth aspect and the implementations of the fifth aspect, refer to technical effects corresponding to any one of the second aspect and the implementations of the second aspect. Details are not described herein again.

According to a sixth aspect, this application further provides a decoding method, applied to a terminal device. The decoding method includes: receiving a bitstream; parsing the bitstream, to obtain a parsing result, where the parsing result includes a residual block corresponding to a current frame and a second intermediate rendering result corresponding to the current frame; performing rendering processing on a three-dimensional scene based on a rendering parameter corresponding to the current frame, and generating a third intermediate rendering result based on the second intermediate rendering result in a rendering processing process, where the rendering parameter includes a first rendering parameter generated by the terminal device; and performing reconstruction based on a first intermediate rendering result and the residual block, to obtain a reconstructed image of the current frame. The first intermediate rendering result includes the second intermediate rendering result and the third intermediate rendering result, and the first intermediate rendering result acts on at least one type of the following processing in a reconstruction process: prediction or filtering.

In this way, a first intermediate rendering result obtained by the terminal device includes the third intermediate rendering result generated by the terminal device and a second intermediate rendering result generated by a server. Because the second intermediate rendering result generated by the server is more accurate than a second intermediate rendering result generated by the terminal device, an obtained first intermediate rendering result is more accurate, thereby improving image quality of the reconstructed image. In addition, the terminal device needs to generate only a part of the first intermediate rendering result, so that computational power of the terminal device can be saved, and decoding efficiency can be improved.

It should be understood that, when the server performs lossy encoding on the second intermediate result, a second intermediate result obtained by the terminal device through parsing is different from the second intermediate result encoded by the server. When the server performs lossless encoding on the second intermediate result, a second intermediate result obtained by the terminal device through parsing is the same as the second intermediate result encoded by the server.

It should be understood that, because the third intermediate rendering result is generated by the terminal device, a type of an intermediate result included in the first intermediate rendering result obtained by the terminal device through combination is the same as a type of an intermediate result included in a first intermediate rendering result generated by the server. Precision of the intermediate result included in the first intermediate rendering result obtained by the terminal device through combination is less than or equal to precision of the intermediate result included in the first intermediate rendering result generated by the server.

It should be noted that the decoding method in this application may be performed by an encoder in this application.

According to the sixth aspect, the decoding result further includes a second indication identifier, and the second indication identifier indicates a type and a subtype of the second intermediate rendering result; and generating the third intermediate rendering result based on the second intermediate rendering result in the rendering processing process includes: determining the type and the subtype corresponding to the second intermediate rendering result based on the second indication identifier; and generating a third intermediate rendering result of another subtype based on the type and the subtype corresponding to the second intermediate rendering result in the rendering processing process. The another subtype is a subtype in subtypes included in the type of the second intermediate rendering result other than the subtype corresponding to the second intermediate rendering result.

According to any one of the sixth aspect or the implementations of the sixth aspect, the parsing result further includes a third indication identifier and a fourth indication identifier, the third indication identifier indicates whether the bitstream includes a third rendering parameter, and the fourth indication identifier indicates a type of the third rendering parameter. The method further includes: determining the type of the third rendering parameter based on the fourth indication identifier when it is determined, based on the third indication identifier, that the bitstream includes the third rendering parameter; and generating a fourth rendering parameter of another type based on the type of the third rendering parameter. The another type is a type other than the type of the third rendering parameter in a plurality of types corresponding to a second rendering parameter generated by the server. The rendering parameter further includes the third rendering parameter and the fourth rendering parameter.

According to any one of the sixth aspect or the implementations of the sixth aspect, the method further includes: When it is determined, based on the third indication identifier, that the bitstream does not include the third rendering parameter, the terminal device generates a second rendering parameter corresponding to the current frame. The rendering parameter further includes a second rendering parameter generated by the terminal device.

According to any one of the sixth aspect or the implementations of the sixth aspect, there are a plurality of residual blocks, the first intermediate rendering result acts on prediction in the reconstruction process, and performing reconstruction based on the first intermediate rendering result and the residual block, to obtain the reconstructed image of the current frame includes: determining partitioning information of the current frame based on the first intermediate rendering result; predicting, based on the partitioning information and a reconstructed block, a plurality of prediction units included in the current frame, to obtain a plurality of predicted blocks, where the plurality of predicted blocks are in a one-to-one correspondence with the plurality of prediction units, and the plurality of residual blocks are in a one-to-one correspondence with the plurality of prediction units; and determining the reconstructed image of the current frame based on the plurality of residual blocks and the plurality of predicted blocks.

According to any one of the sixth aspect or the implementations of the sixth aspect, the first intermediate rendering result acts on prediction in the reconstruction process, and performing reconstruction based on the first intermediate rendering result and the residual block, to obtain the reconstructed image of the current frame includes:

predicting a to-be-decoded block in the current frame based on the first intermediate rendering result and a reconstructed block, to obtain a predicted block corresponding to the to-be-decoded block; and determining the reconstructed image of the current frame based on a residual block corresponding to the to-be-decoded block in the residual block corresponding to the current frame and the predicted block corresponding to the to-be-decoded block.

According to any one of the sixth aspect or the implementations of the sixth aspect, the first intermediate rendering result acts on filtering in the reconstruction process, and performing reconstruction based on the first intermediate rendering result and the residual block, to obtain the reconstructed image of the current frame includes: predicting a to-be-decoded block in the current frame based on a reconstructed block, to obtain a predicted block corresponding to the to-be-decoded block, where the reconstructed block is a reconstructed block obtained through filtering based on the first intermediate rendering result; and determining the reconstructed image of the current frame based on a residual block corresponding to the to-be-decoded block in the residual block corresponding to the current frame and the predicted block corresponding to the to-be-decoded block.

According to any one of the sixth aspect or the implementations of the sixth aspect, predicting, based on the partitioning information and a reconstructed block, a plurality of prediction units included in the current frame, to obtain a plurality of predicted blocks includes: predicting, based on the partitioning information, the first intermediate rendering result, and the reconstructed block, the plurality of prediction units included in the current frame, to obtain the plurality of predicted blocks.

According to any one of the sixth aspect or the implementations of the sixth aspect, the first intermediate rendering result further acts on filtering in the reconstruction process, and the reconstructed block is a reconstructed block obtained through filtering based on the first intermediate rendering result.

According to any one of the sixth aspect or the implementations of the sixth aspect, the first intermediate rendering result is depth information, and determining the partitioning information of the current frame based on the first intermediate rendering result includes: generating computer graphics edge CGE information based on the depth information, where the CGE information includes object edge information of an object in the current frame; and determining the partitioning information of the current frame based on the CGE information.

According to any one of the sixth aspect or the implementations of the sixth aspect, the first intermediate rendering result is a computer graphics motion vector CGMV, and the CGMV is used to describe a displacement relationship between a sample of the current frame and a sample of a reference frame of the current frame; and predicting the to-be-decoded block in the current frame based on the first intermediate rendering result and the reconstructed block, to obtain the predicted block corresponding to the to-be-decoded block includes: determining, from the reference frame of the current frame, a reconstructed block matching the to-be-decoded block; and generating the predicted block corresponding to the to-be-decoded block based on the CGMV and the reconstructed block matching the to-be-decoded block.

According to any one of the sixth aspect or the implementations of the sixth aspect, the first intermediate rendering result is a render identifier render ID, and the render ID is used to describe an object to which a sample in the reconstructed block belongs. The method further includes: determining a filtering parameter based on the render ID; and filtering the reconstructed block based on the filtering parameter.

According to any one of the sixth aspect or the implementations of the sixth aspect, there are a plurality of residual blocks, the first intermediate rendering result acts on prediction in the reconstruction process, the decoding result further includes CGE information, and the CGE information includes object edge information of an object in the current frame; and performing reconstruction based on the first intermediate rendering result and the residual block, to obtain the reconstructed image of the current frame includes: determining partitioning information of the current frame based on the CGE information; predicting, based on the partitioning information and a reconstructed block, a plurality of prediction units included in the current frame, to obtain a plurality of predicted blocks, where the plurality of predicted blocks are in a one-to-one correspondence with the plurality of prediction units, and the plurality of residual blocks are in a one-to-one correspondence with the plurality of prediction units; and determining the reconstructed image of the current frame based on the plurality of residual blocks and the plurality of predicted blocks.

Any one of the sixth aspect and the implementations of the sixth aspect corresponds to any one of the third aspect and the implementations of the third aspect. For technical effects corresponding to any one of the sixth aspect and the implementations of the sixth aspect, refer to technical effects corresponding to any one of the third aspect and the implementations of the third aspect. Details are not described herein again.

According to a seventh aspect, this application provides a bitstream generation method. In the method, a bitstream is generated based on the first rendering parameter in any one of the third aspect and the implementations of the third aspect.

According to an eighth aspect, this application provides a bitstream generation method. In the method, a bitstream is generated based on the first rendering parameter in any one of the sixth aspect and the implementations of the sixth aspect.

According to a ninth aspect, an embodiment of this application provides a server, including a storage and a processor. The storage is coupled to the processor. The storage stores program instructions, and when the program instructions are executed by the processor, the server is enabled to perform the encoding method according to any one of the second aspect or the possible implementations of the second aspect, or the server is enabled to perform the encoding method according to any one of the fifth aspect or the possible implementations of the fifth aspect.

Any one of the ninth aspect and the implementations of the ninth aspect corresponds to any one of the second aspect and the implementations of the second aspect, or corresponds to any one of the fifth aspect and the implementations of the fifth aspect. For technical effects corresponding to any one of the ninth aspect and the implementations of the ninth aspect, refer to technical effects corresponding to any one of the second aspect and the implementations of the second aspect, or refer to technical effects corresponding to any one of the fifth aspect and the implementations of the fifth aspect. Details are not described herein again.

According to a tenth aspect, an embodiment of this application provides a terminal device, including a storage and a processor. The storage is coupled to the processor. The storage stores program instructions. When the program instructions are executed by the processor, the terminal device is enabled to perform the decoding method according to any one of the third aspect or the possible implementations of the third aspect, or the terminal device is enabled to perform the decoding method according to any one of the sixth aspect or the possible implementations of the sixth aspect.

Any one of the tenth aspect and the implementations of the tenth aspect corresponds to any one of the third aspect and the implementations of the third aspect, or corresponds to any one of the sixth aspect and the implementations of the sixth aspect. For technical effects corresponding to any one of the tenth aspect and the implementations of the tenth aspect, refer to technical effects corresponding to any one of the second aspect and the implementations of the second aspect, or refer to technical effects corresponding to any one of the sixth aspect and the implementations of the sixth aspect. Details are not described herein again.

According to an eleventh aspect, an embodiment of this application provides a chip, including one or more interface circuits and one or more processors. The interface circuit is configured to: receive a signal from a storage of a server, and send the signal to the processor. The signal includes computer instructions stored in the storage. When the processor executes the computer instructions, the server is enabled to perform the encoding method according to any one of the second aspect or the possible implementations of the second aspect, or the server is enabled to perform the encoding method according to any one of the fifth aspect or the possible implementations of the fifth aspect.

Any one of the eleventh aspect and the implementations of the eleventh aspect corresponds to any one of the second aspect and the implementations of the second aspect, or corresponds to any one of the fifth aspect and the implementations of the fifth aspect. For technical effects corresponding to any one of the eleventh aspect and the implementations of the eleventh aspect, refer to technical effects corresponding to any one of the second aspect and the implementations of the second aspect, or refer to technical effects corresponding to any one of the fifth aspect and the implementations of the fifth aspect. Details are not described herein again.

According to a twelfth aspect, an embodiment of this application provides a chip, including one or more interface circuits and one or more processors. The interface circuit is configured to: receive a signal from a storage of a terminal device, and send the signal to the processor. The signal includes computer instructions stored in the storage. When the processor executes the computer instructions, the terminal device is enabled to perform the decoding method according to any one of the third aspect or the possible implementations of the third aspect, or the terminal device is enabled to perform the decoding method according to any one of the sixth aspect or the possible implementations of the sixth aspect.

Any one of the twelfth aspect and the implementations of the twelfth aspect corresponds to any one of the third aspect and the implementations of the third aspect, or corresponds to any one of the sixth aspect and the implementations of the sixth aspect. For technical effects corresponding to any one of the twelfth aspect and the implementations of the twelfth aspect, refer to technical effects corresponding to any one of the third aspect and the implementations of the third aspect, or refer to technical effects corresponding to any one of the sixth aspect and the implementations of the sixth aspect. Details are not described herein again.

According to a thirteenth aspect, an embodiment of this application provides a computer-readable storage medium. The computer-readable storage medium stores a computer program. When the computer program runs on a computer or a processor, the computer or the processor is enabled to perform the encoding method according to any one of the second aspect or the possible implementations of the second aspect, or the computer or the processor is enabled to perform the encoding method according to any one of the fifth aspect or the possible implementations of the fifth aspect.

Any one of the thirteenth aspect and the implementations of the thirteenth aspect corresponds to any one of the second aspect and the implementations of the second aspect, or corresponds to any one of the fifth aspect and the implementations of the fifth aspect. For technical effects corresponding to any one of the thirteenth aspect and the implementations of the thirteenth aspect, refer to technical effects corresponding to any one of the second aspect and the implementations of the second aspect, or refer to technical effects corresponding to any one of the fifth aspect and the implementations of the fifth aspect. Details are not described herein again.

According to a fourteenth aspect, an embodiment of this application provides a computer-readable storage medium. The computer-readable storage medium stores a computer program, and when the computer program runs on a computer or a processor, the computer or the processor performs the decoding method according to any one of the third aspect or the possible implementations of the third aspect, or the computer or the processor is enabled to perform the decoding method according to any one of the sixth aspect or the possible implementations of the sixth aspect.

Any one of the fourteenth aspect and the implementations of the fourteenth aspect corresponds to any one of the third aspect and the implementations of the third aspect, or corresponds to any one of the sixth aspect and the implementations of the sixth aspect. For technical effects corresponding to any one of the fourteenth aspect and the implementations of the fourteenth aspect, refer to technical effects corresponding to any one of the third aspect and the implementations of the third aspect, or refer to technical effects corresponding to any one of the sixth aspect and the implementations of the sixth aspect. Details are not described herein again.

According to a fifteenth aspect, an embodiment of this application provides a computer program product. The computer program product includes computing instructions. When the computing instructions are executed by a computer or a processor, the computer or the processor is enabled to perform the encoding method according to any one of the second aspect or the possible implementations of the second aspect, or the computer or the processor is enabled to perform the encoding method according to any one of the fifth aspect or the possible implementations of the fifth aspect.

Any one of the fifteenth aspect and the implementations of the fifteenth aspect corresponds to any one of the second aspect and the implementations of the second aspect, or corresponds to any one of the fifth aspect and the implementations of the fifth aspect. For technical effects corresponding to any one of the fifteenth aspect and the implementations of the fifteenth aspect, refer to technical effects corresponding to any one of the second aspect and the implementations of the second aspect, or refer to technical effects corresponding to any one of the fifth aspect and the implementations of the fifth aspect. Details are not described herein again.

According to a sixteenth aspect, an embodiment of this application provides a computer program product. The computer program product includes computing instructions. When the computing instructions are executed by a computer or a processor, the computer or the processor is enabled to perform the decoding method according to any one of the third aspect or the possible implementations of the third aspect, or the computer or the processor is enabled to perform the decoding method according to any one of the sixth aspect or the possible implementations of the sixth aspect.

Any one of the sixteenth aspect and the implementations of the sixteenth aspect corresponds to any one of the third aspect and the implementations of the third aspect, or corresponds to any one of the sixth aspect and the implementations of the sixth aspect. For technical effects corresponding to any one of the sixteenth aspect and the implementations of the sixteenth aspect, refer to technical effects corresponding to any one of the third aspect and the implementations of the third aspect, or refer to technical effects corresponding to any one of the sixth aspect and the implementations of the sixth aspect. Details are not described herein again.

According to a seventeenth aspect, an embodiment of this application provides a bitstream storage apparatus. The apparatus includes a receiver and at least one storage medium. The receiver is configured to receive a bitstream, and the at least one storage medium is configured to store the bitstream. The bitstream is generated according to any one of the second aspect and the implementations of the second aspect, or is generated according to any one of the fifth aspect and the implementations of the fifth aspect, or is generated according to the seventh aspect, or is generated according to the eighth aspect.

Any one of the seventeenth aspect and the implementations of the seventeenth aspect corresponds to any one of the second aspect and the implementations of the second aspect, or corresponds to any one of the fifth aspect and the implementations of the fifth aspect. For technical effects corresponding to any one of the seventeenth aspect and the implementations of the seventeenth aspect, refer to technical effects corresponding to any one of the second aspect and the implementations of the second aspect, or refer to technical effects corresponding to any one of the fifth aspect and the implementations of the fifth aspect. Details are not described herein again.

According to an eighteenth aspect, an embodiment of this application provides a bitstream transmission apparatus. The apparatus includes a transmitter and at least one storage medium, the at least one storage medium is configured to store a bitstream, and the bitstream is generated according to any one of the second aspect and the implementations of the second aspect, or is generated according to any one of the fifth aspect and the implementations of the fifth aspect, or is generated according to the seventh aspect, or is generated according to the eighth aspect. The transmitter is configured to: obtain the bitstream from the storage medium, and send the bitstream to a device-side device through a transmission medium.

Any one of the eighteenth aspect and the implementations of the eighteenth aspect corresponds to any one of the second aspect and the implementations of the second aspect, or corresponds to any one of the fifth aspect and the implementations of the fifth aspect. For technical effects corresponding to any one of the eighteenth aspect and the implementations of the eighteenth aspect, refer to technical effects corresponding to any one of the second aspect and the implementations of the second aspect, or refer to technical effects corresponding to any one of the fifth aspect and the implementations of the fifth aspect. Details are not described herein again.

According to a nineteenth aspect, an embodiment of this application provides a bitstream distribution system. The system includes: at least one storage medium, configured to store at least one bitstream, where the at least one bitstream is generated according to any one of the second aspect and the implementations of the second aspect, or is generated according to any one of the fifth aspect and the implementations of the fifth aspect, or is generated according to the seventh aspect, or is generated according to the eighth aspect; and a streaming media device, configured to: obtain a target bitstream from the at least one storage medium, and send the target bitstream to a device-side device, where the streaming media device includes a content server or a content delivery server.

Any one of the nineteenth aspect and the implementations of the nineteenth aspect corresponds to any one of the second aspect and the implementations of the second aspect, or corresponds to any one of the fifth aspect and the implementations of the fifth aspect. For technical effects corresponding to any one of the nineteenth aspect and the implementations of the nineteenth aspect, refer to technical effects corresponding to any one of the second aspect and the implementations of the second aspect, or refer to technical effects corresponding to any one of the fifth aspect and the implementations of the fifth aspect. Details are not described herein again.

**BRIEF DESCRIPTION OF DRAWINGS**

FIG. 1a is a diagram of an example application scenario;
FIG. 1b is a diagram of an example device-cloud collaboration system;
FIG. 2 is a diagram of an example encoding process;
FIG. 3 is a diagram of an example decoding process;
FIG. 4 is a diagram of an example encoding process;
FIG. 5 is a diagram of an example decoding process;
FIG. 6a is a diagram of an example encoding process;
FIG. 6b is a diagram of example model view projection transform;
FIG. 7 is a diagram of an example decoding process;
FIG. 8a is a diagram of an example encoding process;
FIG. 8b is a diagram of an example image;
FIG. 9 is a diagram of an example decoding process;
FIG. 10a is a diagram of an example encoding process;
FIG. 10b shows an example render ID map;
FIG. 11 is a diagram of an example decoding process;
FIG. 12 is a diagram of an example encoding process;
FIG. 13 is a diagram of an example decoding process;
FIG. 14 is a diagram of an example encoding process;
FIG. 15 is a diagram of an example decoding process;
FIG. 16a is a diagram of an example encoding framework;
FIG. 16b is a diagram of an example encoding process;
FIG. 16c is a diagram of example partitioning;
FIG. 16d is a diagram of an example CGE information generation process;
FIG. 16e is a diagram of a process of obtaining a PU through partitioning;
FIG. 17a is a diagram of an example decoding framework;
FIG. 17b is a diagram of an example decoding process;
FIG. 18a is a diagram of an example encoding framework;
FIG. 18b is a diagram of an example encoding process;
FIG. 18c is a diagram of an example predicted block selection process;
FIG. 19a is a diagram of an example decoding framework;
FIG. 19b is a diagram of an example decoding process;
FIG. 20a is a diagram of an example encoding framework;
FIG. 20b is a diagram of an example encoding process;
FIG. 21a is a diagram of an example decoding framework;
FIG. 21b is a diagram of an example decoding process; and
FIG. 22 is a diagram of a structure of an example apparatus.

**DESCRIPTION OF EMBODIMENTS**

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims of embodiments of this application, the terms such as "first" and "second" are intended to distinguish between different objects but do not indicate a particular order of the objects. For example, a first target object, a second target object, and the like are used to distinguish between different target objects, but do not indicate a particular order of the objects.

In embodiments of this application, the word such as "example" or "for example" represents giving an example, an illustration, or a description. Any embodiment or design solution described as an "example" or "for example" in embodiments of this application should not be explained as being more preferred or having more advantages than another embodiment or design solution. Specifically, the words such as "example" or "for example" are used to present related concepts in a specific manner.

In descriptions of embodiments of this application, unless otherwise specified, "a plurality of" means two or more. For example, a plurality of processing units are two or more processing units, and a plurality of systems are two or more systems.

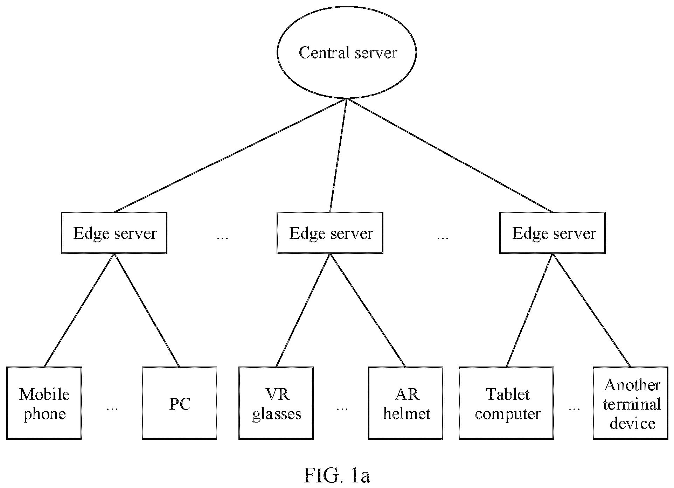

FIG. 1a is a diagram of an example application scenario. The application scenario shown in FIG. 1a is a device-cloud collaborative rendering scenario. This application may be applied to various device-cloud collaboration scenarios such as a cloud game and a VR/AR conference. This is not limited in this application. In this application, the cloud game is used as an example for description.

As shown in FIG. 1a, in a possible manner, a terminal device such as a mobile phone, a personal computer (Personal Computer, PC), VR glasses, an AR helmet, a tablet computer, or another terminal device may send a first rendering parameter to a central server (for example, a game server) through an edge server. Next, the central server may perform rendering processing on a three-dimensional scene based on a rendering parameter (the rendering parameter may include only the first rendering parameter uploaded by the terminal device, or include the first rendering parameter uploaded by the terminal device and a second rendering parameter generated by the central server), to obtain a rendered image (for example, a game image). Then, the central server encodes the rendered image based on some (referred to as a first intermediate rendering result subsequently) of intermediate rendering results generated in a rendering processing process, to obtain a bitstream, and distribute the bitstream to each terminal device through the edge server. Subsequently, the terminal device may perform rendering processing on the three-dimensional scene based on a rendering parameter (the rendering parameter includes the first rendering parameter and a fifth rendering parameter, the fifth rendering parameter is also generated by the terminal device, and the fifth rendering parameter may include a parameter that is the same as the second rendering parameter), and generate a first intermediate rendering result in a rendering processing process. Then, the terminal device decodes the bitstream based on the first intermediate rendering result, to obtain a reconstructed image.

As shown in FIG. 1a, in a possible manner, a terminal device such as a mobile phone, a PC, VR glasses, an AR helmet, a tablet computer, or another terminal device may send a first rendering parameter to a central server through an edge server. Next, the central server may perform rendering processing on a three-dimensional scene based on a rendering parameter (the rendering parameter may include only the first rendering parameter uploaded by the terminal device, or include the first rendering parameter uploaded by the terminal device and a second rendering parameter generated by the server), to obtain a rendered image. Then, the central server encodes the rendered image based on a first intermediate rendering result generated in a rendering processing process, and encodes a second intermediate rendering result (the second intermediate rendering result is a part of the first intermediate rendering result), to obtain a bitstream, and distribute the bitstream to each terminal device through the edge server. Subsequently, the terminal device may perform rendering processing on the three-dimensional scene based on a rendering parameter (the rendering parameter includes the first rendering parameter and a fifth rendering parameter), and generate a third intermediate rendering result (the third intermediate rendering result is a part of a first intermediate rendering result other than a second intermediate rendering result) in a rendering processing process. Then, the terminal device generates the first intermediate rendering result based on the second intermediate rendering result and the third intermediate rendering result, and decodes the bitstream based on the first intermediate rendering result, to obtain a reconstructed image.

As shown in FIG. 1a, in a possible manner, a terminal device such as a mobile phone, a PC, VR glasses, an AR helmet, a tablet computer, or another terminal device may send a first rendering parameter to a central server through an edge server. Next, the central server may perform rendering processing on a three-dimensional scene based on a rendering parameter (the rendering parameter includes the first rendering parameter uploaded by the terminal device and a second rendering parameter generated by the central server), to obtain a rendered image. Then, the central server encodes the rendered image based on a first intermediate rendering result generated in a rendering processing process, to obtain a bitstream, and encode a third rendering parameter (the third rendering parameter includes all or a part of parameters in a second rendering parameter) into a bitstream. Then, the central server distributes the bitstream to each terminal device through the edge server. Subsequently, the terminal device may perform rendering processing on the three-dimensional scene based on a rendering parameter (when the third rendering parameter includes all parameters in the second rendering parameter, the rendering parameter may include a first rendering parameter and the third rendering parameter obtained from the bitstream through parsing; or when the third rendering parameter includes a part of parameters in the second rendering parameter, the rendering parameter may include a first rendering parameter, the third rendering parameter obtained from the bitstream through parsing, and a fourth rendering parameter generated by the terminal device, and the fourth rendering parameter is a parameter other than the third rendering parameter in the second rendering parameter), and generate a first intermediate rendering result in a rendering processing process. Then, the terminal device decodes the bitstream based on the first intermediate rendering result, to obtain a reconstructed image.

As shown in FIG. 1a, in a possible manner, a terminal device such as a mobile phone, a PC, VR glasses, an AR helmet, a tablet computer, or another terminal device may send a first rendering parameter to a central server through an edge server. Next, the central server may perform rendering processing on a three-dimensional scene based on a rendering parameter (including the first rendering parameter uploaded by the terminal device and a second rendering parameter generated by the central server), to obtain a rendered image. Then, the central server encodes the rendered image based on a first intermediate rendering result generated in a rendering processing process, and encodes a second intermediate rendering result, to obtain a bitstream, and encode a third rendering parameter into the bitstream. Then, the central server distributes the bitstream to each terminal device through the edge server. Subsequently, the terminal device may perform rendering processing on the three-dimensional scene based on a rendering parameter (when the third rendering parameter includes all parameters in a second rendering parameter, the rendering parameter may include a first rendering parameter and the third rendering parameter obtained from the bitstream through parsing; or when the third rendering parameter includes a part of parameters in a second rendering parameter, the rendering parameter may include a first rendering parameter, the third rendering parameter obtained from the bitstream through parsing, and a fourth rendering parameter generated by the terminal device), and generate a third intermediate rendering result in a rendering processing process. Then, the terminal device generates a first intermediate rendering result based on a second intermediate rendering result and the third intermediate rendering result, and decodes the bitstream based on the first intermediate rendering result, to obtain a reconstructed image.

In this way, partial or all rendering is performed by the terminal device, and further, the server may not send an intermediate rendering result or send only some intermediate rendering results to the terminal device. Therefore, in this application, an interaction delay can be reduced while it is ensured that bit rate overheads of a data stream transmitted by the server to the terminal device are effectively reduced. In addition, a correlation between an intermediate rendering result and the rendered image is strong. Therefore, in this application, the rendered image is encoded based on the intermediate rendering result, so that image reconstruction quality can be ensured. In addition, a data amount of a rendering parameter is far less than a data amount of an intermediate rendering result. Therefore, even if the server in this application further sends the rendering parameter to the terminal device, bit rate overheads of a data stream transmitted by the server to the terminal device in this application are less than bit rate overheads of a transmitted data stream in the conventional technology.

For example, the rendering parameter may be all parameters that are input into a graphics rendering engine and that are required for rendering processing by the graphics rendering engine, and may include various parameters used for rendering, position vectors and color vectors of all light sources, a position vector of a player or an observer, information such as a sampling manner of each texture and position coordinates of an object in each scene, a motion track of a moving object, a skeletal animation parameter, and the like. This is not limited in this application. The first rendering parameter and the second rendering parameter may form the rendering parameter (namely, all parameters that are input into the graphics rendering engine and that are required for rendering processing by the graphics rendering engine). It should be noted that a type of a parameter included in the fifth rendering parameter generated by the terminal device is the same as a type of a parameter included in the second rendering parameter generated by the central server, and precision of the parameter included in the fifth rendering parameter is less than or equal to precision of the parameter included in the second rendering parameter.

For example, the intermediate rendering result may be intermediate data that is used to generate a to-be-displayed image/video and that is generated by the graphics rendering engine in a process of generating the to-be-displayed image (namely, the rendered image)/video (namely, a rendered video). For example, the intermediate rendering result may include but is not limited to a computer graphics motion vector (Computer Graphics Motion Vector, CGMV), an intermediate rendered image (the intermediate rendered image is an image generated before a final rendered image (namely, the foregoing rendered image) is generated, calculation complexity of the intermediate rendered image is lower than calculation complexity of the rendered image, and the intermediate rendered image may be, for example, an intermediate rendered image on which indirect illumination rendering is not performed, an intermediate rendered image on which specular reflection processing is not performed, or an intermediate rendered image on which highlight processing is not performed), a position map (position map), a normal map (normal map), an albedo map (albedo map), a specular intensity map (specular intensity map), a mesh identifier (Mesh ID), a material ID (Material ID) (each material map corresponds to one material ID), a render ID (render ID) (each object (or one three-dimensional object model) corresponds to one render ID), depth information, and the like. This is not limited in this application. The first intermediate rendering result is a part of all intermediate rendering results generated in the rendering processing process, and the second intermediate rendering result and the third intermediate rendering result may form the first intermediate rendering result. It should be noted that a type of an intermediate result included in the first intermediate rendering result generated by the terminal device is the same as a type of an intermediate result included in a first intermediate rendering result generated by the central server, and precision of the intermediate result included in the first intermediate rendering result generated by the terminal device is less than or equal to precision of the intermediate result included in the first intermediate rendering result generated by the central server.

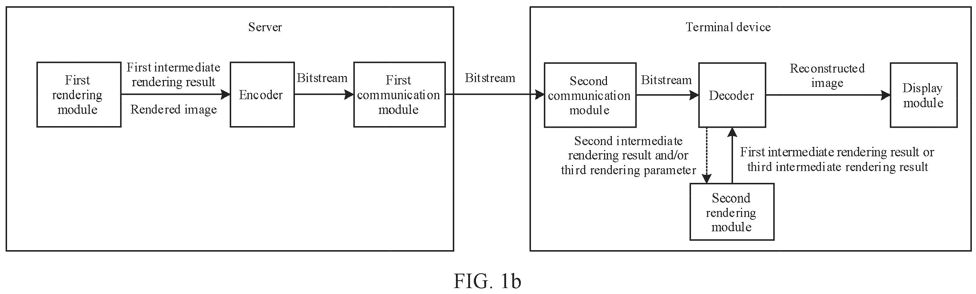

Based on the application scenario in FIG. 1a, this application provides a device-cloud collaboration system, which may be shown in FIG. 1b.

FIG. 1b is a diagram of an example device-cloud collaboration system. The device-cloud collaboration system shown in FIG. 1b may include a server and a terminal device.

As shown in FIG. 1b, for example, the server may be the central server in FIG. 1a, and the server may be a single server, or may be a server cluster. This is not limited in this application.

For example, the server may include a first rendering module, an encoder, and a first communication module. It should be understood that FIG. 1b is merely an example of this application. The server in this application may include more or fewer modules than those shown in FIG. 1b. This is not limited in this application.

For example, the first rendering module may be configured to perform rendering processing on a three-dimensional scene based on a rendering parameter, to obtain a rendered image and an intermediate rendering result.

For example, the encoder may be configured to: encode the rendered image based on a first intermediate rendering result, encode a second intermediate rendering result, and encode a second rendering parameter into a bitstream.

For example, the first communication module may be configured to communicate with another electronic device, for example, may send, to the terminal device, the bitstream output by the encoder.

For example, the terminal device includes but is not limited to a personal computer, a computer workstation, a smartphone, a tablet computer, a server, a smart camera, an intelligent vehicle, another type of cellular phone, a media consumption device, a wearable device (for example, a VR/AR helmet or VR glasses), a set-top box, a game console, and the like.

Still as shown in FIG. 1b, for example, the terminal device may include a second communication module, a second rendering module, a decoder, and a display module. It should be understood that FIG. 1b is merely an example of this application. The terminal device in this application may include more or fewer modules than those shown in FIG. 1b. This is not limited in this application.

For example, the second communication module may be configured to communicate with another electronic device, for example, receive the bitstream sent by the server.

For example, the second rendering module may be configured to perform rendering processing on the three-dimensional scene based on a locally generated first rendering parameter and a locally generated second rendering parameter, to obtain a first intermediate rendering result (in this case, a data stream corresponding to a dashed arrow in FIG. 1b may not exist); or may be configured to: perform rendering processing on the three-dimensional scene based on a locally generated first rendering parameter and a locally generated second rendering parameter, and generate, in a rendering processing process, a third intermediate rendering result based on the second intermediate rendering result sent by the server; or may be configured to perform rendering processing on the three-dimensional scene based on a locally generated first rendering parameter and a third rendering parameter generated by the server, to obtain a first intermediate rendering result; or may be configured to perform rendering processing on the three-dimensional scene based on a locally generated first rendering parameter, a locally generated fourth rendering parameter, and a third rendering parameter generated by the server, to obtain a first intermediate rendering result; or may be configured to: perform rendering processing on the three-dimensional scene based on a locally generated first rendering parameter and a third rendering parameter generated by the server, and generate, in a rendering processing process, a third intermediate rendering result based on the second intermediate rendering result sent by the server; or may be configured to: perform rendering processing on the three-dimensional scene based on a locally generated first rendering parameter, a locally generated fourth rendering parameter, and a third rendering parameter generated by the server, and generate, in a rendering processing process, a third intermediate rendering result based on the second intermediate rendering result sent by the server.

It should be understood that, the second rendering module may also generate a rendered image, but the rendered image is not used for displaying by a subsequent display module.

For example, the decoder may be configured to decode the bitstream based on the first intermediate rendering result, to obtain a reconstructed image.

For example, the display module may be configured to display the reconstructed image.

It should be understood that a video coding standard used by the encoder and the decoder is not limited in this application. For example, the video coding standard may include but is not limited to H.264/AVC (Advanced Video Coding, advanced video coding), H.265/HEVC (High Efficiency Video Coding, high efficiency video coding), H.266/VVC (Versatile Video Coding, versatile video coding), AV1 (AOMedia Video 1, where "AOMedia" is video coding developed by the Alliance for Open Media), and the like, and extended standards of these video coding standards. In addition, the video coding standard may further include a new video coding standard and an extended standard that are generated with development of video coding and decoding technologies.

It should be noted that the encoder in this application is an encoder obtained after an existing encoder is modified (or optimized), and can perform an encoding method in this application, to be specific, encode the rendered image based on the first intermediate rendering result. In other words, the encoder in this application can perform the encoding method in this application, and includes all or some functions of the existing encoder.

In addition, the decoder in this application is a decoder obtained after an existing decoder is modified (or optimized), and can perform a decoding method in this application, that is, perform decoding based on the first intermediate rendering result. In other words, the decoder in this application can perform the decoding method in this application, and includes all or some functions of the existing decoder.

The following describes an encoding process and a decoding process based on FIG. 1a and FIG. 1b.

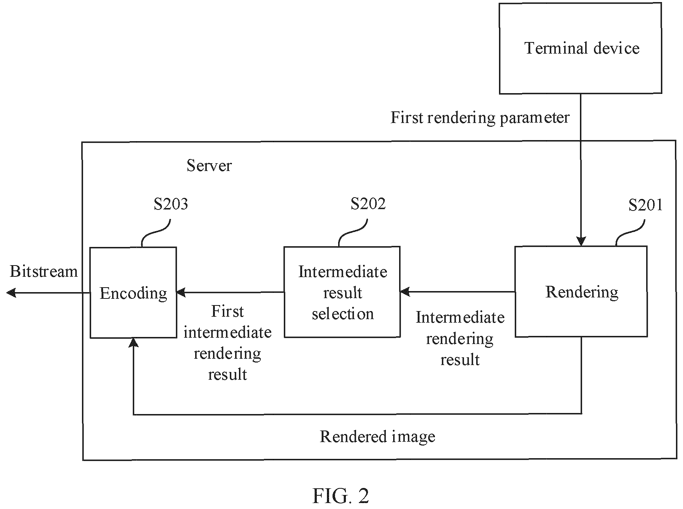

FIG. 2 is a diagram of an example encoding process. In the embodiment in FIG. 2, a server neither sends a first intermediate rendering result to a terminal device, nor sends a second rendering parameter to the terminal device. In the embodiment in FIG. 2, an example in which one frame of rendered image is encoded is used for description.

S201: The server performs rendering processing on a three-dimensional scene based on a rendering parameter, to obtain a rendered image, where the rendering parameter includes a first rendering parameter obtained from the terminal device.

For example, the server may obtain the rendering parameter, and then, may input the rendering parameter into a graphics rendering engine. The graphics rendering engine performs rendering processing on the three-dimensional scene based on the rendering parameter, to obtain the rendered image. The graphics rendering engine belongs to the first rendering module in FIG. 1b.

For example, the server may obtain the first rendering parameter (the first rendering parameter is generated by the terminal device) from the terminal device. In a possible manner, when the first rendering parameter generated by the terminal device is all parameters required for rendering processing by the graphics rendering engine, the server may determine the first rendering parameter as the rendering parameter. That is, the rendering parameter obtained by the server may include only the first rendering parameter. In a possible manner, when the first rendering parameter generated by the terminal device is a part of parameters required for rendering processing by the graphics rendering engine, the server may further generate the second rendering parameter, and then determine the first rendering parameter and the second rendering parameter as the rendering parameter. That is, the rendering parameter obtained by the server may include the first rendering parameter and the second rendering parameter. The first rendering parameter and the second rendering parameter are specifically described in a subsequent embodiment.

It should be noted that the server may obtain the first rendering parameter from the terminal device based on a preset periodicity. The preset periodicity may be set based on a requirement. This is not limited in this application. It should be understood that the first rendering parameter obtained by the server from the terminal device each time may be used to render one or more frames of images.

For example, a rendering processing process of the graphics rendering engine may be as follows: An image engine may perform geometric transform, projection transform, perspective transform, and window clipping on a three-dimensional object model in the three-dimensional scene based on the input rendering parameter, and then generate the rendered image based on obtained material and light shadow information.

S202: Select the first intermediate rendering result based on an intermediate rendering result generated in the rendering processing process.

For example, the graphics rendering engine in the first rendering module generates the intermediate rendering result in the rendering processing process (the rendering processing process is a time period between a moment at which the graphics rendering engine obtains the rendering parameter and a moment at which the rendered image is obtained), and may select the first intermediate rendering result from the intermediate rendering result. Subsequently, the rendered image may be encoded based on the first intermediate rendering result.

For example, some intermediate rendering results may be selected from the intermediate rendering result as the first intermediate rendering result. For example, the first intermediate rendering result may act on any one or more items of processing such as partitioning, prediction, or filtering in the encoding process. Further, an intermediate rendering result that may act on any one or more items of processing in the encoding process may be selected from the intermediate rendering result as the first intermediate rendering result. For example, a CGMV, depth information, a render ID, and the like are selected as the first intermediate rendering result. This is not limited in this application.

It should be noted that S201 and S202 may be performed by the first rendering module in FIG. 1b, and S203 may be performed by the encoder in FIG. 1b.

S203: The server encodes the rendered image based on the first intermediate rendering result, to obtain encoded data of a residual block, and encode the encoded data of the residual block into a bitstream, where the first intermediate rendering result acts on at least one type of the following processing in the encoding process: partitioning, prediction, or filtering.

For example, the encoding process of the encoder may include at least one type of the following processing: partitioning, prediction, or filtering. The first intermediate rendering result may act on at least one of the foregoing processing: partitioning, prediction, or filtering, to encode the rendered image.

For example, in a process of encoding the rendered image, the rendered image may be first partitioned, to obtain a plurality of to-be-encoded blocks; for a to-be-encoded block, the to-be-encoded block may be predicted based on a reconstructed block obtained through filtering, to obtain a predicted block; a residual block between the to-be-encoded block and the predicted block is determined; and the residual block may be encoded, and encoded data of the residual block is encoded into the bitstream. The specific encoding process is described subsequently.

For example, processing such as transform, quantization, and entropy encoding may be performed on the residual block, to obtain the encoded data of the residual block.

It should be understood that the first intermediate rendering result may further act on another item of processing, for example, entropy encoding in the encoding process. This is not limited in this application.

The bitstream in the embodiment in FIG. 2 includes the encoded data of the residual block, and does not include encoded data of the first intermediate rendering result.

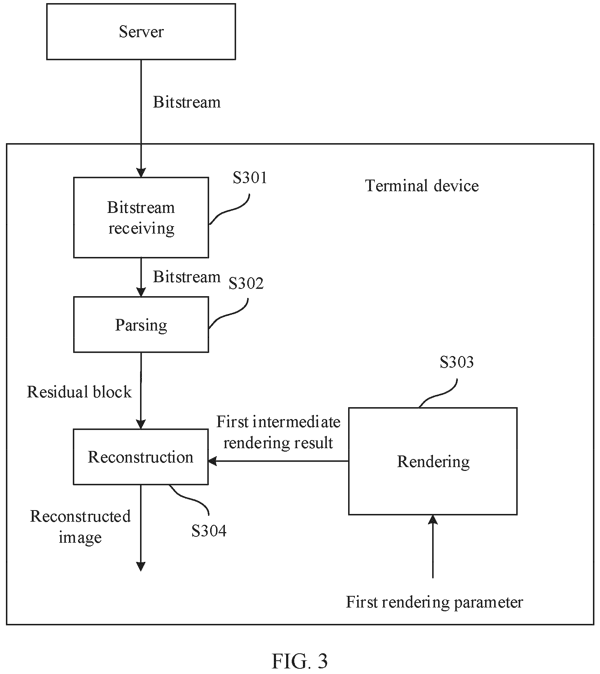

FIG. 3 is a diagram of an example decoding process. FIG. 3 shows a decoding process corresponding to FIG. 2. In the embodiment in FIG. 3, a terminal device performs rendering processing based on a locally generated rendering parameter, and generates a first intermediate rendering result. In the embodiment in FIG. 3, an example in which one frame of image is decoded is used for description.

S301: The terminal device receives a bitstream.

For example, the terminal device may receive the bitstream after a server sends the bitstream.

S302: The terminal device parses the bitstream, to obtain a parsing result, where the parsing result includes a residual block corresponding to a current frame.

For example, after receiving the bitstream, the terminal device may parse the bitstream, to obtain the parsing result. A parsing process may be as follows: extracting encoded data of the residual block from the bitstream, and then performing entropy decoding on the encoded data of the residual block, to obtain entropy decoded data. Then, dequantization may be performed on the entropy decoded data, to obtain dequantized data. Then, inverse transform may be performed on the dequantized data, to obtain the residual block corresponding to the current frame.

It should be understood that, when an encoder side performs lossy encoding on the residual block, a residual block obtained by a decoder side through parsing is different from the residual block encoded by the encoder side. When an encoder side performs lossless encoding on the residual block, a residual block obtained by a decoder side through parsing is the same as the residual block encoded by the encoder side.

It should be noted that bitstream description information used to describe the bitstream may be further extracted from the bitstream. In this case, operations such as entropy decoding, dequantization, and inverse transform do not need to be performed on the bitstream description information. The bitstream description information may be used for the subsequent decoding process.

S303: The terminal device performs rendering processing on a three-dimensional scene based on a rendering parameter corresponding to the current frame, and generates the first intermediate rendering result in a rendering processing process, where the rendering parameter includes a first rendering parameter generated by the terminal device.

For example, after the residual block corresponding to the current frame is obtained through parsing, a second rendering module (which may be a graphics rendering engine included in the second rendering module) may perform rendering processing on the three-dimensional scene based on the rendering parameter corresponding to the current frame.

For example, when the first rendering parameter uploaded by the terminal device to the server is all parameters required for rendering processing by the graphics rendering engine, the second rendering module may perform rendering processing on the three-dimensional scene based on a first rendering parameter corresponding to the current frame. When the first rendering parameter uploaded by the terminal device is a part of parameters required for rendering processing by the graphics rendering engine, the terminal device may further generate a fifth rendering parameter, and then the second rendering module may perform rendering processing on the three-dimensional scene based on the first rendering parameter corresponding to the current frame and the fifth rendering parameter.

It should be noted that a type of a parameter included in the fifth rendering parameter generated by the terminal device is the same as a type of a parameter included in a second rendering parameter generated by the central server; and precision of the parameter included in the fifth rendering parameter is less than or equal to precision of the parameter included in the second rendering parameter.

It should be noted that a type of an intermediate result included in the first intermediate rendering result generated by the terminal device is the same as a type of an intermediate result included in a first intermediate rendering result generated by the server; and precision of the intermediate result included in the first intermediate rendering result generated by the terminal device is less than or equal to precision of the intermediate result included in the first intermediate rendering result generated by the server.

It should be noted that a rendered image can still be obtained when the graphics rendering engine of the terminal device performs rendering processing. Because computational power of the terminal device is lower than computational power of the server, image quality (the image quality may include subjective quality and objective quality (the objective quality is, for example, rate-distortion performance or a peak signal to noise ratio (Peak Signal to Noise Ratio, PSNR))) of the rendered image obtained by performing rendering processing by the graphics rendering engine of the terminal device is lower than image quality of a rendered image obtained by performing rendering processing by a graphics rendering engine of the server. Therefore, the terminal device may not display the rendered image obtained by performing rendering processing by the graphics rendering engine of the terminal device, but display a reconstructed image obtained by decoding the bitstream.

It should be noted that S301 to S303 may be performed by the second rendering module of the terminal device, and S304 may be performed by the decoder in FIG. 1b.

S304: The terminal device performs reconstruction based on the first intermediate rendering result and the residual block, to obtain a reconstructed image of the current frame, where the first intermediate rendering result acts on at least one type of the following processing in a reconstruction process: prediction or filtering.

For example, a decoding process of the decoder may include a plurality of items of processing such as parsing, prediction, and filtering. The first intermediate rendering result may act on at least one type of the following processing in prediction and filtering, to reconstruct the reconstructed image of the current frame.

For example, in the reconstruction process, partitioning information of the current frame may be determined; a to-be-decoded block in the current frame is predicted based on the partitioning information and a reconstructed block obtained through filtering, to obtain a predicted block; and reconstruction may be performed based on the residual block and the predicted block corresponding to the to-be-decoded block, to obtain the reconstructed image corresponding to the current frame. The specific decoding process is described subsequently.

It should be understood that the first intermediate rendering result in the decoding process acts on a processing item in the reconstruction process, and corresponds to that a first intermediate rendering result in the encoding process acts on a processing item in the encoding process.

It should be understood that the first intermediate rendering result may further act on another item of processing, for example, entropy decoding in the decoding process. This is not limited in this application.

In this way, in this application, all rendering is performed by the terminal device, and further, the server may not send an intermediate rendering result to the terminal device. Therefore, in this application, an interaction delay can be reduced while it is ensured that bit rate overheads of a data stream transmitted by the server to the terminal device are effectively reduced. In addition, a correlation between an intermediate rendering result and the rendered image is strong. Therefore, in this application, the rendered image is encoded based on the intermediate rendering result, so that image reconstruction quality can be ensured.

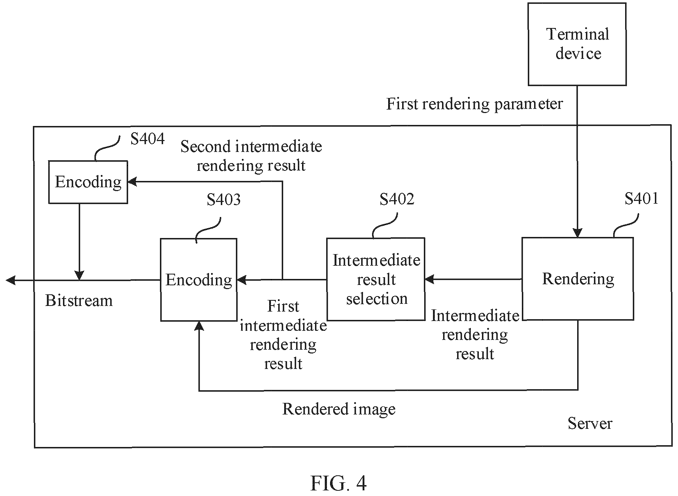

FIG. 4 is a diagram of an example encoding process. In the embodiment in FIG. 4, a server sends a part (referred to as a second intermediate rendering result subsequently) of a first intermediate rendering result to a terminal device, and does not send a second rendering parameter to the terminal device. In the embodiment in FIG. 4, an example in which one frame of rendered image is encoded is used for description.

S401: The server performs rendering processing on a three-dimensional scene based on a rendering parameter, to obtain a rendered image, where the rendering parameter includes a first rendering parameter obtained from the terminal device.

S402: The server selects the first intermediate rendering result based on an intermediate rendering result generated in a rendering processing process.

S403: The server encodes the rendered image based on the first intermediate rendering result, to obtain encoded data of a residual block, and encode the encoded data of the residual block into a bitstream, where the first intermediate rendering result acts on at least one type of the following processing in the encoding process: partitioning, prediction, or filtering.

For example, for S401 to S403, refer to the descriptions of S201 to S203. Details are not described herein again.

S404: The server encodes the second intermediate rendering result, and encodes encoded data of the second intermediate rendering result into the bitstream, where the second intermediate rendering result is a part of the first intermediate rendering result.

For example, S404 may be performed by the encoder in FIG. 1b. To be specific, the encoder encodes the second intermediate rendering result, and encodes the encoded data of the second intermediate rendering result into the bitstream.

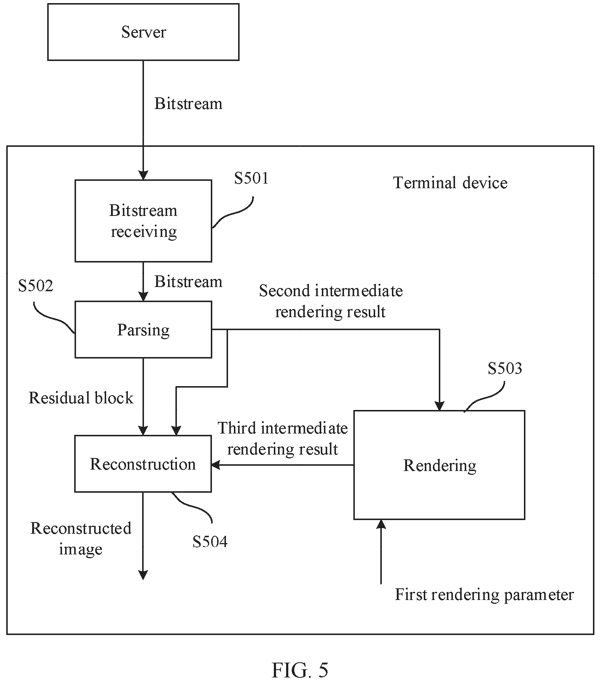

FIG. 5 is a diagram of an example decoding process. FIG. 5 shows a decoding process corresponding to FIG. 4. In the embodiment in FIG. 5, a terminal device performs rendering processing based on a locally generated rendering parameter, and generates a third intermediate rendering result (the third intermediate rendering result and a second intermediate rendering result may form a first intermediate rendering result). In the embodiment in FIG. 5, an example in which one frame of image is decoded is used for description.

S501: The terminal device receives a bitstream.

S502: The terminal device parses the bitstream, to obtain a parsing result, where the parsing result includes a residual block corresponding to a current frame and a second intermediate rendering result corresponding to the current frame.

For example, for S502, refer to the descriptions of S302. Details are not described herein again.

For example, in a parsing process, encoded data of the second intermediate rendering result may be further extracted from the bitstream. Then, the encoded data of the second intermediate rendering result may be sequentially input into an entropy decoding module, a dequantization module, and an inverse transform module, to obtain the second intermediate rendering result.

It should be noted that, when a server performs lossless compression on a second intermediate rendering result, the second intermediate rendering result obtained by the terminal device through parsing is the same as the second intermediate rendering result encoded by an encoder of the server. When the server performs lossy compression on a second intermediate rendering result, the second intermediate rendering result obtained by the terminal device through parsing is different from the second intermediate rendering result encoded by the encoder of the server.

S503: The terminal device performs rendering processing on a three-dimensional scene based on a rendering parameter corresponding to the current frame, and generates the third intermediate rendering result based on the second intermediate rendering result in a rendering processing process, where the rendering parameter includes a first rendering parameter generated by the terminal device.

For example, in the rendering processing process, a second rendering module of the terminal device may generate a part of the first intermediate rendering result other than the second intermediate rendering result, namely, the third intermediate rendering result. For details, refer to the descriptions of S303. Details are not described herein again. Then, the second rendering module may combine the second intermediate rendering result and the third intermediate rendering result, to obtain the first intermediate rendering result.

It should be understood that, because the third intermediate rendering result is generated by the terminal device, a type of an intermediate result included in the first intermediate rendering result obtained by the terminal device through combination is the same as a type of an intermediate result included in a first intermediate rendering result generated by the server. Precision of the intermediate result included in the first intermediate rendering result obtained by the terminal device through combination is less than or equal to precision of the intermediate result included in the first intermediate rendering result generated by the server.

S504: The terminal device performs reconstruction based on the first intermediate rendering result and the residual block, to obtain a reconstructed image of the current frame, where the first intermediate rendering result acts on at least one type of the following processing in a reconstruction process: prediction or filtering.

For example, for S504, refer to the descriptions of S304. Details are not described herein again.

In this way, in this application, partial rendering is performed by the terminal device, and further, the server may send some intermediate rendering results to the terminal device. Therefore, in this application, an interaction delay can be reduced while it is ensured that bit rate overheads of a data stream transmitted by the server to the terminal device are effectively reduced. In addition, a correlation between an intermediate rendering result and the rendered image is strong. Therefore, in this application, the rendered image is encoded based on the intermediate rendering result, so that image reconstruction quality can be ensured.

The following describes an encoding process and a decoding process by using an example in which a first intermediate rendering result is a CGMV and a server sends a part of the CGMV to a terminal device.

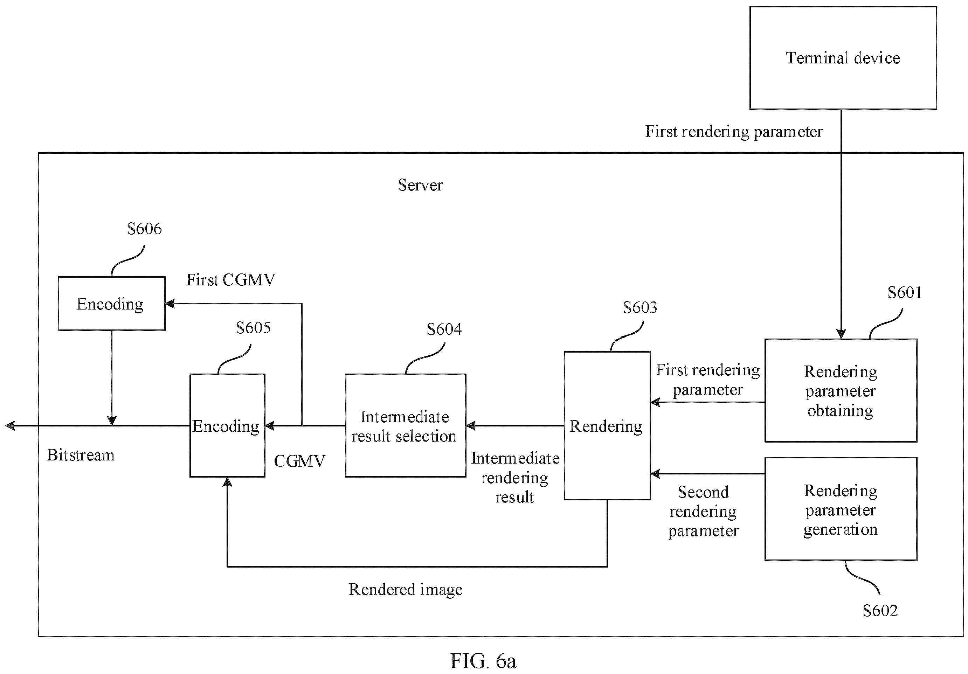

FIG. 6a is a diagram of an example encoding process. In the embodiment in FIG. 6a, the server sends the part of the CGMV to the terminal device, and does not send a second rendering parameter to the terminal device. The part of the CGMV acts on prediction in the encoding process. In the embodiment in FIG. 6a, an example in which one frame of rendered image is encoded is used for description.

S601: The server receives a first rendering parameter sent by the terminal device.

For example, the first rendering parameter may include a camera parameter. The camera parameter may include but is not limited to parameters such as a view projection matrix, a camera dynamic range, a focal length, an aperture size, and a depth of field.

S602: The server generates a second rendering parameter.

For example, the server may load scene geometry information (for example, vertex coordinates of a triangle mesh), material data (for example, a material map and a material generation function), texture data (for example, a texture map), and the like that are prestored in a storage (for example, a hard disk or a memory), to obtain the second rendering parameter.

S603: The server performs rendering processing on a three-dimensional scene based on the first rendering parameter and the second rendering parameter, to obtain a rendered image.

S604: The server selects the CGMV based on an intermediate rendering result generated in a rendering processing process.

For example, the server may input the first rendering parameter and the second rendering parameter into a graphics rendering engine (for example, V-Ray, Unreal, or Unity), and the graphics rendering engine performs rendering processing, to obtain the rendered image.

For example, in the rendering processing process, the graphics rendering engine may generate the CGMV and another intermediate rendering result, and may select the CGMV as the first intermediate rendering result. The CGMV may include a CGMV of a static object and a CGMV of a dynamic object.

For example, a process in which the graphics rendering engine generates a static CGMV may be as follows: For each point (which may include a vertex on a triangle mesh (which is also referred to as a mesh (mesh)) and a point (which is subsequently referred to as another point (the another point may be obtained through vertex interpolation)) that is not a vertex on the triangle mesh) on the triangle mesh, a projection result (namely, a sample of each vertex on a screen) of each point in a model view projection (Model View Projection) matrix $M_{t1}$ at a moment t1 (a current moment) is calculated, and the projection result is rasterized (Rasterize).

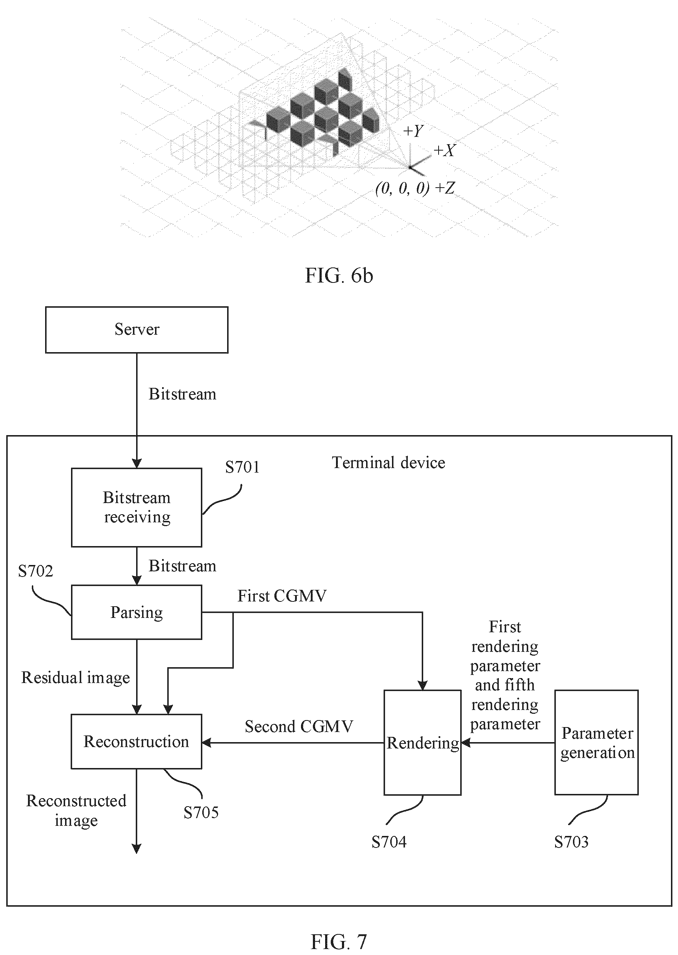

FIG. 6b is a diagram of example model view projection transform.

As shown in FIG. 6b, for example, (0, 0, 0) in FIG. 6b is a camera origin. +Y indicates a positive direction of a Y axis, +X indicates a positive direction of an X axis, and +Z indicates a positive direction of a Z axis.

For example, in the three-dimensional scene, a point located on a triangle mesh between a near plane and a far plane of a viewing frustum (the camera origin is used as a vertex) may be projected onto the screen. In FIG. 6b, a point on a gray cube may be projected onto the screen. A parameter (for example, a horizontal angle of view, a vertical angle of view, and a diagonal angle of view) of the viewing frustum may be determined based on the camera parameter in the first rendering parameter. The model view projection matrix $M_{t1}$ at the moment t1 may be used to determine a corresponding sample onto which the point on the triangle mesh located between the near plane and the far plane of the viewing frustum (the camera origin is used as a vertex) is projected on the screen.

For example, a process of rasterizing (Rasterize) the projection result may be as follows:

First, an array ZBuffer is preset for the sample corresponding to the point on the triangle mesh between the near plane and the far plane of the viewing frustum (the camera origin is used as a vertex). An initial value of a position of each sample in the array ZBuffer is set to infinity (that is, infinitely far away from a camera).

Then, each sample [x, y] in the array ZBuffer is traversed, and a distance z from each sample to the camera, namely, a distance from a point corresponding to each sample on the triangle mesh to the camera is calculated. When the sample corresponds to a vertex on the triangle mesh, a corresponding distance may be directly calculated; or when the sample corresponds to another point on the triangle mesh, a corresponding distance may be obtained by performing interpolation based on a distance from a sample corresponding to a vertex to the camera. If z is less than a value in ZBuffer [x, y], the value in ZBuffer[x,y] is updated to the distance z of the point.

Then, based on a far plane distance value $z_{far}$ and a near plane distance value $z_{near}$ in the camera parameter, a distance value corresponding to each sample in the array ZBuffer is normalized, to obtain a depth value D whose change range is between [0, 1], and all depth values D form a depth map (depth map). A normalization manner is as follows:

$$D = \frac{\dfrac{1}{z} - \dfrac{1}{z_{near}}}{\dfrac{1}{z_{far}} - \dfrac{1}{z_{near}}}$$

Then, based on a view projection matrix $M_{t2}$ at a moment t2 (a rendering moment corresponding to any reconstructed image, where the graphics rendering engine does not necessarily perform rendering processing based on an image arrangement sequence in video data, and therefore, the encoder does not necessarily perform encoding based on the image arrangement sequence in the video data, and further, the reconstructed image may be a reconstructed image of an encoded image before a to-be-rendered image (an image that needs to be rendered at the moment t1) in the video data, or may be a reconstructed image of an encoded image after the to-be-rendered image) and the view projection matrix $M_{t1}$ at the current moment, the CGMV of the static object between the moment t1 and the moment t2 is calculated, and is denoted as a CGMV 1:

$$CGMV1 = D * \left( M_{t1} - M_{t2} \right)$$

It should be understood that CGMVs of the static object between the moment t1 and N moments t2 may be generated, to obtain N CGMVs 1. Each CGMV 1 may correspond to one moment t2. N is a positive integer. For example, N is a positive integer less than 16. This is not limited in this application.

For example, a process in which the graphics rendering engine generates a dynamic CGMV may be as follows: For example, a velocity buffer (velocity buffer) is maintained for a moving mesh (namely, a triangle mesh of the dynamic object). The velocity buffer records coordinates $(x_1, y_1, z_1)$ of each vertex on each moving mesh at the moment t1, and records coordinates of each vertex on each moving mesh at the moment t2 on the mesh as $(x_2, y_2, z_2)$.

First, a motion vector P = $(x_1, y_1, z_1)$ - $(x_2, y_2, z_2)$ of each vertex on each moving mesh at the moment t1 and the moment t2 may be calculated.

Next, P is multiplied by the view projection matrix at the moment t1, to obtain a CGMV of a sample corresponding to each vertex on each moving mesh, which is denoted as a CGMV 2. $CGMV2 = P * M_{t1}$.

Finally, the CGMV 2 is rasterized. For details, refer to the foregoing descriptions. Details are not described herein again. In addition, interpolation may be performed on another point on the triangle mesh, to obtain a CGMV 2 of each sample.

It should be understood that CGMVs of the dynamic object between the moment t1 and N moments t2 may be generated, to obtain N CGMVs 2. Each CGMV 2 may correspond to one moment t2.

S605: The server encodes the rendered image based on the CGMV, to obtain encoded data of a residual block, and encode the encoded data of the residual block into the bitstream, where the CGMV acts on one type of the following processing in the encoding process: prediction.

For example, the server may combine the CGMV of the dynamic object and the CGMV of the static object based on a sample, to obtain a complete CGMV (namely, the first intermediate rendering result). For example, a CGMV 1 of the static object between the moment t1 and an $i^{th}$ (i is a positive integer between 1 and N, including 1 and N) moment t2 and a CGMV 2 of the dynamic object between the moment t1 and the $i^{th}$ moment t2 may be combined, to obtain a complete CGMV (namely, an $i^{th}$ complete CGMV) between the moment t1 and the $i^{th}$ moment t2.

For example, the CGMV may act on prediction in the encoding process, to encode the rendered image. For example, for the to-be-encoded block in the rendered image, the to-be-encoded block may be predicted based on the CGMV, to obtain a predicted block; a residual block between the to-be-encoded block and the predicted block is determined; and the residual block may be encoded, and encoded data of the residual block is encoded into the bitstream. The specific encoding process is described in a subsequent embodiment.

S606: The server encodes a first CGMV, and encodes encoded data of the first CGMV into the bitstream.

For example, after generating a complete CGMV, the server may encode a part of the CGMV. It should be understood that the server generates N complete CGMVs. When a predicted block used to calculate the residual block is the $i^{th}$ complete CGMV, a part of the $i^{th}$ complete CGMV may be encoded. The part of the CGMV may be referred to as the first CGMV, namely, a second intermediate rendering result.

In a possible manner, the first CGMV is a CGMV of the static object, and further, the server may send an encoded CGMV of the static object to the terminal device. In this way, the terminal device does not need to calculate the CGMV of the static object, thereby saving computational power of the terminal device.

In a possible manner, the first CGMV is a CGMV of the dynamic object, and further, the server may send an encoded CGMV of the dynamic object to the terminal device. In this way, the terminal device does not need to calculate the CGMV of the dynamic object, thereby saving computational power of the terminal device. In addition, a calculation amount of calculating the CGMV of the dynamic object is greater than a calculation amount of calculating the CGMV of the static object. Therefore, the CGMV of the dynamic object is encoded and sent to the terminal device, to save more computational power of the terminal device.

For example, the CGMV of the dynamic object may include the CGMV of the rigid dynamic object and/or the CGMV of the non-rigid dynamic object.

In a possible manner, the first CGMV may include a CGMV of a rigid dynamic object and a CGMV of a non-rigid dynamic object.

In a possible manner, the first CGMV may include the CGMV of the rigid dynamic object, and further, the server may send an encoded CGMV of the rigid dynamic object to the terminal device. In this way, a bit rate can be reduced in comparison with encoding of the CGMV of the rigid dynamic object and the CGMV of the non-rigid dynamic object.

In a possible manner, the first CGMV may include the CGMV of the non-rigid dynamic object, and further, the server may send an encoded CGMV of the non-rigid dynamic object to the terminal device. In this way, a bit rate can be reduced in comparison with encoding of the CGMV of the rigid dynamic object and the CGMV of the non-rigid dynamic object. In addition, because a quantity of triangle meshes of the non-rigid dynamic object is large, a calculation amount of the CGMV of the non-rigid dynamic object is large. Therefore, compared with encoding of the CGMV of the rigid dynamic object, encoding of the CGMV of the non-rigid dynamic object can save more computational power of the terminal device.

For example, in the embodiment in FIG. 6a, bitstream description information may further include a first indication identifier and/or a second indication identifier. The first indication identifier indicates whether the bitstream includes encoded data of the second intermediate rendering result, and the second indication identifier indicates a type and a subtype of the second intermediate rendering result.

For example, a type of the CGMV may be a motion vector type, and the motion vector type may include a subtype A1, a subtype A2, and a subtype A3. A subtype corresponding to the CGMV of the static object is the subtype A1, a subtype corresponding to the CGMV of the rigid dynamic object is the subtype A2, and a subtype corresponding to the CGMV of the non-rigid dynamic object is the subtype A3. In the embodiment in FIG. 6a, the second indication identifier may indicate a type and a subtype of the first CGMV. In this way, the terminal device can learn of a specific type of a to-be-generated second CGMV (the second CGMV is a part of the CGMV other than the first CGMV).

For example, the motion vector type is represented by V, the subtype A1 is represented by 1, the subtype A2 is represented by 2, and the subtype A3 is represented by 3. When the first CGMV is a CGMV of the non-rigid dynamic object, the second indication identifier may be V3.

For example, when the first indication identifier is first preset information (for example, 1), it indicates that the bitstream includes the encoded data of the second intermediate rendering result; or when the first indication identifier is second preset information (for example, 0), it indicates that the bitstream does not include the encoded data of the second intermediate rendering result.

The following describes a decoding process corresponding to the encoding process in FIG. 6a by using an example in which the bitstream description information of the bitstream includes the first indication identifier and the second indication identifier.

FIG. 7 is a diagram of an example decoding process. FIG. 7 shows a decoding process corresponding to FIG. 6a. In the embodiment in FIG. 7, the terminal device performs rendering processing based on a locally generated rendering parameter, and generates the other part of the CGMV. In the embodiment in FIG. 7, an example in which one frame of image is decoded is used for description.

S701: The terminal device receives the bitstream.

S702: The terminal device parses the bitstream, to obtain a parsing result, where the parsing result includes a residual block corresponding to a current frame and a first CGMV corresponding to the current frame.

For example, for S701 and S702, refer to the descriptions of S501 and S502. Details are not described herein again.

S703: The terminal device generates a first rendering parameter and a fifth rendering parameter.

For example, the first rendering parameter may include a camera parameter, which may include but is not limited to parameters such as a view projection matrix, a camera dynamic range, a focal length, an aperture size, and a depth of field.

For example, the terminal device may load scene geometry information (for example, vertex coordinates of a triangle mesh), material data (for example, a material map and a material generation function), texture data (for example, a texture map), and the like that are prestored in a storage (for example, a hard disk or a memory), to obtain the fifth rendering parameter.

S704: The terminal device performs rendering processing on a three-dimensional scene based on the first rendering parameter and the fifth rendering parameter, and generates a second CGMV based on a first CGMV in a rendering processing process.

For example, the terminal device may input the first rendering parameter and the fifth rendering parameter into a graphics rendering engine (for example, V-Ray, Unreal, or Unity), and the graphics rendering engine performs rendering processing on the three-dimensional scene. In the rendering processing process, the second CGMV is generated based on the first CGMV.

For example, the parsing result may further include the first indication identifier and the second indication identifier. When determining, based on the first indication identifier, that the bitstream includes the encoded data of the second intermediate rendering result, the terminal device may determine the type and the subtype of the second intermediate rendering result based on the second indication identifier. Next, a third intermediate rendering result of another subtype is generated based on the type and the subtype of the second intermediate rendering result in the rendering processing process. The another subtype is a subtype in subtypes included in the type of the second intermediate rendering result other than the subtype corresponding to the second intermediate rendering result.

For example, in the embodiment in FIG. 7, when the terminal device determines, based on the second indication identifier, that the type of the first CGMV is the motion vector type and the subtype is the subtype A1, that is, the first CGMV sent by the server is a CGMV of the static object, in the rendering processing process, the graphics rendering engine of the terminal device does not need to generate the CGMV of the static object, but only needs to generate the CGMV of the dynamic object (in this case, the another subtype includes the subtype A2 and the subtype A3). That is, the second CGMV is a CGMV of the dynamic object.

For example, in the embodiment in FIG. 7, when the terminal device determines, based on the second indication identifier, that the type of the first CGMV is the motion vector type and the subtype is the subtype A2 and the subtype A3, that is, the first CGMV sent by the server is a CGMV of the rigid dynamic object and a CGMV of the non-rigid dynamic object, in the rendering processing process, the graphics rendering engine of the terminal device does not need to generate the CGMV of the rigid dynamic object or the CGMV of the non-rigid dynamic object, but only needs to generate the CGMV of the static object (in this case, the another subtype includes the subtype A1). That is, the second CGMV is a CGMV of the static object.

For example, in the embodiment in FIG. 7, when the terminal device determines, based on the second indication identifier, that the type of the first CGMV is the motion vector type and the subtype is the subtype A2, that is, the first CGMV sent by the server is a CGMV of the rigid dynamic object, in the rendering processing process, the graphics rendering engine of the terminal device does not need to generate the CGMV of the rigid dynamic object, but only needs to generate the CGMV of the static object and the CGMV of the non-rigid dynamic object (in this case, the another subtype includes the subtype A1 and the subtype A3). That is, the second CGMV is a CGMV of the static object and a CGMV of the non-rigid dynamic object.

For example, in the embodiment in FIG. 7, when the terminal device determines, based on the second indication identifier, that the type of the first CGMV is the motion vector type and the subtype is the subtype A3, that is, the first CGMV sent by the server is a CGMV of the non-rigid dynamic object, in the rendering processing process, the graphics rendering engine of the terminal device does not need to generate the CGMV of the non-rigid dynamic object, but only needs to generate the CGMV of the static object and the CGMV of the rigid dynamic object (in this case, the another subtype includes the subtype A1 and the subtype A2). That is, the second CGMV is a CGMV of the static object and a CGMV of the rigid dynamic object.

It should be understood that, for a process in which the terminal device generates the CGMV of the dynamic object/the CGMV of the static object, refer to the foregoing descriptions. Details are not described herein again.

S705: The terminal device performs reconstruction based on the first CGMV, the second CGMV, and the residual block, to obtain a reconstructed image of the current frame, where the first intermediate rendering result acts on one type of the following processing in a reconstruction process: prediction.

For example, the terminal device may combine the first CGMV and the second CGMV, and then perform prediction in the reconstruction process based on a CGMV (namely, a complete CGMV) obtained through combination, to obtain the reconstructed image of the current frame.

For example, in the reconstruction process, a to-be-decoded block in the current frame may be predicted based on the CGMV, to obtain a predicted block; and then reconstruction may be performed based on a residual block corresponding to the to-be-decoded block and the predicted block, to obtain the reconstructed image corresponding to the current frame. The specific reconstruction process is described subsequently. Details are not described herein again.

Because a CGMV generated by the server is more accurate than a CGMV generated by the terminal device, the CGMV obtained by the terminal device can be more accurate, thereby improving prediction accuracy, and improving image quality of the reconstructed image. In addition, the terminal device needs to generate only a part of the CGMV, so that computational power of the terminal device can be saved, and decoding efficiency can be improved. In addition, in a case of same quality, compared with the conventional technology in which the server sends all CGMVs, the server in this application sends only some CGMVs, so that bit rate overheads of a data stream transmitted by the server to the terminal device can be reduced.

The following describes an encoding process and a decoding process by using an example in which a first intermediate rendering result is depth information and a server sends a part of the depth information to a terminal device. For example, the depth information is a depth map.

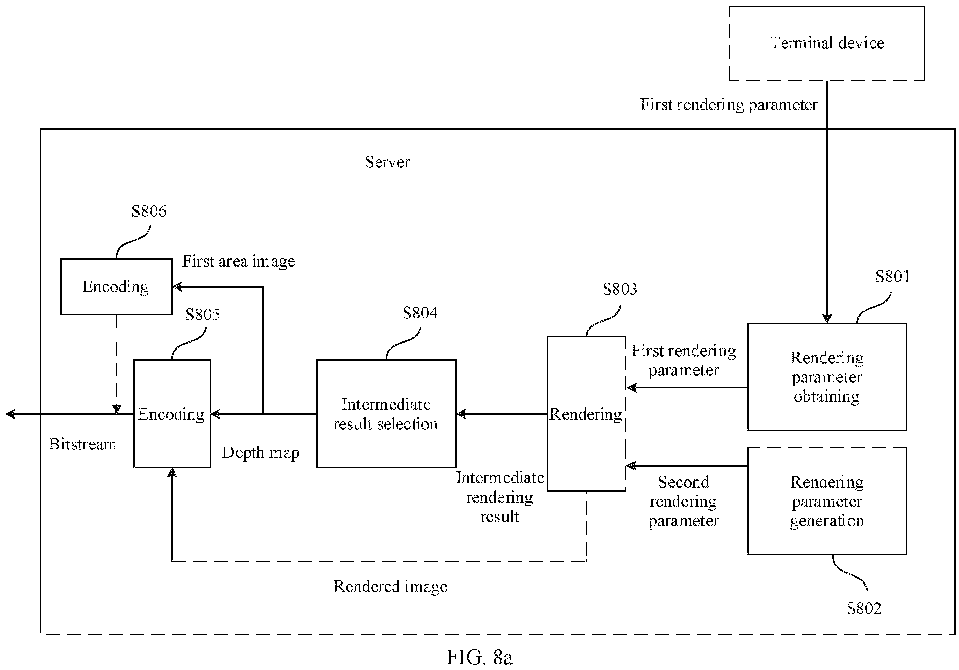

FIG. 8a is a diagram of an example encoding process. In the embodiment in FIG. 8a, the server sends an image of a part of areas in the depth map to the terminal device, and does not send a second rendering parameter to the terminal device. In the embodiment in FIG. 8a, an example in which one frame of rendered image is encoded is used for description.

S801: The server receives a first rendering parameter sent by the terminal device.

S802: The server generates the second rendering parameter.

For example, for S801 and S802, refer to the descriptions of S601 and S602. Details are not described herein again.

S803: The server performs rendering processing on a three-dimensional scene based on the first rendering parameter and the second rendering parameter, to obtain a rendered image.

S804: The server selects the depth map based on an intermediate rendering result generated in a rendering processing process.

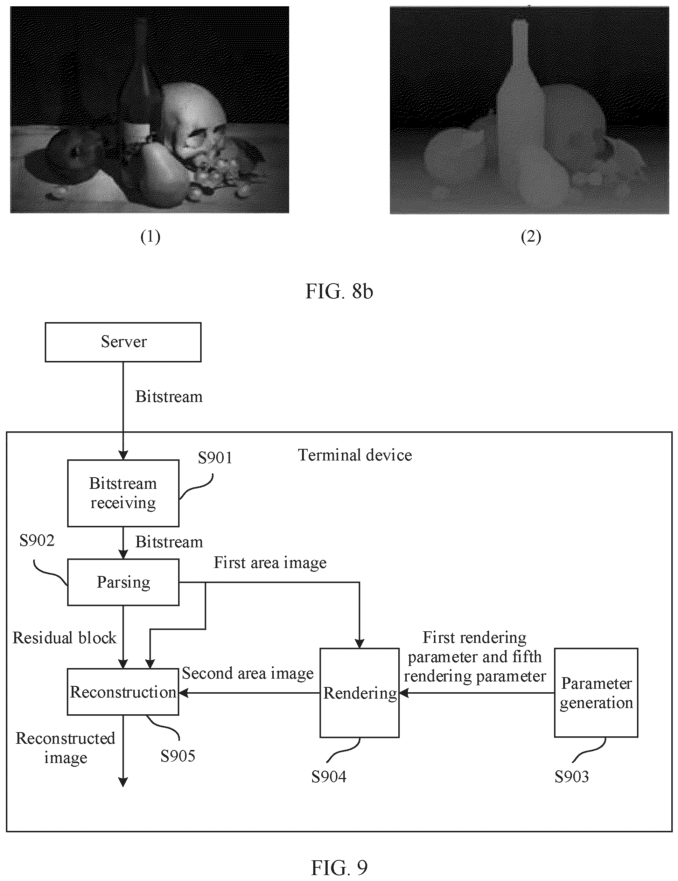

For example, the depth map may include depth information of each sample in the rendered image. As shown in FIG. 8b, (1) in FIG. 8b is the rendered image, and (2) in FIG. 8b is the depth map.

S805: The server encodes the rendered image based on the depth map, to obtain encoded data of a residual block, and encode the encoded data of the residual block into a bitstream, where the depth map acts on one type of the following processing in the encoding process: partitioning.

For example, the depth map may act on partitioning in the encoding process, to encode the rendered image. For example, the rendered image may be partitioned based on the depth map, to obtain a to-be-encoded block; the to-be-encoded block may be predicted, to obtain a predicted block; a residual block between the to-be-encoded block and the predicted block is determined; and the residual block may be encoded, and encoded data of the residual block is encoded into the bitstream. The specific encoding process is described in a subsequent embodiment.

S806: The server encodes a first area image in the depth map, and encodes encoded data of the first area image into the bitstream.

For example, after generating the complete depth map, the server may encode the first area image in the depth map.

In a possible manner, the first area image may be images of areas corresponding to four corners in the depth map. An image size of an area corresponding to each corner may be set based on a requirement. This is not limited in this application.

In a possible manner, the first area image may be an image of an area in the depth map other than the areas corresponding to the four corners.

It should be understood that the first area image may alternatively be an image of another area in the depth map. This is not limited in this application.

For example, in the embodiment in FIG. 8a, bitstream description information may further include a first indication identifier and/or a second indication identifier. The second indication identifier may indicate a type and a subtype of a second intermediate rendering result, and the first indication identifier may indicate whether the bitstream includes encoded data of the second intermediate rendering result.

For example, a type of the depth map is a first image type, and the first image type may include a subtype B1 and a subtype B2. For example, a subtype corresponding to the areas corresponding to the four corners in the depth map is the subtype B1, and a subtype corresponding to the area in the depth map other than the areas corresponding to the four corners is the subtype B2. In the embodiment in FIG. 8a, the second indication identifier may indicate a type and a subtype of the first area image. In this way, the terminal device can learn of a specific type and a specific area of a to-be-generated image, namely, a second area image (the second area image is an image other than the first area image in the depth map).

For example, the first image type is represented by M, the subtype B1 is represented by 1, and the subtype B2 is represented by 2. Therefore, when the first area image is the images of the areas corresponding to the four corners in the depth map, the second indication identifier may be M1.

The following describes a decoding process corresponding to the encoding process in FIG. 8a by using an example in which the bitstream description information of the bitstream includes the first indication identifier and the second indication identifier.

FIG. 9 is a diagram of an example decoding process. FIG. 9 shows a decoding process corresponding to FIG. 8a. In the embodiment in FIG. 9, the terminal device performs rendering processing based on a locally generated rendering parameter, and generates an image of a part of areas in the depth map. In the embodiment in FIG. 9, an example in which one frame of image is decoded is used for description.

S901: The terminal device receives the bitstream.

S902: The terminal device parses the bitstream, to obtain a parsing result, where the parsing result includes a residual block corresponding to a current frame and a first area image corresponding to the current frame.

For example, for S901 and S902, refer to the descriptions of S501 and S502. Details are not described herein again.

S903: The terminal device generates a first rendering parameter and a fifth rendering parameter.

For example, for S903, refer to the descriptions of S703. Details are not described herein again.

S904: The terminal device performs rendering processing based on the first rendering parameter and the fifth rendering parameter, and generates a second area image based on the first area image in a rendering processing process.

For example, the terminal device may input the first rendering parameter and the fifth rendering parameter into a graphics rendering engine (for example, V-Ray, Unreal, or Unity), and the graphics rendering engine performs rendering processing on the three-dimensional scene. In the rendering processing process, the second area image is generated based on the first area image.

For example, the parsing result may further include the first indication identifier and the second indication identifier. When determining, based on the first indication identifier, that the bitstream includes the encoded data of the second intermediate rendering result, the terminal device may determine the type and the subtype of the second intermediate rendering result based on the second indication identifier. Next, a third intermediate rendering result of another subtype is generated based on the type and the subtype of the second intermediate rendering result in the rendering processing process. The another subtype is a subtype in subtypes included in the type of the second intermediate rendering result other than the subtype corresponding to the second intermediate rendering result.

For example, in the embodiment in FIG. 9, when the terminal device determines, based on the second indication identifier, that the type of the first area image is the first image type and the subtype is the subtype B1, that is, the first area image sent by the server is the images of the areas corresponding to the four corners in the depth map, in the rendering processing process, the graphics rendering engine of the terminal device does not need to generate the images of the areas corresponding to the four corners, but only needs to generate the image of the area other than the areas corresponding to the four corners (in this case, the another subtype is the subtype B2). That is, the second area image is the image of the area other than the areas corresponding to the four corners.

For example, in the embodiment in FIG. 9, when the terminal device determines, based on the second indication identifier, that the type of the first area image is the first image type and the subtype is the subtype B2, that is, the first area image sent by the server is the image of the area in the depth map other than the areas corresponding to the four corners, in the rendering processing process, the graphics rendering engine of the terminal device does not need to generate the image of the area other than the areas corresponding to the four corners, but only needs to generate the images of the areas corresponding to the four corners (in this case, the another subtype is the subtype B1). That is, the second area image is the images of the areas corresponding to the four corners.

S905: The terminal device performs reconstruction based on the first area image, the second area image, and the residual block, to obtain a reconstructed image of the current frame, where the first intermediate rendering result acts on one type of the following processing in a reconstruction process: prediction.

For example, the first area image and the second area image may be combined based on pixels, to obtain a depth map, and then, reconstruction is performed based on the depth map and the residual block, to obtain the reconstructed image of the current frame.

For example, partitioning information of the current frame needs to be used for prediction in the reconstruction process. Therefore, the partitioning information may be determined based on the depth map; a to-be-decoded block in the current frame is predicted based on the partitioning information and a reconstructed block obtained through filtering, to obtain a predicted block; and reconstruction may be performed based on the residual block and the predicted block corresponding to the to-be-decoded block, to obtain the reconstructed image corresponding to the current frame. The specific decoding process is described subsequently.

Because the depth map generated by the server is more accurate than the depth map generated by the terminal device, the depth map obtained by the terminal device can be more accurate, thereby improving accuracy of the partitioning information and improving image quality of the reconstructed image. In addition, the terminal device only needs to generate an image of a part of areas in the depth map, so that computational power of the terminal device can be saved, and decoding efficiency can be improved. In addition, in a case of same quality, compared with the conventional technology in which the server sends all CGMVs, the server in this application sends only an image of a part of areas in the depth map, so that bit rate overheads of a data stream transmitted by the server to the terminal device can be reduced.

The following describes an encoding process and a decoding process by using an example in which a first intermediate rendering result is a render ID and a server sends a part of the render ID to a terminal device. The render ID is a two-dimensional image, and the render ID may be referred to as a render ID map.

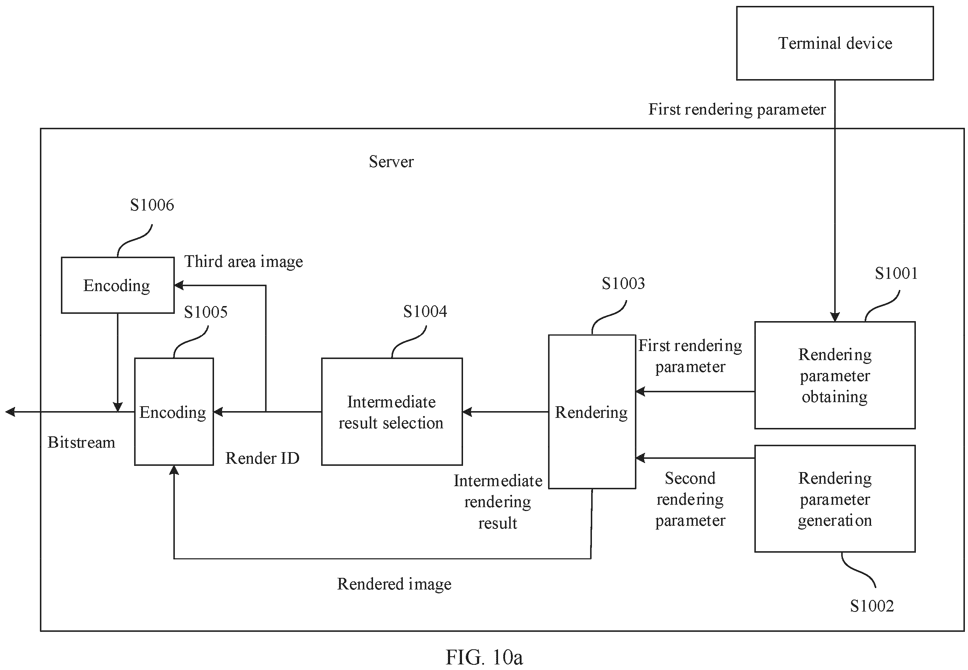

FIG. 10a is a diagram of an example encoding process. In the embodiment in FIG. 10a, the server sends an image of a part of areas in the render ID map to the terminal device, and does not send a second rendering parameter to the terminal device. In the embodiment in FIG. 10a, an example in which one frame of rendered image is encoded is used for description.

S1001: The server receives a first rendering parameter sent by the terminal device.

S1002: The server generates the second rendering parameter.

For example, for S1001 and S1002, refer to the descriptions of S601 and S602. Details are not described herein again.

S1003: The server performs rendering processing on a three-dimensional scene based on the first rendering parameter and the second rendering parameter, to obtain a rendered image.

S1004: The server selects the render ID map based on an intermediate rendering result generated in a rendering processing process.

For example, a process in which a graphics rendering engine generates the render ID map may be as follows: In the three-dimensional scene, a point located on a triangle mesh between a near plane and a far plane of a viewing frustum (a camera origin is used as a vertex) may be projected onto a screen. For example, in a process of projecting the triangle mesh onto the screen, an object ID corresponding to a vertex on each triangle mesh (that is, located between the near plane and the far plane of the viewing frustum) that can be observed by a camera may be queried. Next, for each vertex, a prestored coloring table is queried based on an object ID corresponding to the vertex, to determine a color of the vertex, namely, a color of a sample corresponding to the vertex on the screen. A color of a sample corresponding to another point on the triangle mesh on the screen may be determined through interpolation based on the color of the vertex on the triangle mesh. In this way, the render ID map may be obtained.

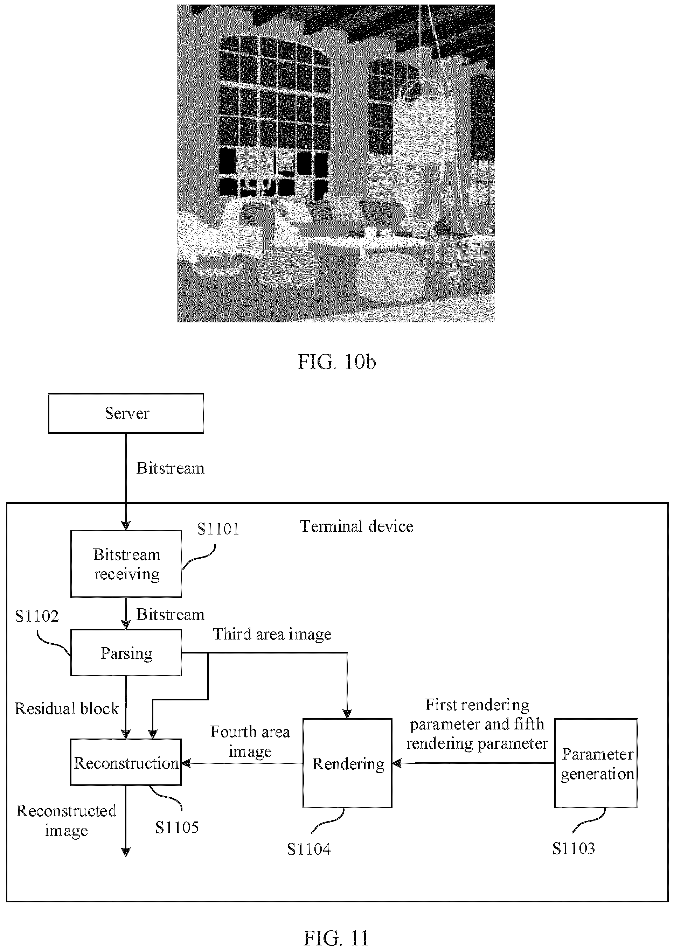

FIG. 10b shows an example render ID map. In FIG. 10b, different grayscale areas correspond to different colors.

S1005: The server encodes the rendered image based on the render ID, to obtain encoded data of a residual block, and encode the encoded data of the residual block into a bitstream, where the render ID acts on one type of the following processing in the encoding process: filtering.

For example, the render ID map may act on filtering in the encoding process, to filter a reconstructed block. Subsequently, a to-be-encoded block in the rendered image may be predicted by using the reconstructed block obtained through filtering as a reference, to obtain a predicted block. Next, a residual block between the to-be-encoded block and the predicted block may be determined. Then, the residual block may be encoded, and encoded data of the residual block is encoded into the bitstream. The specific encoding process is described in a subsequent embodiment.

S1006: The server encodes a third area image in the render ID, and encodes encoded data of the third area image into the bitstream.

For example, after generating the complete render ID map, the server may encode the third area image in the render ID map.

In a possible manner, the third area image may be images of areas corresponding to four corners in the render ID map. An image size of an area corresponding to each corner may be set based on a requirement. This is not limited in this application.

In a possible manner, the third area image may be an image of an area other than the areas corresponding to the four corners in the render ID map.

It should be understood that the third area image may alternatively be an image of another area in the render ID map. This is not limited in this application.

For example, in the embodiment in FIG. 10a, bitstream description information may further include a first indication identifier and/or a second indication identifier. The second indication identifier may indicate a type and a subtype of a second intermediate rendering result, and the first indication identifier may indicate whether the bitstream includes encoded data of the second intermediate rendering result.

For example, a type of the render ID map may be a second image type, and the second image type may include a subtype B3 and a subtype B4. For example, a subtype corresponding to the areas corresponding to the four corners in the render ID map is the subtype B3, and a subtype corresponding to an area other than the areas corresponding to the four corners in the render ID map is the subtype B4. In the embodiment in FIG. 10a, the second indication identifier may indicate a type and a subtype of the third area image. In this way, the terminal device can learn of a specific type and a specific area of a to-be-generated image, namely, a fourth area image (the fourth area image is an image other than the third area image in the render ID map).

For example, the second image type is represented by K, the subtype B3 is represented by 1, and the subtype B4 is represented by 2. In this case, when the third area image is the images of the areas corresponding to the four corners in the render ID map, the second indication identifier may be K1.

The following describes a decoding process corresponding to the encoding process in FIG. 10a by using an example in which the bitstream description information of the bitstream includes the first indication identifier and the second indication identifier.

FIG. 11 is a diagram of an example decoding process. FIG. 11 shows a decoding process corresponding to FIG. 10a. In the embodiment in FIG. 11, the terminal device performs rendering processing based on a locally generated rendering parameter, and generates an image of a part of areas in the render ID map. In the embodiment in FIG. 11, an example in which one frame of image is decoded is used for description.

S1101: The terminal device receives the bitstream.

S1102: The terminal device parses the bitstream, to obtain a parsing result, where the parsing result includes a residual block corresponding to a current frame and a third area image corresponding to the current frame.

For example, for S1101 and S1102, refer to the descriptions of S501 and S502. Details are not described herein again.

S1103: The terminal device generates a first rendering parameter and a fifth rendering parameter.

For example, for S1103, refer to the descriptions of S703. Details are not described herein again.

S1104: The terminal device performs rendering processing based on the first rendering parameter and the fifth rendering parameter, and generates a fourth area image based on the third area image in a rendering processing process.

For example, the terminal device may input the first rendering parameter and the fifth rendering parameter into a graphics rendering engine (for example, V-Ray, Unreal, or Unity), and the graphics rendering engine performs rendering processing on the three-dimensional scene. In the rendering processing process, the fourth area image is generated based on the third area image.

For example, the parsing result may further include the first indication identifier and the second indication identifier. When determining, based on the first indication identifier, that the bitstream includes the encoded data of the second intermediate rendering result, the terminal device may determine the type and the subtype of the second intermediate rendering result based on the second indication identifier. Next, a third intermediate rendering result of another subtype is generated based on the type and the subtype of the second intermediate rendering result in the rendering processing process. The another subtype is a subtype in subtypes included in the type of the second intermediate rendering result other than the subtype corresponding to the second intermediate rendering result.

For example, in the embodiment in FIG. 11, when the terminal device determines, based on the second indication identifier, that the type of the third area image is the second image type and the subtype is the subtype B3, that is, the third area image sent by the server is the images of the areas corresponding to the four corners in the render ID map, in the rendering processing process, the graphics rendering engine of the terminal device does not need to generate the images of the areas corresponding to the four corners, but only needs to generate the image of the area other than the areas corresponding to the four corners (in this case, the another subtype is the subtype B4). That is, the fourth area image is the image of the area other than the areas corresponding to the four corners.

For example, in the embodiment in FIG. 11, when the terminal device determines, based on the second indication identifier, that the type of the third area image is the second image type and the subtype is the subtype B4, that is, the third area image sent by the server is the image of the area other than the areas corresponding to the four corners in the render ID map, in the rendering processing process, the graphics rendering engine of the terminal device does not need to generate the image of the area other than the areas corresponding to the four corners, but only needs to generate the images of the areas corresponding to the four corners (in this case, the another subtype is the subtype B3). That is, the fourth area image is the images of the areas corresponding to the four corners.

S1105: The terminal device performs reconstruction based on the third area image, the fourth area image, and the residual block, to obtain a reconstructed image of the current frame, where the first intermediate rendering result acts on one type of the following processing in a reconstruction process: filtering.

For example, the third area image and the fourth area image may be combined based on pixels, to obtain the render ID map. For example, the render ID map may act on filtering in the decoding process, to filter the reconstructed block. Subsequently, a to-be-decoded block of the current frame may be predicted by using the reconstructed block obtained through filtering as a reference, to obtain a predicted block. Next, reconstruction is performed based on the predicted block and the residual block, to obtain the reconstructed image of the current frame. The specific encoding process is described in a subsequent embodiment.

Because the render ID map generated by the server is more accurate than the render ID map generated by the terminal device, the render ID map obtained by the terminal device can be more accurate, so that quality of the reconstructed block for reference can be improved, and image quality of the reconstructed image can be improved. In addition, the terminal device only needs to generate an image of a part of areas in the render ID map, so that computational power of the terminal device can be saved, and decoding efficiency can be improved. In addition, in a case of same quality, compared with the conventional technology in which the server sends all CGMVs, the server in this application sends only an image of a part of areas in the render ID map, so that bit rate overheads of a data stream transmitted by the server to the terminal device can be reduced.

It should be noted that when a bitstream description parameter of the bitstream does not include the first indication identifier, the terminal device in the embodiments in FIG. 7, FIG. 9, and FIG. 11 may determine, based on pre-agreed information, whether the bitstream includes the encoded data of the second intermediate rendering result. When the bitstream description parameter of the bitstream does not include the second indication identifier, the terminal device in the embodiments in FIG. 7, FIG. 9, and FIG. 11 may determine the type and the subtype of the second intermediate rendering result in the parsing result based on the pre-agreed information.

It should be understood that when the first intermediate rendering result is other information, encoding and decoding may also be performed with reference to the foregoing manner, and whether to send all/some of the other information to the terminal device may be determined based on a data amount of the other information. This is not limited in this application.

For example, when the first rendering parameter generated by the terminal device is a part of parameters required for rendering processing by the graphics rendering engine, the server may generate the second rendering parameter. Because a rendering parameter generated by the server is more accurate than a rendering parameter generated by the terminal device, the server may send a part or all of the second rendering parameter to the terminal device. In this way, a first intermediate rendering result generated by the terminal device can be more accurate, thereby improving image quality of an image obtained through decoding based on the first intermediate rendering result.

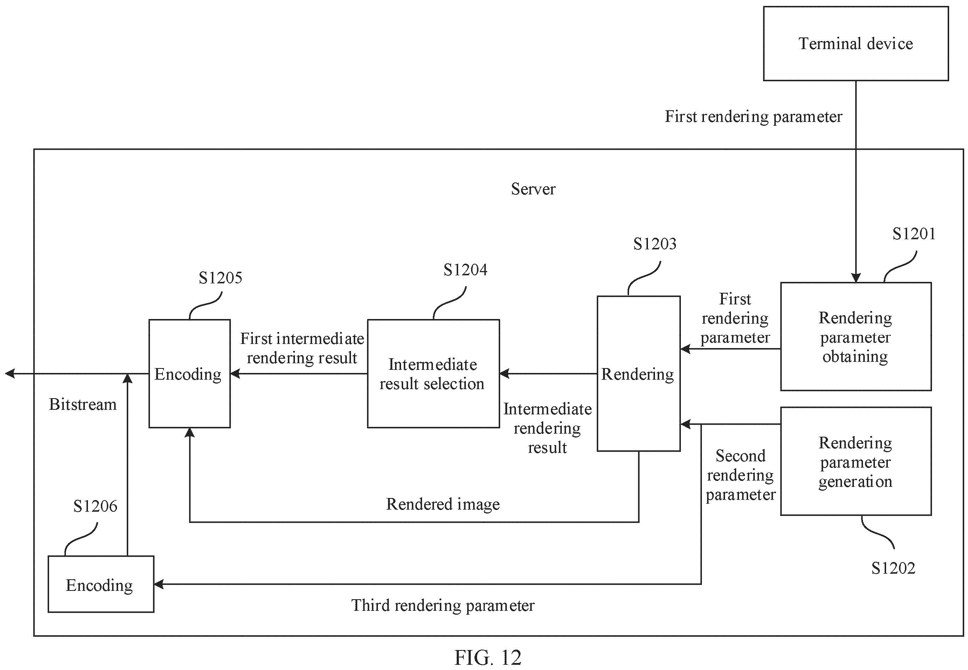

FIG. 12 is a diagram of an example encoding process. In the embodiment in FIG. 12, a server does not send a first intermediate rendering result to a terminal device, but sends a third rendering parameter (a part or all of a second rendering parameter) to the terminal device. In the embodiment in FIG. 12, an example in which one frame of rendered image is encoded is used for description.

S1201: The server receives a first rendering parameter sent by the terminal device.

For example, the first rendering parameter may include a camera parameter. For example, the camera parameter may include but is not limited to parameters such as a view projection matrix, a camera dynamic range, a focal length, an aperture size, and a depth of field.

S1202: The server generates the second rendering parameter.

For example, the server may load scene geometry information (for example, vertex coordinates of a triangle mesh), material data (for example, a material map and a material generation function), texture data (for example, a texture map), motion information of a dynamic object, and the like that are prestored in a storage (for example, a hard disk or a memory), to obtain the second rendering parameter.

For example, the motion information of the dynamic object may include motion information (for example, a motion track) of a rigid dynamic object and/or motion information (for example, a motion track) of a non-rigid dynamic object.

S1203: The server performs rendering processing on a three-dimensional scene based on the first rendering parameter and the second rendering parameter, to obtain a rendered image.

S1204: The server selects the first intermediate rendering result based on an intermediate rendering result generated in a rendering processing process.

For example, in the embodiment in FIG. 12, the first intermediate rendering result may be a CGMV, depth information, or a render ID.

S1205: The server encodes the rendered image based on the first intermediate rendering result, to obtain encoded data of a residual block, and encode the encoded data of the residual block into a bitstream, where the first intermediate rendering result acts on at least one type of the following processing in the encoding process: partitioning, prediction, or filtering.

For example, for S1203 to S1205, refer to the descriptions in the foregoing embodiments. Details are not described herein again.

S1206: The server encodes the third rendering parameter into the bitstream.

For example, the third rendering parameter may be a part of parameters in the second rendering parameter, or may be all parameters in the second rendering parameter. This is not limited in this application. Compared with encoding all of the second rendering parameter into the bitstream, encoding a part of the second rendering parameter into the bitstream can further reduce bit rate overheads of a data stream transmitted by the server to the terminal device.

For example, because a data amount of the third rendering parameter is small, the server may encode the third rendering parameter, encode encoded data of the third rendering parameter into the bitstream, and send the bitstream to the server; or the server may not encode the third rendering parameter, but directly encode the third rendering parameter into the bitstream. This is not limited in this application.

In a possible manner, the third rendering parameter may include motion information of a rigid motion object and motion information of a non-rigid dynamic object. In other words, the motion information of the rigid motion object and the motion information of the non-rigid dynamic object are encoded into the bitstream.

In a possible manner, the third rendering parameter may include motion information of a rigid motion object. In other words, the motion information of the rigid motion object is encoded into the bitstream. In this way, compared with encoding the motion information of the rigid motion object and the motion information of the non-rigid dynamic object into the bitstream, encoding the motion information of the rigid motion object into the bitstream can further reduce bit rate overheads of the data stream transmitted by the server to the terminal device.

In a possible manner, the third rendering parameter may include motion information of a non-rigid motion object. In other words, the motion information of the non-rigid dynamic object is encoded into the bitstream. In this way, compared with encoding the motion information of the rigid motion object and the motion information of the non-rigid dynamic object into the bitstream, encoding the motion information of the non-rigid dynamic object into the bitstream can further reduce bit rate overheads of the data stream transmitted by the server to the terminal device.

In this way, the data amount of the third rendering parameter is far less than a data amount of the second intermediate rendering result. Compared with transmitting the second intermediate rendering result, transmitting the third rendering parameter can further reduce a bit rate.

For example, in the embodiment in FIG. 12, bitstream description information may include at least one of the following: a first indication identifier, a second indication identifier, a third indication identifier, or a fourth indication identifier. The first indication identifier indicates whether the bitstream includes encoded data of the first intermediate rendering result, the second indication identifier may indicate a type of the first intermediate rendering result, the third indication identifier may indicate whether the bitstream includes the third rendering parameter, and the fourth indication identifier may indicate a type of the third rendering parameter.

For example, in the embodiment in FIG. 12, the first indication identifier may be second preset information, indicating that the bitstream does not include the encoded data of the first intermediate rendering result.

For example, the first intermediate rendering result corresponds to one or more types. When the first intermediate rendering result corresponds to one type, the type of the first intermediate rendering result may be used as a value of the second indication identifier, and is encoded into the bitstream. When the first intermediate rendering result corresponds to a plurality of types, a type of the first intermediate rendering result that acts on the encoding process may be used as a value of the second indication identifier, and is encoded into the bitstream.

For example, when the third indication identifier is first preset information (for example, 1), it indicates that the bitstream includes the third rendering parameter; or when the third indication identifier is second preset information (for example, 0), it indicates that the bitstream does not include the third rendering parameter.

For example, a parameter included in the second rendering parameter may correspond to a plurality of types. For example, a type corresponding to the motion information of the rigid dynamic object is a type C1, and a type corresponding to the motion information of the non-rigid dynamic object is a type C2. The type of the third rendering parameter encoded into the bitstream may be used as a value of the fourth indication identifier, and is encoded into the bitstream.

The following describes a decoding process corresponding to the encoding process in FIG. 12 by using an example in which the bitstream description information of the bitstream includes the first indication identifier, the second indication identifier, the third indication identifier, and the fourth indication identifier.

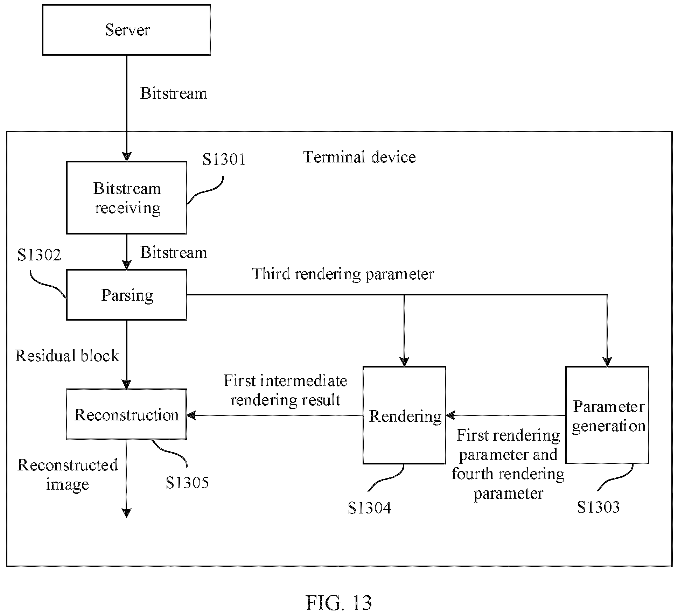

FIG. 13 is a diagram of an example decoding process. FIG. 13 shows a decoding process corresponding to FIG. 12. In the embodiment in FIG. 13, the terminal device performs rendering processing based on a locally generated first rendering parameter and the third rendering parameter received from the server, and generates a first intermediate rendering result. The third rendering parameter includes a part of the second rendering parameter. In the embodiment in FIG. 13, an example in which one frame of image is decoded is used for description.

S1301: The terminal device receives the bitstream.

S1302: The terminal device parses the bitstream, to obtain a parsing result, where the parsing result includes a residual block corresponding to a current frame and a third rendering parameter corresponding to the current frame.

S1303: The terminal device generates a first rendering parameter and a fourth rendering parameter.

For example, the first rendering parameter includes a camera parameter. For example, the camera parameter may include but is not limited to parameters such as a view projection matrix, a camera dynamic range, a focal length, an aperture size, and a depth of field.

For example, the terminal device may obtain the third indication identifier from the bitstream through parsing. When determining, based on the third indication identifier, that the bitstream includes the third rendering parameter, the terminal device may determine the type of the third rendering parameter based on the fourth indication identifier; and then, generate the fourth rendering parameter based on the type of the third rendering parameter.

For example, when the server encodes the part of the second rendering parameter into the bitstream, that is, when the third rendering parameter includes a part of parameters in the second rendering parameter, the fourth indication identifier includes a type of the part of the second rendering parameter. In this case, the terminal device may generate the fourth rendering parameter based on the type of the third rendering parameter. The fourth rendering parameter is a parameter other than the third rendering parameter in the second rendering parameter.

For example, if the type of the third rendering parameter is the type C1, that is, the third rendering parameter is the motion information of the rigid dynamic object, the fourth rendering parameter generated by the terminal device may include, for example, scene geometry information (for example, vertex coordinates of a triangle mesh), material data (for example, a material map and a material generation function), texture data (for example, a texture map), and the motion information of the non-rigid dynamic object.

For example, if the type of the third rendering parameter is the type C2, that is, the third rendering parameter is the motion information of the non-rigid dynamic object, the fourth rendering parameter generated by the terminal device may include, for example, scene geometry information (for example, vertex coordinates of a triangle mesh), material data (for example, a material map and a material generation function), texture data (for example, a texture map), and the motion information of the rigid dynamic object.

For example, if the type of the third rendering parameter includes the type C1 and the type C2, that is, the third rendering parameter includes the motion information of the rigid dynamic object and the motion information of the non-rigid dynamic object, the fourth rendering parameter generated by the terminal device may include, for example, scene geometry information (for example, vertex coordinates of a triangle mesh), material data (for example, a material map and a material generation function), and texture data (for example, a texture map).

S1304: The terminal device performs rendering processing on the three-dimensional scene based on the first rendering parameter, the third rendering parameter, and the fourth rendering parameter, and generates the first intermediate rendering result in a rendering processing process.

For example, when the third rendering parameter includes a part of parameters in the second rendering parameter, rendering processing is performed on the three-dimensional scene based on the first rendering parameter, the third rendering parameter, and the fourth rendering parameter.

It should be understood that when the server encodes all of the second rendering parameter into the bitstream, that is, when the third rendering parameter includes all parameters in the second rendering parameter, the fourth indication identifier includes a type of all of the second rendering parameter, and the terminal device may obtain all of the second rendering parameter through decoding. In this case, the terminal device does not need to generate the fourth rendering parameter, and then performs rendering processing on the three-dimensional scene based on the first rendering parameter and the third rendering parameter.

For example, the first intermediate rendering result may be a CGMV, depth information, or a render ID.

For example, when determining, based on the first indication identifier obtained from the bitstream through parsing, that the bitstream does not include the encoded data of the first intermediate rendering result, in the rendering processing process, the terminal device may generate the first intermediate rendering result of the corresponding type based on the second indication identifier obtained through parsing.

S1305: The terminal device performs reconstruction based on the first intermediate rendering result and the residual block, to obtain a reconstructed image of the current frame, where the first intermediate rendering result acts on at least one type of the following processing in a reconstruction process: prediction or filtering.

For example, for S1305, refer to the foregoing descriptions. Details are not described herein again.

It should be noted that when the bitstream description parameter of the bitstream does not include the first indication identifier, the terminal device in the embodiment in FIG. 13 may determine, based on pre-agreed information, whether the bitstream includes the encoded data of the first intermediate rendering result. When the bitstream description parameter of the bitstream does not include the second indication identifier, the terminal device in the embodiment in FIG. 13 may determine the type of the first intermediate rendering result based on pre-agreed information. When the bitstream description parameter of the bitstream does not include the third indication identifier, the terminal device in the embodiment in FIG. 13 may determine, based on pre-agreed information, whether the bitstream includes the third rendering parameter. When the bitstream description parameter of the bitstream does not include the fourth indication identifier, the terminal device in the embodiment in FIG. 13 may determine the type of the third rendering parameter in the parsing result based on pre-agreed information.

For example, a data amount of the second rendering parameter is small (several/dozens of KB). Therefore, even if the server further sends all or a part of the second rendering parameter to the terminal device in addition to the second intermediate rendering result, the bit rate overheads of the data stream transmitted by the server to the terminal device are also less than bit rate overheads of a data stream transmitted by a server to a terminal device in the conventional technology, and computational power of the terminal device can be further saved.

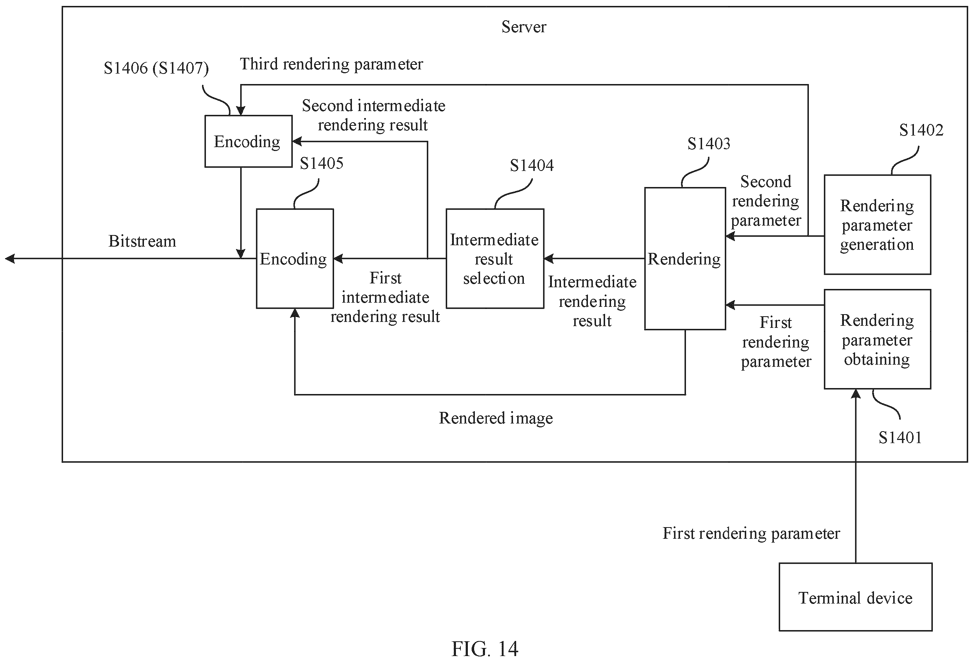

FIG. 14 is a diagram of an example encoding process. In the embodiment in FIG. 14, a server sends a second intermediate rendering result and a third rendering parameter to a terminal device. In the embodiment in FIG. 14, an example in which one frame of rendered image is encoded is used for description.

S1401: The server receives a first rendering parameter sent by the terminal device.

For example, the first rendering parameter may include a camera parameter and motion information of a non-rigid dynamic object (for example, a skeletal node of a moving role). For example, the camera parameter may include but is not limited to parameters such as a view projection matrix, a camera dynamic range, a focal length, an aperture size, and a depth of field.

S1402: The server generates a second rendering parameter.

For example, the server may load scene geometry information (for example, vertex coordinates of a triangle mesh), material data (for example, a material map and a material generation function), texture data (for example, a texture map), motion information of a dynamic object, and the like that are prestored in a storage (for example, a hard disk or a memory), to obtain the second rendering parameter.

For example, the motion information of the dynamic object may include motion information (for example, a motion track) of a rigid dynamic object and/or motion information (for example, a motion track) of a non-rigid dynamic object (namely, a non-rigid dynamic object other than the moving role).

S1403: The server performs rendering processing on a three-dimensional scene based on the first rendering parameter and the second rendering parameter, to obtain a rendered image.

S1404: The server selects a first intermediate rendering result based on an intermediate rendering result generated in a rendering processing process.

For example, in the embodiment in FIG. 14, the first intermediate rendering result may be a CGMV, depth information, or a render ID.

S1405: The server encodes the rendered image based on the first intermediate rendering result, to obtain encoded data of a residual block, and encode the encoded data of the residual block into a bitstream, where the first intermediate rendering result acts on at least one type of the following processing in the encoding process: partitioning, prediction, or filtering.

S1406: The server encodes the second intermediate rendering result, and encodes encoded data of the second intermediate rendering result into the bitstream, where the second intermediate rendering result is a part of the first intermediate rendering result.

S1407: The server encodes the third rendering parameter into the bitstream.

For example, for S1405 to S1407, refer to the descriptions in the foregoing embodiments. Details are not described herein again.

For example, in the embodiment in FIG. 14, bitstream description information may include at least one of the following: a first indication identifier, a second indication identifier, a third indication identifier, and a fourth indication identifier. The first indication identifier indicates whether the bitstream includes the encoded data of the second intermediate rendering result, the second indication identifier may indicate a type and a subtype of the second intermediate rendering result, the third indication identifier indicates whether the bitstream includes the third rendering parameter, and the fourth indication identifier indicates a type of the third rendering parameter.

The following describes a decoding process corresponding to the encoding process in FIG. 14 by using an example in which the bitstream description information of the bitstream includes the first indication identifier, the second indication identifier, the third indication identifier, and the fourth indication identifier.

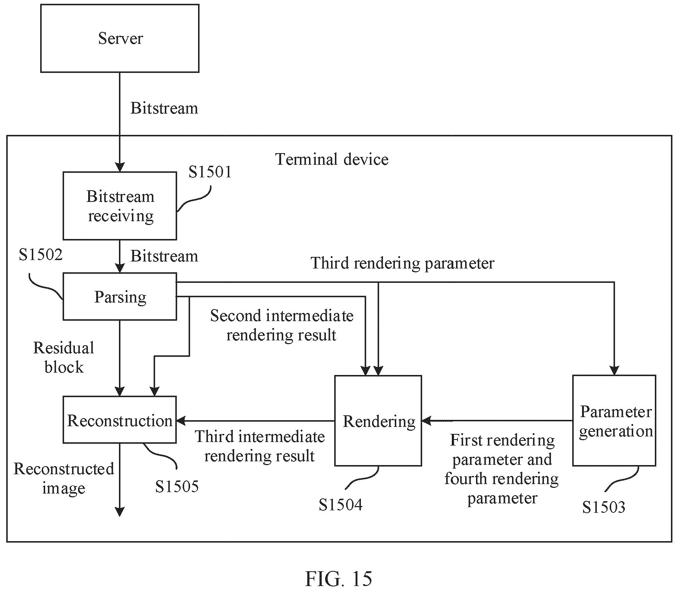

FIG. 15 is a diagram of an example decoding process. FIG. 15 shows a decoding process corresponding to FIG. 14. In the embodiment in FIG. 15, the terminal device performs rendering processing based on a locally generated first rendering parameter and the third rendering parameter received from the server, and generates a third intermediate rendering result. The third rendering parameter includes a part of the second rendering parameter. In the embodiment in FIG. 15, an example in which one frame of image is decoded is used for description.

S1501: The terminal device receives the bitstream.

S1502: The terminal device parses the bitstream, to obtain a parsing result, where the parsing result includes a residual block corresponding to a current frame, a second intermediate rendering result corresponding to the current frame, and a third rendering parameter corresponding to the current frame.

S1503: The terminal device generates the first rendering parameter and a fourth rendering parameter.

For example, the first rendering parameter includes the camera parameter and the motion information of the non-rigid dynamic object (for example, the skeletal node of the moving role). For example, the camera parameter may include but is not limited to parameters such as a view projection matrix, a camera dynamic range, a focal length, an aperture size, and a depth of field.

S1504: The terminal device performs rendering processing on the three-dimensional scene based on the first rendering parameter, the third rendering parameter, and the fourth rendering parameter, and generates the third intermediate rendering result based on the second intermediate rendering result in a rendering processing process.

S1505: The terminal device performs reconstruction based on the first intermediate rendering result and the residual block, to obtain a reconstructed image of the current frame, where the first intermediate rendering result acts on at least one type of the following processing in a reconstruction process: prediction or filtering.

For example, for S1504 and S1505, refer to the foregoing descriptions. Details are not described herein again.

It should be noted that when the bitstream description parameter of the bitstream does not include the first indication identifier, the terminal device in the embodiment in FIG. 15 may determine, based on pre-agreed information, whether the bitstream includes the encoded data of the second intermediate rendering result. When the bitstream description parameter of the bitstream does not include the second indication identifier, the terminal device in the embodiment in FIG. 15 may determine the type and the subtype of the second intermediate rendering result based on pre-agreed information. When the bitstream description parameter of the bitstream does not include the third indication identifier, the terminal device in the embodiment in FIG. 15 may determine, based on pre-agreed information, whether the bitstream includes the third rendering parameter. When the bitstream description parameter of the bitstream does not include the fourth indication identifier, the terminal device in the embodiment in FIG. 15 may determine the type of the third rendering parameter in the parsing result based on pre-agreed information.

It should be understood that, in the embodiments in FIG. 2, FIG. 4, FIG. 6a, FIG. 8a, FIG. 10a, FIG. 12, and FIG. 14, the server may not obtain the first rendering parameter from the terminal device, but generate the first rendering parameter. A type of a parameter included in the first rendering parameter generated by the server is the same as a type of a parameter included in the first rendering parameter generated by the terminal device, and precision of the parameter included in the first rendering parameter generated by the server is greater than or equal to precision of the parameter included in the first rendering parameter generated by the terminal device. For example, the server and the terminal device may generate the first rendering parameter based on a pre-agreement.

The following describes a process in which first intermediate rendering data acts on at least one type of the following processing: partitioning, prediction, or filtering in an encoding process of a rendered image and a corresponding decoding process.

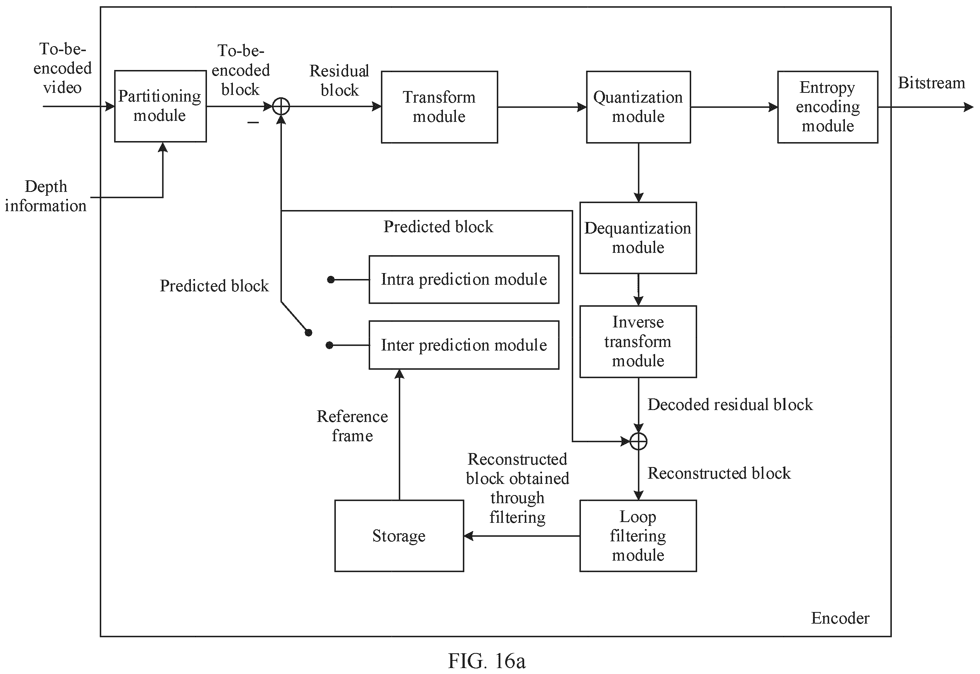

FIG. 16a is a diagram of an example encoding framework. As shown in FIG. 16a, for example, an encoder may include a partitioning module, an intra prediction module, an inter prediction module, a transform module, a quantization module, an entropy encoding module, a dequantization module, an inverse transform module, a loop filtering module, and a storage. The partitioning module in FIG. 16a is obtained after a partitioning module of an existing encoder is optimized. It should be understood that the encoder in this application may further include the partitioning module of the existing encoder, or the partitioning module of the encoder in this application may include all or some functions of the partitioning module of the existing encoder.

The following describes, based on FIG. 16a, a process in which depth information acts on partitioning of the partitioning module, to encode a rendered image.

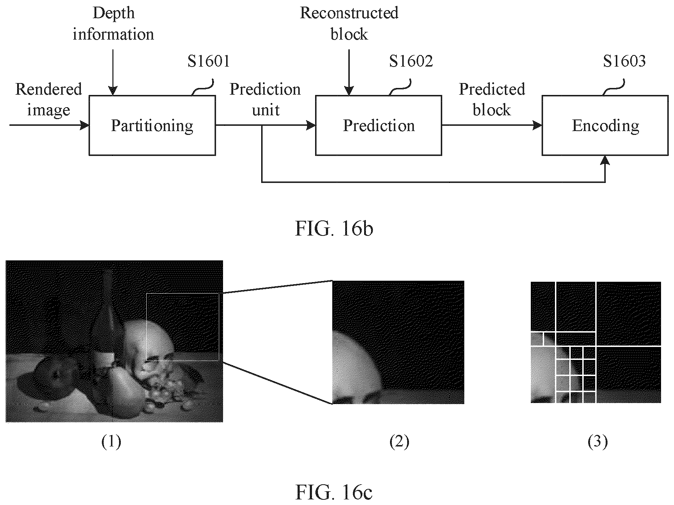

FIG. 16b is a diagram of an example encoding process. FIG. 16b shows an encoding process based on FIG. 16a. Steps in FIG. 16b are performed by the encoder. In the embodiment in FIG. 16b, a first intermediate rendering result is depth information.

S1601: Partition the rendered image based on the depth information, to obtain a plurality of prediction units.

For example, a to-be-encoded video and the depth information may be input into the partitioning module. The partitioning module partitions each frame of rendered image in the to-be-encoded video based on the depth information, to obtain a plurality of prediction units. The following provides descriptions by using an example in which the partitioning module partitions one frame of rendered image.

For example, the partitioning module may first partition the rendered image into a plurality of coding tree units (Coding Tree Units, CTU) based on a preset parameter of the encoder. As shown in FIG. 16c, (1) in FIG. 16c is the rendered image, and (2) in FIG. 16c is one CTU. Then, for one of the plurality of CTUs, the CTU may be partitioned into a plurality of coding units (Coding Unit, CU) based on a preset partitioning rule. As shown in (3) in FIG. 16c, one CTU in (2) in FIG. 16c is partitioned into a plurality of CUs, and one box corresponds to one CU.

It should be understood that, in a possible case, each CTU is partitioned into a plurality of CUs. In a possible case, some CTUs are not partitioned into CUs, and each of the other CTUs is partitioned into a plurality of CUs, which is specifically determined based on the preset partitioning rule and image content of the CTU. For details, refer to descriptions of partitioning a CTU into CUs in the conventional technology. Details are not described herein again.

An example in which one of the plurality of CUs is partitioned into a plurality of prediction units (Prediction Unit, PU) is used for description. For example, the CU may be partitioned based on the depth information, to obtain a plurality of PUs. For example, computer graphics edge (Computer Graphic Edge, CGE) information may be determined based on the depth information. Then, the CU may be partitioned into a plurality of PUs based on the CGE information. The CGE information may include object edge information of an object in the rendered image, so that the CU can be properly partitioned into a plurality of PUs based on the CGE information, and better prediction effect is obtained subsequently (for example, a predicted block obtained through subsequent prediction is more accurate). When the prediction effect is better, a determined residual block is smaller, a bit rate can be reduced, and image reconstruction quality can be further improved. In addition, a calculation amount of obtaining a PU through partitioning based on the CGE information is less than that in a manner of obtaining a PU through partitioning in the conventional technology.

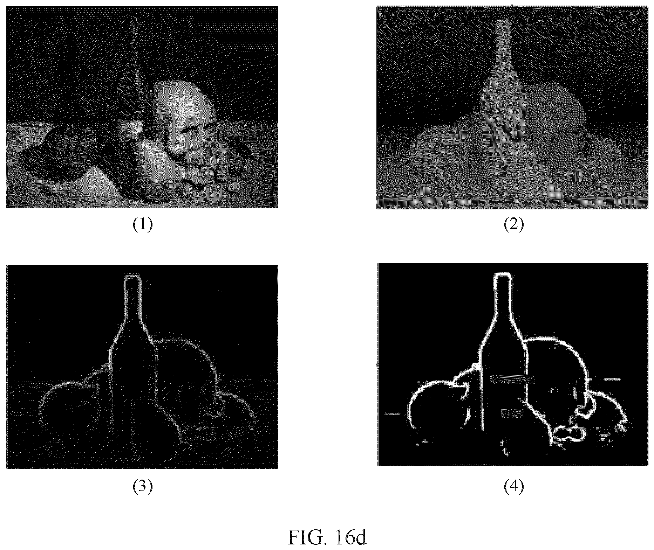

FIG. 16d is a diagram of a CGE information generation process. (1) in FIG. 16d is the rendered image, and (2) in FIG. 16d is the depth information (which may also be referred to as a depth map). Specifically, the depth information may be filtered (for example, sobel filtering), to obtain an edge depth map, as shown in (3) in FIG. 16d. Then, a clustering operation may be performed on an edge grayscale image (for example, a clustering operation is performed in Otsu's method), to obtain an edge binary map, as shown in (4) FIG. 16d. Then, the CGE information may be generated based on the edge binary map. In a possible manner, the edge binary map may be used as the CGE information. In other words, (4) in FIG. 16d is the CGE information. As shown in (4) in FIG. 16d, it can be learned that edge information including white samples in (4) in FIG. 16d is edge information (namely, the object edge information) of the object (for example, a bottle or a fruit) in the rendered image.

It should be understood that, in this application, the depth information may be filtered based on another filtering algorithm. This is not limited in this application. In addition, in this application, the clustering operation may alternatively be performed on the edge grayscale image based on another clustering algorithm. This is not limited in this application.

In a possible manner, an object edge line in the CU may be determined based on the CGE information; a plurality of candidate partitioning paths are searched for from the object edge line; and a target partitioning path is selected from the plurality of candidate partitioning paths, and the CU is partitioned into a plurality of PUs based on the target partitioning path.

Specifically, if the CGE information is an edge binary map, a target area matching the CU may be determined from the edge binary map based on area edge coordinates of the CU in the rendered image. Area edge coordinates of the target area in the edge binary map are the same as the area edge coordinates of the CU in the rendered image. Next, all paths (it should be understood that the path does not occupy a pixel, and is a boundary line of two pixels), namely, the candidate partitioning paths, that can partition the target area into two sub-areas can be searched for from an object edge line (namely, an area whose pixel value is 1) of the target area in a depth traversal method. Then, a shortest candidate partitioning path may be selected from the candidate partitioning paths as the target partitioning path. Then, the CU is partitioned into a plurality of PUs based on the target partitioning path.

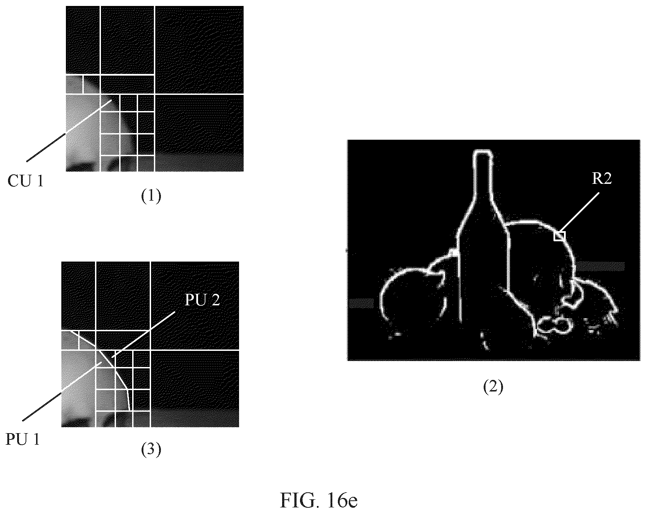

FIG. 16e is a diagram of a process of obtaining a PU through partitioning. (1) in FIG. 16e is one CTU, (2) in FIG. 16e is an edge binary map, and the CGE information is the edge binary map.

As shown in FIG. 16e, for one CU (for example, a CU 1) in the CTU, a target area matching the edge binary map (as shown in (2) in FIG. 16e) is R2. Area edge coordinates of R2 are the same as area edge coordinates of the CU 1. If a width of an object edge line (namely, a white area in R2) in the area R2 is four pixels, five candidate partitioning paths may be found. Then, a shortest candidate partitioning path may be selected from the five candidate partitioning paths as the target partitioning path. Then, the CU 1 is partitioned into two PUs. As shown in (3) in FIG. 16e, the CU 1 is partitioned into a PU 1 and a PU 2. By analogy, another CU in (1) in FIG. 16e may also be partitioned into a plurality of PUs with reference to this manner, as shown in (3) in FIG. 16e.

It should be understood that when there are a plurality of object edge lines in the target area, one CU may be partitioned into two or more PUs.

It should be understood that, in a possible case, each CU is partitioned into a plurality of PUs. In a possible case, some CUs are not partitioned into PUs, and each of the other CUs is partitioned into a plurality of PUs.

It should be understood that a prediction unit may be used as a to-be-encoded block, a CTU that is not partitioned into CUs may be used as a to-be-encoded block, and a CU that is not partitioned into PUs may be used as a to-be-encoded block.

S 1602: Predict the plurality of prediction units based on a reconstructed block, to obtain a plurality of predicted blocks, where the plurality of predicted blocks are in a one-to-one correspondence with the plurality of prediction units.

For example, when the rendered image is a key frame, for each of the plurality of PUs, the intra prediction module may perform intra prediction based on a reconstructed block corresponding to the rendered image, to determine a predicted block corresponding to the PU. In this way, a plurality of predicted blocks may be determined for the plurality of PUs, and the plurality of predicted blocks are in a one-to-one correspondence with the plurality of prediction units.

For example, when the rendered image is a non-key frame, a reference frame of the rendered image may be determined. For each of the plurality of PUs, an inter prediction module may perform inter prediction based on a reference frame (the reference frame includes a plurality of reconstructed blocks) corresponding to the rendered image, to determine a predicted block corresponding to the PU. In this way, a plurality of predicted blocks may be determined for the plurality of PUs, and the plurality of predicted blocks are in a one-to-one correspondence with the plurality of prediction units.

S1603: Encode a plurality of residual blocks between the plurality of predicted blocks and the plurality of prediction units, to obtain encoded data of the plurality of residual blocks, where the plurality of residual blocks are in a one-to-one correspondence with the plurality of prediction units.

For example, for each of the plurality of PUs, a residual operation may be performed on the PU and a corresponding predicted block, to obtain a residual block corresponding to the PU. In this way, a plurality of residual blocks may be obtained. Next, the plurality of residual blocks may be encoded, to obtain encoded data, and then the encoded data of the plurality of residual blocks is encoded into a bitstream.

As shown in FIG. 16a again, for example, for each residual block, the residual block is input into the transform module, and the transform module transforms the residual block, to obtain a transform result and output the transform result to the quantization module. Then, the quantization module may quantize the transform result, to obtain a quantization result, and output the quantization result to the entropy encoding module. Then, the entropy encoding module may perform entropy encoding on the quantization result, to obtain encoded data of the residual block, and encode the encoded data of the residual block into the bitstream.

For example, the quantization module may further output the quantization result to the dequantization module, and the dequantization module performs dequantization, to obtain the dequantization result, and output the dequantization result to the inverse transform module. Next, the inverse transform module performs inverse transform on the dequantization result, to obtain a decoded residual block. Then, the decoded residual block may be superimposed with the predicted block output by the intra prediction module, to obtain a reconstructed block. Subsequently, the reconstructed block is input into the loop filtering module, and the loop filtering module performs loop filtering on the reconstructed block, to obtain a reconstructed block obtained through filtering and output the reconstructed block obtained through filtering to the storage. (After obtaining the reconstructed block obtained through filtering, the loop filtering module may splice the reconstructed block obtained through filtering at a corresponding position of a to-be-reconstructed image; and after obtaining one frame of reconstructed image, the loop filtering module may output the reconstructed image to the storage for storage.)

It should be understood that, for the CTU and the CU, prediction may also be performed based on S 1602 to S16031, a residual block between the CTU and a corresponding predicted block is encoded, and a residual block between the CU and a corresponding predicted block is encoded. Details are not described herein again.

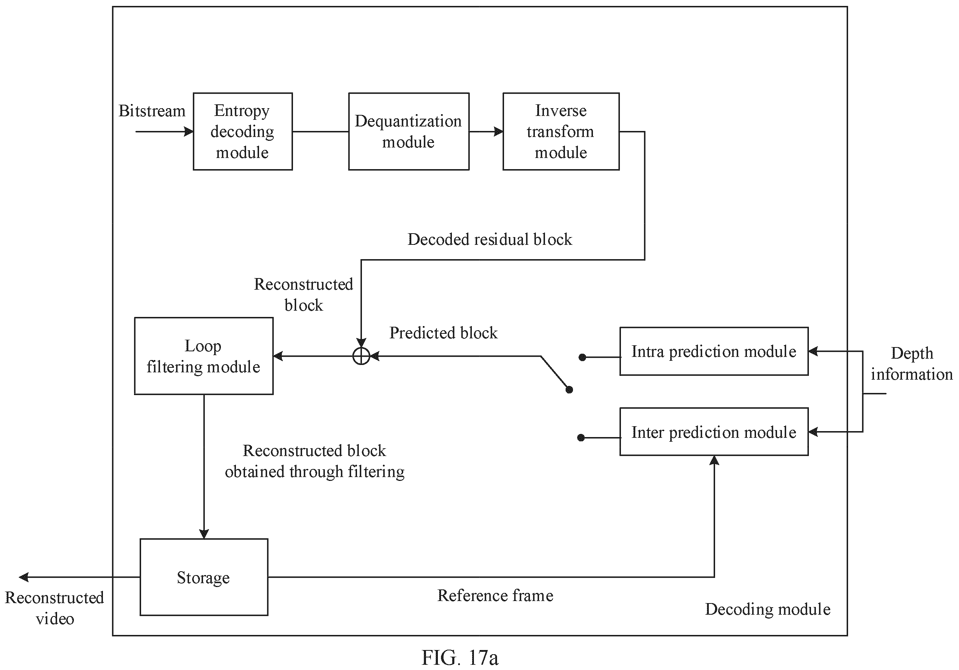

FIG. 17a is a diagram of an example decoding framework. As shown in FIG. 17a, for example, a decoder in this application may include an entropy decoding module, a dequantization module, an inverse transform module, an intra prediction module, an inter prediction module, a loop filtering module, and a storage. The inter prediction module in FIG. 17a is obtained after an inter prediction module of an existing encoder is optimized, and the intra prediction module is obtained after an intra prediction module of the existing encoder is optimized. It should be understood that the inter prediction module of the encoder in this application may further include all or some functions of the inter prediction module of the existing encoder, or the encoder in this application may further include the inter prediction module of the existing encoder; and the intra prediction module of the encoder in this application may further include all or some functions of the intra prediction module of the existing encoder, or the encoder in this application may further include the intra prediction module of the existing encoder.

The following describes, based on FIG. 17a, a process in which depth information acts on prediction of the inter prediction module/intra prediction module, to decode a rendered image.

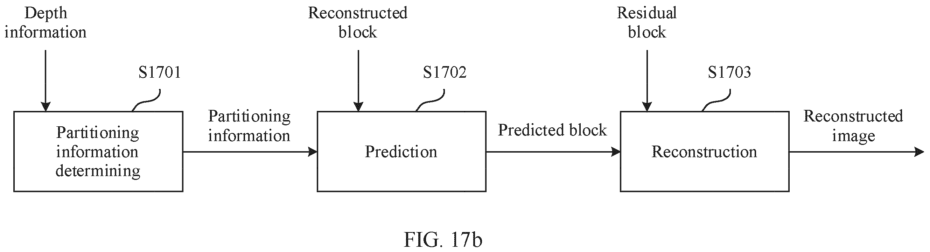

FIG. 17b is a diagram of an example decoding process. FIG. 17b is a decoding process based on FIG. 17a. Steps in FIG. 17b are performed by the decoder. In the embodiment in FIG. 17b, a first intermediate rendering result is depth information.

S1701: Determine partitioning information of a current frame based on the depth information.

For example, after receiving a bitstream, the terminal device may parse the bitstream, to obtain a parsing result. A parsing process may be as follows: Encoded data of a residual block is extracted from the bitstream, and then the encoded data of the residual block is input into the entropy decoding module. The entropy decoding module performs entropy decoding on the encoded data of the residual block, to obtain entropy decoded data. Next, the entropy decoded data may be input into the dequantization module, and the dequantization module performs dequantization, to obtain dequantized data, and input the dequantized data into the inverse transform module. Then, the inverse transform module performs inverse transform on the dequantized data, to obtain a residual block (namely, a decoded residual block shown in FIG. 17a) of the current frame.

It should be noted that bitstream description information used to describe the bitstream may be further extracted from the bitstream. In this case, operations such as entropy decoding, dequantization, and inverse transform do not need to be performed on the bitstream description information.

For example, when intra prediction is determined based on the bitstream description information obtained from the bitstream through parsing, the intra prediction module may perform intra prediction, to obtain a predicted block. That is, S1701 and S1702 are performed.

For example, when inter prediction is determined based on the bitstream description information obtained from the bitstream through parsing, the intra prediction module may perform inter prediction, to obtain a predicted block. That is, S1701 and S1702 are performed.

For example, a partitioning manner for a CTU and a partitioning manner for a CU may be determined; CGE information is determined based on depth information; a manner of partitioning the CU into a plurality of PUs (namely, a partitioning manner for a PU) is determined based on the CGE information; and the partitioning manner for a CTU, the partitioning manner for a CU, and the partitioning manner for a PU are determined as the partitioning information of the current frame. For the partitioning manner for a CTU, the partitioning manner for a CU, and the partitioning manner for a PU, refer to the descriptions of S1601. Details are not described herein again.

S1702: Predict, based on the partitioning information and a reconstructed block, a plurality of prediction units included in the current frame, to obtain a plurality of predicted blocks, where the plurality of predicted blocks are in a one-to-one correspondence with the plurality of prediction units, and a plurality of residual blocks are in a one-to-one correspondence with the plurality of prediction units.

For example, when intra prediction is determined based on the bitstream description information obtained from the bitstream through parsing, the intra prediction module may predict, based on the partitioning information and a reconstructed block corresponding to the rendered image, the plurality of prediction units included in the current frame, to obtain the plurality of predicted blocks.

For example, when inter prediction is determined based on the bitstream description information obtained from the bitstream through parsing, the inter prediction module may predict, based on the partitioning information and a reference frame (the reference frame includes a plurality of reconstructed blocks) corresponding to the rendered image, the plurality of prediction units included in the current frame, to obtain the plurality of predicted blocks.

The plurality of predicted blocks are in a one-to-one correspondence with the plurality of prediction units, and the plurality of residual blocks are in a one-to-one correspondence with the plurality of prediction units.

S1703: Determine a reconstructed image of the current frame based on the plurality of residual blocks and the plurality of predicted blocks.

For example, for each residual block, the residual block (the decoded residual block shown in FIG. 17a) may be superimposed with a predicted block corresponding to the residual block, to obtain a reconstructed block. Then, loop filtering may be performed on the reconstructed block, to obtain a reconstructed block obtained through filtering and output the reconstructed block obtained through filtering to the storage. (After obtaining the reconstructed block obtained through filtering, the loop filtering module may splice the reconstructed block obtained through filtering at a corresponding position of a to-be-reconstructed image; and after obtaining one frame of reconstructed image, the loop filtering module may output the reconstructed image to the storage for storage.) In this way, a plurality of frames of reconstructed images may form a reconstructed video.

It should be noted that, when the first intermediate rendering result is depth information, a server may not transmit a second intermediate rendering result, but transmit the CGE information. The CGE information may be encoded, and then encoded data of the CGE information is encoded into the bitstream. In this case, the terminal device may not need to generate the depth information. In this case, S1701 may be replaced with determining the partitioning information of the current frame based on the CGE information.

In the embodiment in FIG. 16b or FIG. 17b, the CGE information determined based on the depth information includes object edge information of an object in the rendered image. Partitioning into PUs is performed based on the CGE information, so that the CU can be properly partitioned into the plurality of PUs, and better prediction effect is obtained subsequently (for example, a predicted block obtained through subsequent prediction is more accurate). When the prediction effect is better, a determined residual block is smaller, a bit rate can be reduced, and image reconstruction quality can be further improved. In addition, a calculation amount of obtaining a PU through partitioning based on the CGE information is less than that in a manner of obtaining a PU through partitioning in the conventional technology.

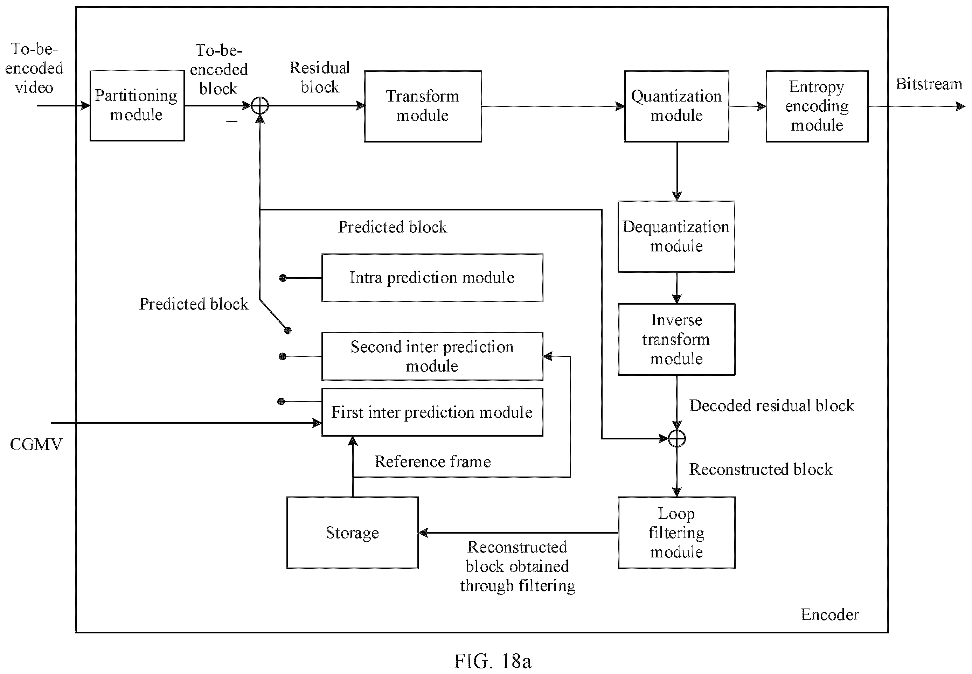

FIG. 18a is a diagram of an example encoding framework. As shown in FIG. 18a, for example, an encoder may include a partitioning module, an intra prediction module, a first inter prediction module, a second inter prediction module, a transform module, a quantization module, an entropy encoding module, a dequantization module, an inverse transform module, a loop filtering module, and a storage. The second inter prediction module in FIG. 18a is an inter prediction module of an existing encoder. In other words, the second inter prediction module includes all or some functions of the inter prediction module of the existing encoder. The first inter prediction module is an inter prediction module newly added relative to the existing encoder.

The following describes, based on FIG. 18a, a process in which a CGMV acts on prediction of the first inter prediction module, to encode a rendered image.

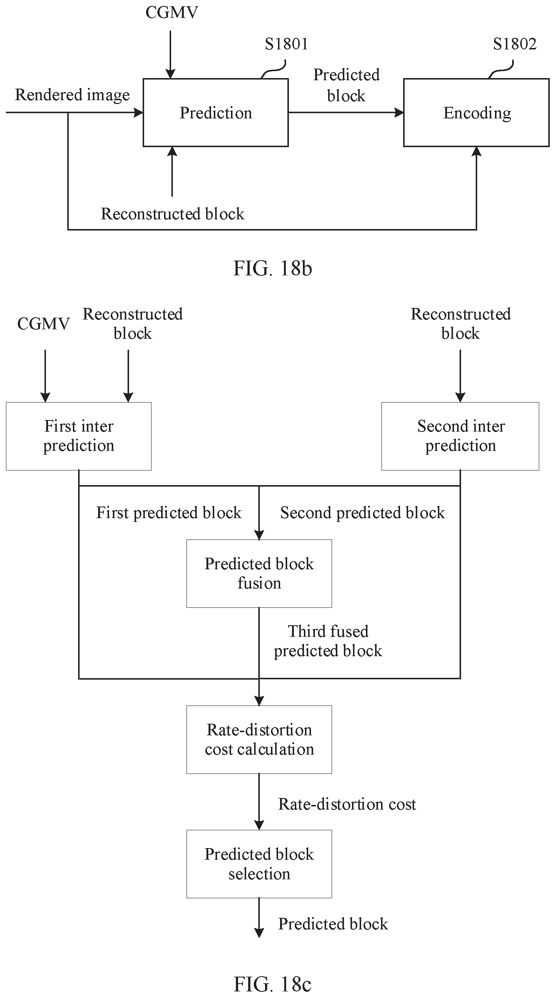

FIG. 18b is a diagram of an example encoding process. FIG. 18b shows an encoding process based on FIG. 18a. Steps in FIG. 18b are performed by the encoder. In a process in FIG. 18b, a first intermediate rendering result is a CGMV, and the encoding process in FIG. 18b is an inter encoding process.

S1801: Predict a to-be-encoded block in the rendered image based on a reconstructed block and the CGMV, to obtain a predicted block corresponding to the to-be-encoded block.

For example, a to-be-encoded video may be input into the partitioning module. The partitioning module partitions each frame of rendered image in the to-be-encoded video, to obtain a plurality of to-be-encoded blocks. Then, the first inter prediction module performs inter prediction based on the CGMV.

For example, a reference frame (the reference frame includes a plurality of reconstructed blocks) of the rendered image is determined from a reconstructed image; and then one or more reference blocks (the reference block may be a complete reconstructed block, or may be a part of the reconstructed block, or may include a plurality of reconstructed blocks) are selected from the reference frame of the rendered image based on area edge coordinates of the to-be-encoded block in the rendered image. A size of the reference block is the same as a size of the to-be-encoded block. For example, a target image block in the reference frame of the rendered image is determined based on area edge coordinates of the to-be-encoded block in the rendered image, and area edge coordinates of the target image block in the reference frame are the same as the area edge coordinates of the to-be-encoded block in the rendered image. Next, one or more other image blocks around the target image block are selected as reference blocks. For example, other image blocks around the target image block are selected as reference blocks.

Next, a predicted block matching the to-be-encoded block may be determined based on a reference block of the to-be-encoded block and a CGMV (a CGMV between the rendered image and the reference frame, including a CGMV of each sample in the reference frame). When there are a plurality of reference blocks of the to-be-encoded block, for a reference block, a CGMV (including the CGMV of each sample in the reference block) corresponding to the reference block may be selected from the CGMV between the rendered image and the reference frame based on sample coordinates of the reference block. Next, a predicted block is determined based on the reference block and the CGMV corresponding to the reference block.

For example, a sample of the reference block may be moved based on the CGMV corresponding to the reference block, to obtain a predicted pixel set. Next, the predicted block is generated based on the predicted pixel set and a pixel value of a sample of the reference block. Specifically, for a first sample in the predicted pixel set, if the first sample exceeds a boundary of the reference block, in a possible manner, luminance of the first sample may be set to a first preset value, and a chromatic value may be set to a second preset value. The first preset value may be set to, for example, 16 based on a requirement, and the second preset value may be set to, for example, 128 based on a requirement. This is not limited in this application. In a possible manner, a pixel value of the first sample may be set to an average pixel value of the reference block.

For example, if the first sample does not exceed the boundary of the reference block, a pixel value of a second sample corresponding to a position of the first sample in the reference block is obtained, and the pixel value of the second sample is used as the pixel value of the first sample.

In a possible manner, when the plurality of predicted blocks are determined, rate-distortion costs corresponding to the plurality of predicted blocks may be calculated, and a predicted block with a minimum rate-distortion cost is selected to perform S1802.

In a possible manner, when the plurality of predicted blocks are determined, the plurality of predicted blocks may be fused, to obtain a first fused predicted block. Next, rate-distortion costs corresponding to the plurality of predicted blocks and a rate-distortion cost of the first fused predicted block may be calculated, and a predicted block with a minimum rate-distortion cost is selected to perform S1802.

For example, the plurality of predicted blocks may be fused with reference to the following formula:

$$U = \left(\omega 1 * V1 + \omega 2 * V2, ..., + \omega n * Vn\right) / \left(\omega 1 + \omega 2, ..., + \omega n\right)$$

Herein, $V1$, $V2$, ..., $Vn$ is the predicted block, U is the first fused predicted block, and n is a quantity of predicted blocks. $\omega 1$, $\omega 2$,..., $\omega n$ are weights corresponding to all the predicted blocks, and may be specifically set based on a requirement. This is not limited in this application.

In a possible manner, based on S1801, the second inter prediction module may further perform conventional inter prediction (namely, inter prediction in the conventional technology) based on the reference frame of the rendered image, to obtain one or more predicted blocks. For ease of description, a predicted block determined based on the CGMV may be referred to as a first predicted block, and a predicted block determined in a conventional inter prediction manner may be referred to as a second predicted block.

In this case, in a possible manner, a predicted block with a minimum rate-distortion cost may be selected from the first predicted block and the second predicted block to perform S1802. In a possible manner, when there are a plurality of second predicted blocks, the second predicted blocks may be fused, to obtain a second fused predicted block. Next, a predicted block with a minimum rate-distortion cost is selected from the second predicted block, the second fused predicted block, the first predicted block, and the first fused predicted block to perform S1802. In a possible manner, the second predicted block and the first predicted block may be further fused, to obtain a third fused predicted block; and then, a predicted block with a minimum rate-distortion cost is selected from the first predicted block, the second predicted block, and the third fused predicted block to perform S1802, as shown in FIG. 18c. In FIG. 18c, the first inter prediction is performed by the first inter prediction module, and the second inter prediction is performed by the second inter prediction module.

In a possible manner, a predicted block with a minimum rate-distortion cost may be further selected from the first predicted block, the first fused predicted block, the second predicted block, the second fused predicted block, and the third fused predicted block to perform S1802. It should be understood that a manner of selecting a predicted block that is finally used to perform S1802 is not limited in this application.

S1802: Encode a residual block between the to-be-encoded block in the rendered image and a corresponding predicted block, to obtain encoded data of the residual block.

For example, for each of the plurality of to-be-encoded blocks, a residual operation may be performed on the to-be-encoded block and a corresponding residual block, to obtain a residual block corresponding to the to-be-encoded block. In this way, a plurality of residual blocks may be obtained. Next, the plurality of residual blocks may be encoded, to obtain encoded data, and then the encoded data of the plurality of residual blocks is encoded into a bitstream. For a specific process of encoding the residual block, refer to the descriptions of S1603. Details are not described herein again.

For example, the to-be-encoded block may be a PU.

For example, when the predicted block in S1802 is a predicted block determined based on the CGMV, a block identifier used to determine a reference block corresponding to the predicted block may be encoded into the bitstream. When the predicted block in S1802 is a predicted block determined in the conventional inter prediction method, a frame identifier of the reference frame and the motion vector between the predicted block and the to-be-encoded block may be encoded into the bitstream. Both a block identifier and the frame identifier may be referred to as bitstream description information.

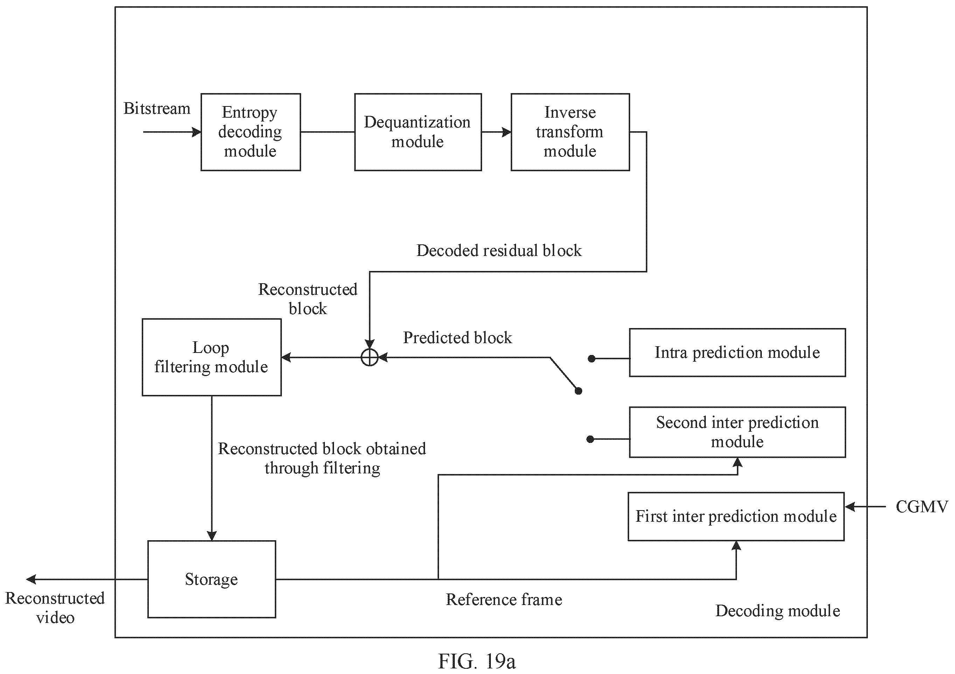

FIG. 19a is a diagram of an example decoding framework. As shown in FIG. 19a, for example, an encoder in this application may include an entropy decoding module, a dequantization module, an inverse transform module, an intra prediction module, a first inter prediction module, a second inter prediction module, a loop filtering module, and a storage. The second inter prediction module in FIG. 19a is an inter prediction module of an existing encoder. In other words, the second inter prediction module includes all or some functions of the inter prediction module of the existing encoder. The first inter prediction module is an inter prediction module newly added relative to the existing encoder.

The following describes, based on FIG. 19a, a process in which a CGMV acts on prediction of the inter prediction module, to decode a rendered image.

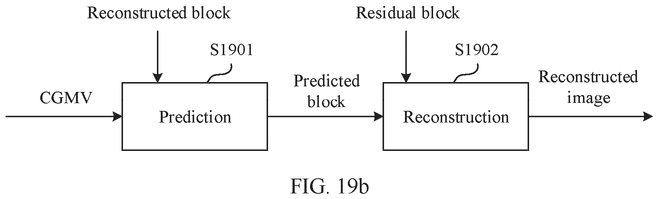

FIG. 19b is a diagram of an example decoding process. FIG. 19b is a decoding process based on FIG. 19a. Steps in FIG. 19b are performed by the decoder. In the embodiment in FIG. 19b, a first intermediate rendering result is CGMV.

S1901: Predict a to-be-decoded block in a current frame based on the CGMV and a reconstructed block, to obtain a predicted block corresponding to the to-be-decoded block.

For example, when a predicted block determined based on the CGMV in the encoding process is determined based on bitstream description information obtained from a bitstream through parsing, S1901 may be performed. For example, for the to-be-decoded block in the current frame, a reconstructed block matching the to-be-decoded block may be selected from a reference frame (the reference frame includes a plurality of reconstructed blocks) corresponding to the current frame based on a block identifier of the bitstream description information. Next, a predicted block corresponding to the to-be-decoded block is generated based on the CGMV and the reconstructed block matching the to-be-encoded block. For details, refer to the foregoing descriptions of S1801. Details are not described herein again.

For example, when a predicted block determined in a conventional inter prediction method in the encoding process is determined based on the bitstream description information obtained from the bitstream through parsing, the predicted block determined in the conventional inter prediction method may be used on a decoder side. Details are not described herein again.

S1902: Determine a reconstructed image of the current frame based on a residual block and the predicted block.

For example, for each residual block, the residual block (the decoded residual block shown in FIG. 19a) may be superimposed with a predicted block corresponding to the residual block, to obtain a reconstructed block. Then, loop filtering may be performed on the reconstructed block, to obtain a reconstructed block obtained through filtering and output the reconstructed block obtained through filtering to the storage. (After obtaining the reconstructed block obtained through filtering, the loop filtering module may splice the reconstructed block obtained through filtering at a corresponding position of a to-be-reconstructed image; and after obtaining one frame of reconstructed image, the loop filtering module may output the reconstructed image to the storage for storage.) In this way, a plurality of frames of reconstructed images may form a reconstructed video.

In the embodiments in FIG. 18b and FIG. 19b, the CGMV is generated through a graphic means, to avoid inaccurate motion estimation of the existing encoder. In addition, the CGMV is a pixel-level MV, and an MV generated by the existing encoder is an image block-level MV. The pixel-level MV can more accurately describe an edge of an object, to reduce a prediction error. Therefore, determining the predicted block based on the CGMV can reduce an error of the predicted block to some extent, improve accuracy of the predicted block, and further improve inter encoding and compression efficiency.

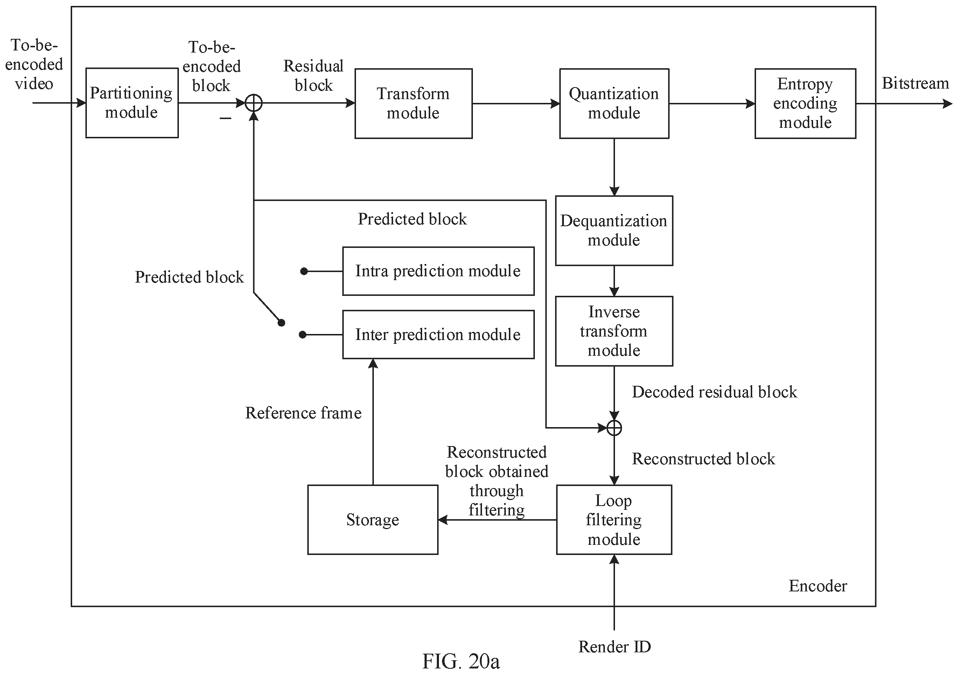

FIG. 20a is a diagram of an example encoding framework. As shown in FIG. 20a, for example, an encoder may include a partitioning module, an intra prediction module, an inter prediction module, a transform module, a quantization module, an entropy encoding module, a dequantization module, an inverse transform module, a loop filtering module, and a storage. The loop filtering module in FIG. 20a is obtained after a loop filtering module of an existing encoder is optimized. It should be understood that the loop filtering module of the encoder in this application may further include an existing loop filtering module, or the encoder in this application further includes all or some functions of the loop filtering module of the existing encoder. This is not limited in this application.

The following describes, based on FIG. 20a, a process in which a render ID acts on filtering of the loop filtering module, to encode a rendered image.

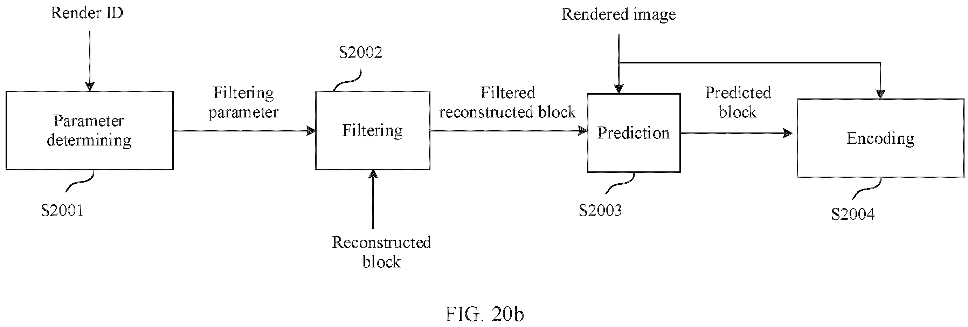

FIG. 20b is a diagram of an example encoding process. FIG. 20b shows an encoding process based on FIG. 20a. Steps in FIG. 20b are performed by the encoder. In the process in FIG. 20b, a first intermediate rendering result is a render ID.

As shown in FIG. 20a and with reference to the foregoing descriptions, a reconstruction process may be as follows: The quantization module outputs a quantization result to the dequantization module, and the dequantization module performs dequantization, to obtain a dequantization result, and output the dequantization result to the inverse transform module. Next, the inverse transform module performs inverse transform on the dequantization result, to obtain a decoded residual block. Then, the decoded residual block may be superimposed with a predicted block output by the intra prediction module, to obtain a reconstructed block. Subsequently, the reconstructed block is input into the loop filtering module, and the loop filtering module performs loop filtering on the reconstructed block, to obtain a reconstructed block obtained through filtering and output the reconstructed block obtained through filtering to the storage. (After obtaining the reconstructed block obtained through filtering, the loop filtering module may splice the reconstructed block obtained through filtering at a corresponding position of a to-be-reconstructed image; and after obtaining one frame of reconstructed image, the loop filtering module may output the reconstructed image to the storage for storage.) For example, for a process in which the loop filtering module filters a reconstructed block, refer to S2001 and S2002.

S2001: Determine a filtering parameter based on the render ID.

For example, for ease of description, a to-be-filtered reconstructed block (namely, the reconstructed block in FIG. 20a) may be referred to as a first reconstructed block, and a reconstructed block obtained through filtering adjacent to the first reconstructed block is referred to as a second reconstructed block.

For example, the loop filtering module may obtain a render ID map corresponding to the first reconstructed block. The render ID map corresponding to the first reconstructed block may be a render ID map of a to-be-reconstructed image corresponding to the first reconstructed block. Next, a first area corresponding to the first reconstructed block in the render ID map corresponding to the first reconstructed block may be determined. Both a position and a size of the first reconstructed block in the to-be-reconstructed image are the same as a position and a size of the first area in the render ID map. In addition, a second area corresponding to the second reconstructed block in the render ID map corresponding to the first reconstructed block is determined. Both a position and a size of the second reconstructed block in the to-be-reconstructed image are the same as a position and a size of the second area in the render ID map. Then, whether pixels on two sides of a boundary line between the first reconstructed block and the second reconstructed block belong to a same object is determined based on color values of pixels (namely, edge pixels) on two sides of a boundary line between the first area and the first area. Subsequently, the filtering parameter is determined based on a determining result. The filtering parameter may be boundary strength (boundary strength, BS).

For example, if the pixels on the two sides of the boundary line between the first reconstructed block and the second reconstructed block belong to a same object, and intra prediction is performed on one of the first reconstructed block and the second reconstructed block, the BS may be set to a first preset parameter value, for example, 2.

For example, if the pixels on the two sides of the boundary line between the first reconstructed block and the second reconstructed block belong to a same object, and intra prediction is performed on neither the first reconstructed block nor the second reconstructed block, when any one of the following conditions is met, the BS may be set to a second preset parameter value, for example, 1. It is assumed that a block including edge pixels located in the first reconstructed block in the pixels on the two sides of the boundary line between the first reconstructed block and the second reconstructed block is referred to as A1, and a block including edge pixels located in the second reconstructed block is referred to as A2.

(1) A transform coefficient of A1 is a non-zero transform coefficient or a transform coefficient of A2 is a non-zero transform coefficient, and A1 or A2 is a boundary of a TU (Transform Unit, transform unit). The transform coefficient is a coefficient used when the transform module performs transform.
(2) An absolute difference between motion vectors of A1 and A2 is greater than one integer pixel.
(3) A reference frame of an inter predicted block (namely, a predicted block determined through inter prediction) corresponding to A1 is different from a reference frame of an inter predicted block corresponding to A1.
(4) A quantity of motion vectors of A1 is different from a quantity of motion vectors of A2.

For example, if the pixels on the two sides of the boundary line between the first reconstructed block and the second reconstructed block do not belong to a same object, the BS may be set to a third preset parameter value, for example, 0.

Compared with the conventional technology, in this application, the render ID is introduced to determine whether a boundary pixel of a current to-be-filtered reconstructed block and a boundary pixel of an adjacent reconstructed block obtained through filtering belong to a same object; and then the filtering parameter is determined based on the determining result, so that strength of loop filtering can be more accurately estimated, and quality of the reconstructed block obtained through filtering can be improved.

S2002: Filter the reconstructed block based on the filtering parameter.

For example, when the BS is equal to the first preset parameter value, it indicates that block-like artifact is obvious. In this case, strong filtering may be performed on a luminance boundary (namely, luminance of a pixel included in A1) of the first reconstructed block, so that a pixel (namely, a pixel included in A1) on a side of a boundary line in the first reconstructed block is more blurred. A chrominance boundary (namely, chrominance of the pixel included in A1) of the first reconstructed block is filtered in a preset chrominance filtering manner.

For example, when the BS is equal to the second preset parameter value, the chrominance boundary of the first reconstructed block may not be filtered, and whether to filter a luminance boundary of the first reconstructed block may be determined in the following method: Texture information may be determined based on a pixel value change of A1 and a pixel value change of A2; and then a table lookup is performed based on QP (quality parameter, quantization parameter) values (namely, quantization parameters used when the quantization module performs quantization) of A1 and A2, to obtain a threshold $\beta$ through the table lookup. Filtering is performed if the texture information is less than $\beta$; or filtering is not performed if the texture information is not less than $\beta$. When the texture information is less than $\beta$, a table lookup is performed based on a transform status of the pixel values of A1 and A2 and the threshold $\beta$, to determine whether to perform weak filtering or strong filtering on the luminance boundary of the first reconstructed block. For details, refer to descriptions in the conventional technology. Details are not described herein again.

For example, when the BS is equal to the second preset parameter value, the first reconstructed block may not be filtered.

S2003: Predict a to-be-encoded block in the rendered image based on the reconstructed block, to obtain a predicted block corresponding to the to-be-encoded block, where the reconstructed block is a reconstructed block obtained through filtering based on the render ID.

For example, if inter prediction is performed on the rendered image, a reference frame (the reference frame includes a plurality of reconstructed blocks obtained through filtering based on the render ID) may be selected from the reconstructed image; and for the to-be-encoded block in the rendered image, inter prediction may be performed on the to-be-encoded block based on the reference frame, to select, from the reference frame, the predicted block matching the to-be-encoded block.

For example, if intra prediction is performed on the rendered image, for the to-be-encoded block in the rendered image, a reconstructed block (the reconstructed block is a reconstructed block obtained through filtering based on the render ID) matching the to-be-encoded block may be selected from a reconstructed block corresponding to the rendered image as the predicted block matching the to-be-encoded block.

S2004: Encode a residual block between the to-be-encoded block and the predicted block, to obtain encoded data of the residual block.

For example, for S2004, refer to the foregoing descriptions. Details are not described herein again.

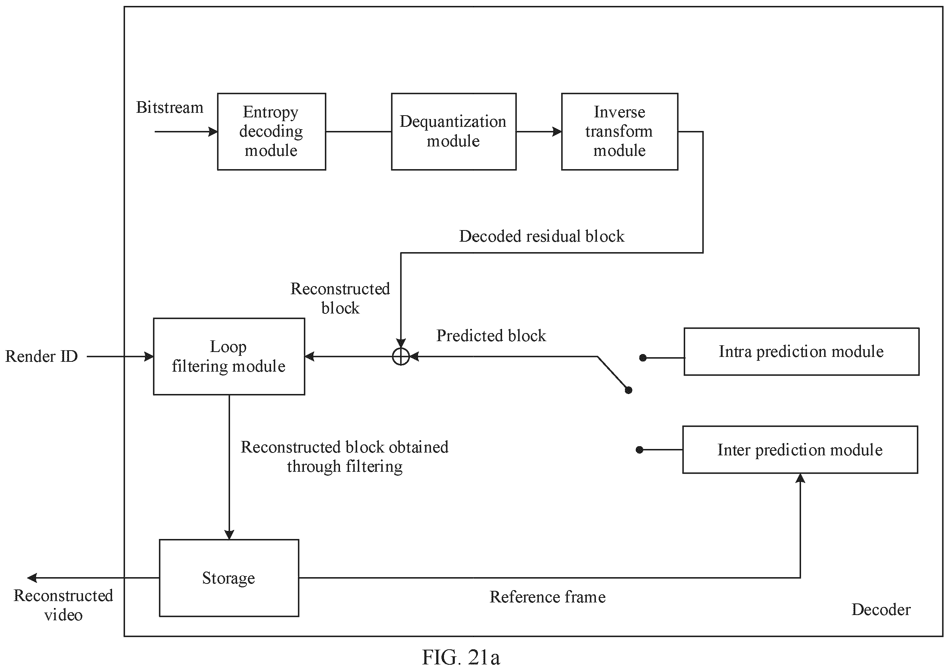

FIG. 21a is a diagram of an example decoding framework. FIG. 20a is a diagram of an example encoding framework. As shown in FIG. 21a, for example, an encoder may include an intra prediction module, an inter prediction module, an inverse transform module, a dequantization module, an entropy decoding module, a loop filtering module, and a storage. The loop filtering module in FIG. 21a is obtained after a loop filtering module of an existing encoder is optimized. It should be understood that the loop filtering module of the encoder in this application may further include all or some functions of an existing loop filtering module, or the encoder in this application may include the loop filtering module of the existing encoder.

The following describes, based on FIG. 21a, a process in which a render ID acts on filtering of the loop filtering module, to decode a rendered image.

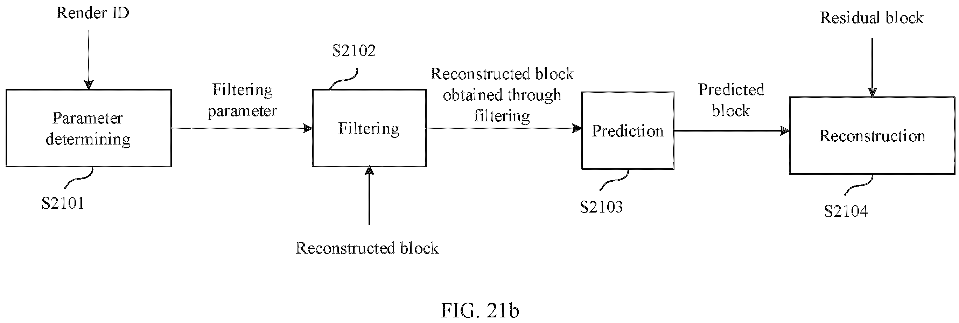

FIG. 21b is a diagram of an example decoding process. FIG. 21b is a decoding process based on FIG. 20a. Steps in FIG. 21b are performed by the decoder. In the embodiment in FIG. 21b, a first intermediate rendering result is a render ID.

S2101: Determine a filtering parameter based on the render ID.

S2102: Filter a reconstructed block based on the filtering parameter.

For example, for S2101 and S2102, refer to the descriptions of S2001 and S2002. Details are not described herein again.

S2103: Predict a to-be-decoded block in a current frame based on the reconstructed block, to obtain a predicted block corresponding to the to-be-decoded block.

For example, if inter prediction is performed on the current frame, a reference frame (including a plurality of reconstructed blocks obtained through filtering based on the render ID) of the current frame may be selected from a reconstructed image; and for the to-be-decoded block of the current frame, inter prediction may be performed on the to-be-decoded block based on the reference frame, to select the predicted block corresponding to the to-be-decoded block from the reference frame.

For example, if intra prediction is performed on the current frame, for the to-be-decoded block of the current frame, a reconstructed block matching the to-be-decoded block may be selected from a reconstructed block (reconstructed block obtained through filtering based on the render ID) corresponding to the current frame as the predicted block matching the to-be-decoded block.

S2104: Determine a reconstructed image of the current frame based on a residual block and the predicted block.

For example, for S2104, refer to the foregoing descriptions. Details are not described herein again.

Compared with the conventional technology, filtering the reconstructed block based on the first intermediate rendering result can reduce a blocking effect between reconstructed blocks, thereby improving quality of the reconstructed block. Therefore, a bit rate can be reduced by encoding the to-be-encoded block in the rendered image by using the reconstructed block obtained through filtering as a reference.

It should be understood that a first intermediate rendering result may act on any two items of processing in an encoding process: partitioning, prediction, or filtering. For example, if the first intermediate rendering result acts on partitioning and prediction in the encoding process, the embodiment in FIG. 16b and the embodiment in FIG. 18b may be combined in an encoding process of a rendered image, and FIG. 17b and FIG. 19b may be combined in a decoding process of the rendered image. For example, if the first intermediate rendering result acts on partitioning and filtering in the encoding process, the embodiment in FIG. 16b and the embodiment in FIG. 20b may be combined in an encoding process of a rendered image, and FIG. 17b and FIG. 21b may be combined in a decoding process of the rendered image. For example, if the first intermediate rendering result acts on filtering and prediction in the encoding process, the embodiment in FIG. 20b and the embodiment in FIG. 18b may be combined in an encoding process of a rendered image, and FIG. 21b and FIG. 19b may be combined in a decoding process of the rendered image.

It should be understood that the first intermediate rendering result may act on three items of processing in the encoding process: partitioning, prediction, and filtering. In this case, for an encoding process of a rendered image, the embodiment in FIG. 16b, the embodiment in FIG. 18b, and the embodiment in FIG. 20b may be combined; and for a decoding process of the rendered image, the embodiments of FIG. 17b, FIG. 19b, and FIG. 21b may be combined.

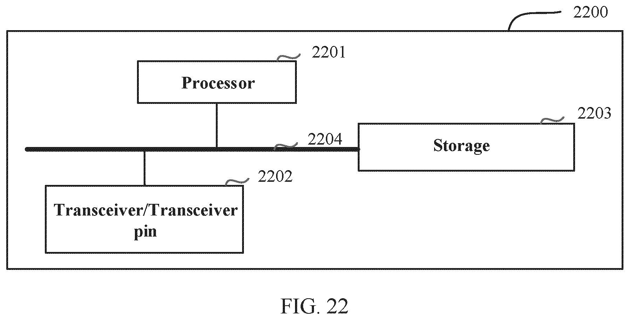

In an example, FIG. 22 is a schematic block diagram of an apparatus 2200 according to an embodiment of this application. The apparatus 2200 may include a processor 2201 and a transceiver/transceiver pin 2202, and optionally further includes a storage 2203.

Components of the apparatus 2200 are coupled together through a bus 2204. In addition to a data bus, the bus 2204 further includes a power bus, a control bus, and a status signal bus. However, for clear description, various types of buses in the figure are referred to as the bus 2204.

Optionally, the storage 2203 may be configured to store instructions in the foregoing method embodiments. The processor 2201 may be configured to: execute the instructions in the storage 2203, control a receiving pin to receive a signal, and control a sending pin to send a signal.

The apparatus 2200 may be the electronic device or a chip of the electronic device in the foregoing method embodiments.

All related content of the steps in the foregoing method embodiments may be cited in function descriptions of the corresponding functional modules. Details are not described herein again.

An embodiment further provides a computer-readable storage medium. The computer-readable storage medium stores computer instructions. When the computer instructions are run on an electronic device, the electronic device is enabled to perform the foregoing related method steps, to implement the encoding and decoding method in the foregoing embodiments.

An embodiment further provides a computer program product. When the computer program product is run on a computer, the computer is enabled to perform the foregoing related steps, to implement the encoding and decoding method in the foregoing embodiments.

In addition, an embodiment of this application further provides an apparatus. The apparatus may be specifically a chip, a component, or a module, and the apparatus may include a processor and a storage that are connected. The storage is configured to store computer-executable instructions. When the apparatus runs, the processor may execute the computer-executable instructions stored in the storage, so that the chip performs the encoding and decoding method in the foregoing method embodiments.

The electronic device, the computer-readable storage medium, the computer program product, or the chip provided in embodiments is configured to perform the corresponding method provided above. Therefore, for beneficial effects that can be achieved, refer to the beneficial effects in the corresponding method provided above. Details are not described herein.

Based on the descriptions about the foregoing implementations, a person skilled in the art may understand that, for a purpose of convenient and brief description, division into the foregoing functional modules is used as an example for illustration. In actual application, the foregoing functions may be allocated to different functional modules and implemented based on requirements. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

Any content in embodiments of this application and any content in a same embodiment can be freely combined. Any combination of the foregoing content falls within the scope of this application.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes various media that can store program code, such as a USB flash drive, a removable hard disk drive, a read-only memory (read-only memory, ROM), a random access memory (random access memory, RAM), a magnetic disk, or an optical disc.

The foregoing describes embodiments of this application with reference to the accompanying drawings. However, this application is not limited to the foregoing specific implementations. The foregoing specific implementations are merely examples instead of limitations. Inspired by this application, a person of ordinary skill in the art may further make modifications without departing from the purposes of this application and the protection scope of the claims, and all the modifications shall fall within the protection of this application.

Methods or algorithm steps described in combination with the content disclosed in this embodiment of this application may be implemented by hardware, or may be implemented by a processor by executing a software instruction. The software instruction may include a corresponding software module. The software module may be stored in a random access memory (Random Access Memory, RAM), a flash memory, a read only memory (Read Only Memory, ROM), an erasable programmable read only memory (Erasable Programmable ROM, EPROM), an electrically erasable programmable read only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium. The communication medium includes any medium that enables a computer program to be transmitted from one place to another. The storage medium may be any available medium accessible to a general-purpose or a dedicated computer.

The foregoing describes embodiments of this application with reference to the accompanying drawings. However, this application is not limited to the foregoing specific implementations. The foregoing specific implementations are merely examples instead of limitations. Inspired by this application, a person of ordinary skill in the art may further make modifications without departing from the purposes of this application and the protection scope of the claims, and all the modifications shall fall within the protection of this application.

**Claims**

1. A device-cloud collaboration system, wherein the device-cloud collaboration system comprises a server and a terminal device, the server comprises a first rendering module, an encoder, and a first communication module, and the terminal device comprises a second communication module, a second rendering module, and a decoder;

   the first rendering module is configured to: perform rendering processing on a three-dimensional scene based on a rendering parameter, to obtain a rendered image, wherein the rendering parameter comprises a first rendering parameter obtained from the terminal device; and select a first intermediate rendering result based on an intermediate rendering result generated in the rendering processing process;
   the encoder is configured to encode the rendered image based on the first intermediate rendering result, to obtain encoded data of a residual block, and encode the encoded data of the residual block into a bitstream, wherein the residual block is obtained by performing a residual operation on a to-be-encoded block in the rendered image and a corresponding predicted block, the predicted block is obtained by predicting the to-be-encoded block, the first intermediate rendering result acts on at least one type of the following processing in the encoding process: partitioning, prediction, or filtering, and the bitstream does not comprise encoded data of the first intermediate rendering result;
   the first communication module is configured to send the bitstream;
   the second communication module is configured to receive the bitstream;
   the decoder is configured to parse the bitstream, to obtain a parsing result, wherein the parsing result comprises a residual block corresponding to a current frame;
   the second rendering module is configured to: perform rendering processing on the three-dimensional scene based on a rendering parameter corresponding to the current frame, and generate a first intermediate rendering result in the rendering processing process, wherein the rendering parameter corresponding to the current frame comprises a first rendering parameter generated by the terminal device; and
   the decoder is further configured to perform reconstruction based on the first intermediate rendering result generated by the second rendering module and the residual block corresponding to the current frame, to obtain a reconstructed image of the current frame, wherein the first intermediate rendering result generated by the second rendering module acts on at least one type of the following processing in the reconstruction process: prediction or filtering.

2. A device-cloud collaboration system, wherein the device-cloud collaboration system comprises a server and a terminal device, the server comprises a first rendering module, an encoder, and a first communication module, and the terminal device comprises a second communication module, a second rendering module, and a decoder;

   the first rendering module is configured to: perform rendering processing on a three-dimensional scene based on a rendering parameter, to obtain a rendered image, wherein the rendering parameter comprises a first rendering parameter obtained from the terminal device; and select a first intermediate rendering result based on an intermediate rendering result generated in the rendering processing process;

the encoder is configured to: encode the rendered image based on the first intermediate rendering result, to obtain encoded data of a residual block, and encode the encoded data of the residual block into a bitstream; and encode a second intermediate rendering result, and encode encoded data of the second intermediate rendering result into the bitstream, wherein the residual block is obtained by performing a residual operation on a to-be-encoded block in the rendered image and a corresponding predicted block, the predicted block is obtained by predicting the to-be-encoded block, the first intermediate rendering result acts on at least one type of the following processing in the encoding process: partitioning, prediction, or filtering, and the second intermediate rendering result is a part of the first intermediate rendering result;

the first communication module is configured to send the bitstream;

the second communication module is configured to receive the bitstream;

the decoder is configured to parse the bitstream, to obtain a parsing result, wherein the parsing result comprises a residual block corresponding to a current frame and a second intermediate rendering result corresponding to the current frame;

the second rendering module is configured to: perform rendering processing on the three-dimensional scene based on a rendering parameter corresponding to the current frame, and generate a third intermediate rendering result in the rendering processing process based on the second intermediate rendering result corresponding to the current frame, wherein the rendering parameter corresponding to the current frame comprises a first rendering parameter generated by the terminal device; and

the decoder is further configured to perform reconstruction based on the first intermediate rendering result and the residual block corresponding to the current frame, to obtain a reconstructed image of the current frame, wherein the first intermediate rendering result used to determine the reconstructed image of the current frame comprises the second intermediate rendering result corresponding to the current frame and the third intermediate rendering result, and the first intermediate rendering result used to determine the reconstructed image of the current frame acts on at least one type of the following processing in the reconstruction process: prediction or filtering.

3. An encoding method, applied to a server, wherein the method comprises:

performing rendering processing on a three-dimensional scene based on a rendering parameter, to obtain a rendered image, wherein the rendering parameter comprises a first rendering parameter obtained from a terminal device;

selecting a first intermediate rendering result based on an intermediate rendering result generated in the rendering processing process; and

encoding the rendered image based on the first intermediate rendering result, to obtain encoded data of a residual block, and encode the encoded data of the residual block into a bitstream, wherein

the residual block is obtained by performing a residual operation on a to-be-encoded block in the rendered image and a corresponding predicted block, the predicted block is obtained by predicting the to-be-encoded block, the first intermediate rendering result acts on at least one type of the following processing in the encoding process: partitioning, prediction, or filtering, the bitstream does not comprise encoded data of the first intermediate rendering result or the bitstream further comprises encoded data of a second intermediate rendering result, and the second intermediate rendering result is a part of the first intermediate rendering result.

4. The method according to claim 3, wherein the bitstream further comprises a first indication identifier and/or a second indication identifier;

the first indication identifier indicates whether the bitstream comprises the encoded data of the second intermediate rendering result or whether the bitstream comprises the encoded data of the first intermediate rendering result; and

the second indication identifier indicates a type and a subtype of the second intermediate rendering result, or indicates a type of the first intermediate rendering result.

5. The method according to claim 3 or 4, wherein the rendering parameter further comprises a second rendering parameter generated by the server, and the method further comprises:
encoding a third rendering parameter into the bitstream, wherein the third rendering parameter comprises all or a part of parameters in the second rendering parameter.

6. The method according to any one of claims 3 to 5, wherein the rendering parameter further comprises the second rendering parameter generated by the server, and the bitstream further comprises a third indication identifier and/or a fourth indication identifier;

the third indication identifier indicates whether the bitstream comprises the third rendering parameter, and the third rendering parameter comprises all or a part of parameters in the second rendering parameter; and
the fourth indication identifier indicates a type of the third rendering parameter.

7.  The method according to any one of claims 3 to 6, wherein the first intermediate rendering result acts on partitioning in the encoding process, the to-be-encoded block is a prediction unit, and encoding the rendered image based on the first intermediate rendering result, to obtain the encoded data of the residual block comprises:

partitioning the rendered image based on the first intermediate rendering result, to obtain a plurality of prediction units;
predicting the plurality of prediction units based on a reconstructed block, to obtain a plurality of predicted blocks, wherein the plurality of predicted blocks are in a one-to-one correspondence with the plurality of prediction units; and
encoding a plurality of residual blocks between the plurality of predicted blocks and the plurality of prediction units, to obtain encoded data of the plurality of residual blocks, wherein the plurality of residual blocks are in a one-to-one correspondence with the plurality of prediction units.

8.  The method according to any one of claims 3 to 6, wherein the first intermediate rendering result acts on prediction in the encoding process, and encoding the rendered image based on the first intermediate rendering result, to obtain the encoded data of the residual block comprises:

predicting the to-be-encoded block in the rendered image based on a reconstructed block and the first intermediate rendering result, to obtain the predicted block corresponding to the to-be-encoded block; and
encoding the residual block between the to-be-encoded block and the predicted block corresponding to the to-be-encoded block, to obtain the encoded data of the residual block.

9.  The method according to any one of claims 3 to 6, wherein the first intermediate rendering result acts on filtering in the encoding process, and encoding the rendered image based on the first intermediate rendering result, to obtain the encoded data of the residual block comprises:

predicting the to-be-encoded block in the rendered image based on a reconstructed block, to obtain the predicted block corresponding to the to-be-encoded block, wherein the reconstructed block is a reconstructed block obtained through filtering based on the first intermediate rendering result; and
encoding the residual block between the to-be-encoded block and the predicted block corresponding to the to-be-encoded block, to obtain the encoded data of the residual block.

10. The method according to claim 7, wherein the first intermediate rendering result further acts on prediction in the encoding process, and predicting the plurality of prediction units based on the reconstructed block, to obtain the plurality of predicted blocks comprises:
predicting the plurality of prediction units based on the reconstructed block and the first intermediate rendering result, to obtain the plurality of predicted blocks.

11. The method according to claim 7, 8, or 10, wherein the first intermediate rendering result further acts on filtering in the encoding process, and the reconstructed block is a reconstructed block obtained through filtering based on the first intermediate rendering result.

12. The method according to claim 7, wherein the first intermediate rendering result is depth information, and partitioning the rendered image based on the first intermediate rendering result, to obtain the plurality of prediction units comprises:

partitioning the rendered image into a plurality of coding units;
generating computer graphics edge CGE information based on the depth information, wherein the CGE information comprises object edge information of an object in the rendered image; and
partitioning each of the plurality of coding units based on the CGE information, to obtain the plurality of prediction units.

13. The method according to claim 8, wherein the first intermediate rendering result is a computer graphics motion vector CGMV, and the CGMV is used to describe a displacement relationship between a sample in the rendered image and a sample in a reference frame of the rendered image; and
predicting the to-be-encoded block in the rendered image based on the reconstructed block and the first intermediate rendering result, to obtain the predicted block corresponding to the to-be-encoded block comprises:

determining, from the reference frame of the rendered image, a reconstructed block matching the to-be-encoded block; and
generating the predicted block based on the CGMV and the reconstructed block matching the to-be-encoded block.

14. The method according to claim 9 or 11, wherein the first intermediate rendering result is a render identifier render ID, and the render ID is used to describe an object to which a sample in the reconstructed block belongs, and the method further comprises:

determining a filtering parameter based on the render ID; and
filtering the reconstructed block based on the filtering parameter.

15. The method according to claim 12, wherein
the CGE information is encoded, and encoded data of the CGE information is encoded into the bitstream.

16. A decoding method, applied to a terminal device, wherein the method comprises:

receiving a bitstream;
parsing the bitstream, to obtain a parsing result, wherein the parsing result comprises a residual block corresponding to a current frame;
performing rendering processing on a three-dimensional scene based on a rendering parameter corresponding to the current frame, and generating a first intermediate rendering result in the rendering processing process, wherein the rendering parameter comprises a first rendering parameter generated by the terminal device; and
performing reconstruction based on the first intermediate rendering result and the residual block, to obtain a reconstructed image of the current frame, wherein the first intermediate rendering result acts on at least one type of the following processing in the reconstruction process: prediction or filtering.

17. The method according to claim 16, wherein

the parsing result further comprises a first indication identifier and a second indication identifier, the first indication identifier indicates whether the bitstream comprises encoded data of a first intermediate rendering result generated by a server, and the second indication identifier indicates a type of the first intermediate rendering result generated by the server; and
generating the first intermediate rendering result in the rendering processing process comprises:
generating the first intermediate rendering result in the rendering processing process based on the second indication identifier when it is determined, based on the first indication identifier, that the bitstream does not comprise the encoded data of the first intermediate rendering result generated by the server.

18. The method according to claim 16 or 17, wherein

the parsing result further comprises a third indication identifier and a fourth indication identifier, the third indication identifier indicates whether the bitstream comprises a third rendering parameter, and the fourth indication identifier indicates a type of the third rendering parameter; and
the method further comprises:

determining the type of the third rendering parameter based on the fourth indication identifier when it is determined, based on the third indication identifier, that the bitstream comprises the third rendering parameter; and
generating a fourth rendering parameter of another type based on the type of the third rendering parameter, wherein the another type is a type other than the type of the third rendering parameter in a plurality of types corresponding to a second rendering parameter generated by the server, wherein
the rendering parameter further comprises the third rendering parameter and the fourth rendering parameter.

**19.** The method according to claim 18, wherein the method further comprises:

when it is determined, based on the third indication identifier, that the bitstream does not comprise the third rendering parameter, generating, by the terminal device, a second rendering parameter corresponding to the current frame, wherein
the rendering parameter further comprises a second rendering parameter generated by the terminal device.

**20.** The method according to any one of claims 16 to 19, wherein there are a plurality of residual blocks, the first intermediate rendering result acts on prediction in the reconstruction process, and performing reconstruction based on the first intermediate rendering result and the residual block, to obtain the reconstructed image of the current frame comprises:

determining partitioning information of the current frame based on the first intermediate rendering result;
predicting, based on the partitioning information and a reconstructed block, a plurality of prediction units comprised in the current frame, to obtain a plurality of predicted blocks, wherein the plurality of predicted blocks are in a one-to-one correspondence with the plurality of prediction units, and the plurality of residual blocks are in a one-to-one correspondence with the plurality of prediction units; and
determining the reconstructed image of the current frame based on the plurality of residual blocks and the plurality of predicted blocks.

**21.** The method according to any one of claims 16 to 19, wherein the first intermediate rendering result acts on prediction in the reconstruction process, and performing reconstruction based on the first intermediate rendering result and the residual block, to obtain the reconstructed image of the current frame comprises:

predicting a to-be-decoded block in the current frame based on the first intermediate rendering result and a reconstructed block, to obtain a predicted block corresponding to the to-be-decoded block; and
determining the reconstructed image of the current frame based on a residual block corresponding to the to-be-decoded block in the residual block corresponding to the current frame and the predicted block corresponding to the to-be-decoded block.

**22.** The method according to any one of claims 16 to 19, wherein the first intermediate rendering result acts on filtering in the reconstruction process, and performing reconstruction based on the first intermediate rendering result and the residual block, to obtain the reconstructed image of the current frame comprises:

predicting a to-be-decoded block in the current frame based on a reconstructed block, to obtain a predicted block corresponding to the to-be-decoded block, wherein the reconstructed block is a reconstructed block obtained through filtering based on the first intermediate rendering result; and
determining the reconstructed image of the current frame based on a residual block corresponding to the to-be-decoded block in the residual block corresponding to the current frame and the predicted block corresponding to the to-be-decoded block.

**23.** The method according to claim 21, wherein predicting, based on the partitioning information and a reconstructed block, a plurality of prediction units comprised in the current frame, to obtain a plurality of predicted blocks comprises:
predicting, based on the partitioning information, the first intermediate rendering result, and the reconstructed block, the plurality of prediction units comprised in the current frame, to obtain the plurality of predicted blocks.

**24.** The method according to claim 20, 21, or 23, wherein the first intermediate rendering result further acts on filtering in the reconstruction process, and the reconstructed block is a reconstructed block obtained through filtering based on the first intermediate rendering result.

**25.** The method according to claim 20 or 23, wherein the first intermediate rendering result is depth information, and determining the partitioning information of the current frame based on the first intermediate rendering result comprises:

generating computer graphics edge CGE information based on the depth information, wherein the CGE information comprises object edge information of an object in the current frame; and
determining the partitioning information of the current frame based on the CGE information.

26. The method according to claim 21, wherein the first intermediate rendering result is a computer graphics motion vector CGMV, and the CGMV is used to describe a displacement relationship between a sample of the current frame and a sample of a reference frame of the current frame; and
predicting the to-be-decoded block in the current frame based on the first intermediate rendering result and the reconstructed block, to obtain the predicted block corresponding to the to-be-decoded block comprises:

determining, from the reference frame of the current frame, a reconstructed block matching the to-be-decoded block; and
generating the predicted block corresponding to the to-be-decoded block based on the CGMV and the reconstructed block matching the to-be-decoded block.

27. The method according to claim 22 or 24, wherein the first intermediate rendering result is a render identifier render ID, and the render ID is used to describe an object to which a sample in the reconstructed block belongs, and the method further comprises:

determining a filtering parameter based on the render ID; and
filtering the reconstructed block based on the filtering parameter.

28. The method according to any one of claims 16 to 19, wherein there are a plurality of residual blocks, the first intermediate rendering result acts on prediction in the reconstruction process, the decoding result further comprises CGE information, and the CGE information comprises object edge information of an object in the current frame; and
performing reconstruction based on the first intermediate rendering result and the residual block, to obtain the reconstructed image of the current frame comprises:

determining partitioning information of the current frame based on the CGE information;
predicting, based on the partitioning information and a reconstructed block, a plurality of prediction units comprised in the current frame, to obtain a plurality of predicted blocks, wherein the plurality of predicted blocks are in a one-to-one correspondence with the plurality of prediction units, and the plurality of residual blocks are in a one-to-one correspondence with the plurality of prediction units; and
determining the reconstructed image of the current frame based on the plurality of residual blocks and the plurality of predicted blocks.

29. A decoding method, wherein the method is applied to a terminal device, and the method comprises:

receiving a bitstream;
parsing the bitstream, to obtain a parsing result, wherein the parsing result comprises a residual block corresponding to a current frame and a second intermediate rendering result corresponding to the current frame;
performing rendering processing on a three-dimensional scene based on a rendering parameter corresponding to the current frame, and generating a third intermediate rendering result based on the second intermediate rendering result in the rendering processing process, wherein the rendering parameter comprises a first rendering parameter generated by the terminal device; and
performing reconstruction based on a first intermediate rendering result and the residual block, to obtain a reconstructed image of the current frame, wherein the first intermediate rendering result comprises the second intermediate rendering result and the third intermediate rendering result, and the first intermediate rendering result acts on at least one type of the following processing in the reconstruction process: prediction or filtering.

30. The method according to claim 29, wherein the decoding result further comprises a second indication identifier, and the second indication identifier indicates a type and a subtype of the second intermediate rendering result; and
generating the third intermediate rendering result based on the second intermediate rendering result in the rendering processing process comprises:

determining the type and the subtype corresponding to the second intermediate rendering result based on the second indication identifier; and
generating a third intermediate rendering result of another subtype based on the type and the subtype corresponding to the second intermediate rendering result in the rendering processing process, wherein the another subtype is a subtype in subtypes comprised in the type corresponding to the second intermediate rendering result other than the subtype corresponding to the second intermediate rendering result.

**31.** The method according to claim 29 or 30, wherein

the parsing result further comprises a third indication identifier and a fourth indication identifier, the third indication identifier indicates whether the bitstream comprises a third rendering parameter, and the fourth indication identifier indicates a type of the third rendering parameter; and
the method further comprises:

determining the type of the third rendering parameter based on the fourth indication identifier when it is determined, based on the third indication identifier, that the bitstream comprises the third rendering parameter; and
generating a fourth rendering parameter of another type based on the type of the third rendering parameter, wherein the another type is a type other than the type of the third rendering parameter in a plurality of types corresponding to a second rendering parameter generated by a server, wherein
the rendering parameter further comprises the third rendering parameter and the fourth rendering parameter.

**32.** The method according to claim 31, wherein the method further comprises:

when it is determined, based on the third indication identifier, that the bitstream does not comprise the third rendering parameter, generating, by the terminal device, a second rendering parameter corresponding to the current frame, wherein
the rendering parameter further comprises a second rendering parameter generated by the terminal device.

**33.** The method according to any one of claims 29 to 32, wherein there are a plurality of residual blocks, the first intermediate rendering result acts on prediction in the reconstruction process, and performing reconstruction based on the first intermediate rendering result and the residual block, to obtain the reconstructed image of the current frame comprises:

determining partitioning information of the current frame based on the first intermediate rendering result;
predicting, based on the partitioning information and a reconstructed block, a plurality of prediction units comprised in the current frame, to obtain a plurality of predicted blocks, wherein the plurality of predicted blocks are in a one-to-one correspondence with the plurality of prediction units, and the plurality of residual blocks are in a one-to-one correspondence with the plurality of prediction units; and
determining the reconstructed image of the current frame based on the plurality of residual blocks and the plurality of predicted blocks.

**34.** The method according to any one of claims 29 to 32, wherein the first intermediate rendering result acts on prediction in the reconstruction process, and performing reconstruction based on the first intermediate rendering result and the residual block, to obtain the reconstructed image of the current frame comprises:

predicting a to-be-decoded block in the current frame based on the first intermediate rendering result and a reconstructed block, to obtain a predicted block corresponding to the to-be-decoded block; and
determining the reconstructed image of the current frame based on a residual block corresponding to the to-be-decoded block in the residual block corresponding to the current frame and the predicted block corresponding to the to-be-decoded block.

**35.** The method according to any one of claims 29 to 32, wherein the first intermediate rendering result acts on filtering in the reconstruction process, and performing reconstruction based on the first intermediate rendering result and the residual block, to obtain the reconstructed image of the current frame comprises:

predicting a to-be-decoded block in the current frame based on a reconstructed block, to obtain a predicted block corresponding to the to-be-decoded block, wherein the reconstructed block is a reconstructed block obtained through filtering based on the first intermediate rendering result; and
determining the reconstructed image of the current frame based on a residual block corresponding to the to-be-decoded block in the residual block corresponding to the current frame and the predicted block corresponding to the to-be-decoded block.

**36.** The method according to claim 33, wherein predicting, based on the partitioning information and a reconstructed block, a plurality of prediction units comprised in the current frame, to obtain a plurality of predicted blocks comprises:

predicting, based on the partitioning information, the first intermediate rendering result, and the reconstructed block, the plurality of prediction units comprised in the current frame, to obtain the plurality of predicted blocks.

37. The method according to claim 33, 34, or 36, wherein the first intermediate rendering result further acts on filtering in the reconstruction process, and the reconstructed block is a reconstructed block obtained through filtering based on the first intermediate rendering result.

38. The method according to claim 33 or 36, wherein the first intermediate rendering result is depth information, and determining the partitioning information of the current frame based on the first intermediate rendering result comprises:

generating computer graphics edge CGE information based on the depth information, wherein the CGE information comprises object edge information of an object in the current frame; and
determining the partitioning information of the current frame based on the CGE information.

39. The method according to claim 34, wherein the first intermediate rendering result is a computer graphics motion vector CGMV, and the CGMV is used to describe a displacement relationship between a sample of the current frame and a sample of a reference frame of the current frame; and
predicting the to-be-decoded block in the current frame based on the first intermediate rendering result and the reconstructed block, to obtain the predicted block corresponding to the to-be-decoded block comprises:

determining, from the reference frame of the current frame, a reconstructed block matching the to-be-decoded block; and
generating the predicted block corresponding to the to-be-decoded block based on the CGMV and the reconstructed block matching the to-be-decoded block.

40. The method according to claim 35 or 37, wherein the first intermediate rendering result is a render identifier render ID, and the render ID is used to describe an object to which a sample in the reconstructed block belongs, and the method further comprises:

determining a filtering parameter based on the render ID; and
filtering the reconstructed block based on the filtering parameter.

41. The method according to any one of claims 29 to 32, wherein there are a plurality of residual blocks, the first intermediate rendering result acts on prediction in the reconstruction process, the decoding result further comprises CGE information, and the CGE information comprises object edge information of an object in the current frame; and performing reconstruction based on the first intermediate rendering result and the residual block, to obtain the reconstructed image of the current frame comprises:

determining partitioning information of the current frame based on the CGE information;
predicting, based on the partitioning information and a reconstructed block, a plurality of prediction units comprised in the current frame, to obtain a plurality of predicted blocks, wherein the plurality of predicted blocks are in a one-to-one correspondence with the plurality of prediction units, and the plurality of residual blocks are in a one-to-one correspondence with the plurality of prediction units; and
determining the reconstructed image of the current frame based on the plurality of residual blocks and the plurality of predicted blocks.

42. An electronic device, comprising:

a storage and a processor, wherein the storage is coupled to the processor, wherein
the storage stores program instructions, and when the program instructions are executed by the processor, the electronic device is enabled to perform the method according to any one of claims 3 to 41.

43. A computer-readable storage medium, wherein the computer-readable storage medium stores a computer program, and when the computer program is run on a computer or a processor, the computer or the processor is enabled to perform the method according to any one of claims 3 to 41.

44. A computer program product, wherein the computer program product comprises a software program, and when the software program is executed by a computer or a processor, the steps of the method according to any one of claims 3 to 41 are performed.

FIG. 1a

FIG. 1b

FIG. 2

FIG. 3

FIG. 4

FIG. 5

FIG. 6a

FIG. 6b

FIG. 7

FIG. 8a

(1)              (2)

FIG. 8b

FIG. 9

FIG. 10a

EP 4 637 163 A1

FIG. 10b

FIG. 11

EP 4 637 163 A1

Terminal device

First rendering parameter

Server

S1205

S1204

S1203

S1201

Encoding

First intermediate
rendering result

Intermediate
result selection

First
rendering
parameter

Rendering

Rendering
parameter
obtaining

Bitstream

Intermediate
rendering
result

Second
rendering
parameter

Rendering
parameter
generation

S1206

Rendered image

S1202

Encoding

Third rendering parameter

FIG. 12

Server

Bitstream

Terminal device

S1301
Bitstream
receiving

Bitstream

S1302
Parsing

Third rendering parameter

Residual block

First intermediate
rendering result

Reconstruction

Rendering

First rendering
parameter and
fourth rendering
parameter

Parameter
generation

Reconstructed
image

S1305

S1304

S1303

FIG. 13

S1406 (S1407)  Third rendering parameter

Second intermediate
rendering result

Encoding

S1405

S1404

S1403

Second
rendering
parameter

S1402

Rendering
parameter
generation

Bitstream

Encoding

First
intermediate
rendering result

Intermediate
result
selection

Intermediate
rendering
result

Rendering

First
rendering
parameter

Rendering
parameter
obtaining

Rendered image

S1401

First rendering parameter

Terminal device

FIG. 14

EP 4 637 163 A1

FIG. 15

FIG. 16a

FIG. 16b

(1)                      (2)                      (3)

FIG. 16c

(1)

(2)

(3)

(4)

FIG. 16d

CU 1

(1)

R2

(2)

PU 2

PU 1

(3)

FIG. 16e

Bitstream → Entropy decoding module → Dequantization module → Inverse transform module

Decoded residual block

Reconstructed block

Predicted block

Intra prediction module ← Depth information

Inter prediction module ← Depth information

Loop filtering module

Reconstructed block obtained through filtering

Storage

Reference frame

Reconstructed video

Decoding module

FIG. 17a

Depth
information

Reconstructed
block

Residual
block

S1701

S1702

S1703

Partitioning
information
determining

Partitioning
information

Prediction

Predicted block

Reconstruction

Reconstructed
image

FIG. 17b

FIG. 18a

FIG. 18b

FIG. 18c

Bitstream → Entropy decoding module → Dequantization module → Inverse transform module

Decoded residual block

Reconstructed block

Predicted block

Loop filtering module

Intra prediction module

Second inter prediction module

First inter prediction module ← CGMV

Reconstructed block obtained through filtering

Storage

Reference frame

Reconstructed video

Decoding module

FIG. 19a

Reconstructed block        Residual block

S1901        S1902

CGMV → | Prediction | → Predicted block → | Reconstruction | → Reconstructed image

**FIG. 19b**

FIG. 20a

Render ID

Rendered image

S2002

```
┌──────────────┐  Filtering   ┌──────────┐    Filtered        ┌────────────┐  Predicted  ┌──────────┐
│  Parameter   │  parameter   │          │ reconstructed block│            │   block     │          │
│ determining  │─────────────▶│ Filtering│───────────────────▶│ Prediction │────────────▶│ Encoding │
└──────────────┘              └──────────┘                    └────────────┘             └──────────┘
```

S2001

Reconstructed
block

S2003

S2004

FIG. 20b

FIG. 21a

Render ID

S2102

Residual block

```
                                Reconstructed block
                                obtained through      Predicted
           Filtering            filtering             block
           parameter
┌──────────────┐     ┌──────────┐          ┌────────────┐          ┌──────────────────┐
│  Parameter   │ ──▶ │ Filtering│ ──────▶  │ Prediction │ ──────▶  │  Reconstruction  │
│ determining  │     │          │          │            │          │                  │
└──────────────┘     └──────────┘          └────────────┘          └──────────────────┘
```

Reconstructed block

S2101

S2103

S2104

FIG. 21b

FIG. 22

## INTERNATIONAL SEARCH REPORT

| International application No. |
| --- |
| **PCT/CN2023/141965** |

### A. CLASSIFICATION OF SUBJECT MATTER

H04N 21/44(2011.01)i

According to International Patent Classification (IPC) or to both national classification and IPC

### B. FIELDS SEARCHED

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNABS, CNTXT, VEN, WOTXT, USTXT, EPTXT, CJFD, JVET, IEEE: 编码, 解码, 译码, 渲染, 中间, 结果, 数据, 运动矢量, 运动向量, 深度, 滤波, 残差, 预测, 重建, 重构, code, decode, encode, render, intermediate, result, data, CGMV, motion vector, MV, depth, residual, predict, filter, reconstruct

### C. DOCUMENTS CONSIDERED TO BE RELEVANT

| Category* | Citation of document, with indication, where appropriate, of the relevant passages | Relevant to claim No. |
| --- | --- | --- |
| Y | CN 114946179 A (LG ELECTRONICS INC.) 26 August 2022 (2022-08-26) description, paragraphs [0307]-[0979], and figures 17-37 | 16, 20-24, 42-44 |
| Y | CN 114765689 A (HUAWEI CLOUD COMPUTING TECHNOLOGY CO., LTD.) 19 July 2022 (2022-07-19) description, paragraphs [0238]-[0243], and figures 12-13 | 16, 20-24, 42-44 |
| A | CN 113273211 A (PCMS HOLDINGS INC.) 17 August 2021 (2021-08-17) entire document | 1-44 |
| A | CN 113630621 A (TENCENT TECHNOLOGY (SHENZHEN) CO., LTD.) 09 November 2021 (2021-11-09) entire document | 1-44 |
| A | CN 112565884 A (BEIJING DAJIA INTERNET INFORMATION TECHNOLOGY CO., LTD.) 26 March 2021 (2021-03-26) entire document | 1-44 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **31 March 2024** | **01 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/141965**

### C.    DOCUMENTS CONSIDERED TO BE RELEVANT

| Category* | Citation of document, with indication, where appropriate, of the relevant passages | Relevant to claim No. |
|---|---|---|
| A | CN 113965760 A (XI'AN VANXVM ELECTRONICS TECHNOLOGY CO., LTD.) 21 January 2022 (2022-01-21) <br> entire document | 1-44 |
| A | US 2015092856 A1 (ATI TECHNOLOGIES ULC; ADVANCED MICRO DEVICES INC.) 02 April 2015 (2015-04-02) <br> entire document | 1-44 |

Form PCT/ISA/210 (second sheet) (July 2022)

## INTERNATIONAL SEARCH REPORT
### Information on patent family members

International application No.

**PCT/CN2023/141965**

| Patent document cited in search report | | | Publication date (day/month/year) | Patent family member(s) | | | Publication date (day/month/year) |
|---|---|---|---|---|---|---|---|
| CN | 114946179 | A | 26 August 2022 | US | 2021218947 | A1 | 15 July 2021 |
| | | | | US | 11606547 | B2 | 14 March 2023 |
| | | | | EP | 4072132 | A1 | 12 October 2022 |
| | | | | EP | 4072132 | A4 | 18 January 2023 |
| | | | | EP | 4072132 | B1 | 06 March 2024 |
| | | | | WO | 2021141258 | A1 | 15 July 2021 |
| | | | | JP | 2023509190 | A | 07 March 2023 |
| | | | | JP | 7434574 | B2 | 20 February 2024 |
| | | | | BR | 112022013595 | A2 | 13 September 2022 |
| | | | | KR | 20210090089 | A | 19 July 2021 |
| | | | | KR | 102373833 | B1 | 14 March 2022 |
| CN | 114765689 | A | 19 July 2022 | None | | | |
| CN | 113273211 | A | 17 August 2021 | US | 2022005232 | A1 | 06 January 2022 |
| | | | | EP | 3895431 | A1 | 20 October 2021 |
| | | | | WO | 2020123686 | A1 | 18 June 2020 |
| CN | 113630621 | A | 09 November 2021 | None | | | |
| CN | 112565884 | A | 26 March 2021 | None | | | |
| CN | 113965760 | A | 21 January 2022 | None | | | |
| US | 2015092856 | A1 | 02 April 2015 | US | 10491916 | B2 | 26 November 2019 |
| | | | | US | 2020068213 | A1 | 27 February 2020 |
| | | | | US | 11252430 | B2 | 15 February 2022 |

Form PCT/ISA/210 (patent family annex) (July 2022)

**REFERENCES CITED IN THE DESCRIPTION**

**Patent documents cited in the description**

- CN 202211708155